(19) **Europäisches Patentamt**
**European Patent Office**
**Office européen des brevets**

(11) **EP 4 395 208 A1**

(12) **EUROPEAN PATENT APPLICATION**
published in accordance with Art. 153(4) EPC

(43) Date of publication:
**03.07.2024 Bulletin 2024/27**

(21) Application number: **22872073.6**

(22) Date of filing: **22.09.2022**

(51) International Patent Classification (IPC):
**H04L 1/00** $^{(2006.01)}$

(52) Cooperative Patent Classification (CPC):
**H04L 1/00; H04L 5/00**

(86) International application number:
**PCT/CN2022/120624**

(87) International publication number:
**WO 2023/046029 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2021 CN 202111132039**

(71) Applicant: **Huawei Technologies Co., Ltd.**
**Shenzhen, Guangdong 518129 (CN)**

(72) Inventors:
• **TAN, Zhiyuan**
**Shenzhen, Guangdong 518129 (CN)**
• **DONG, Pengpeng**
**Shenzhen, Guangdong 518129 (CN)**
• **ZHU, Huiying**
**Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **DATA TRANSMISSION METHOD AND APPARATUS, AND READABLE STORAGE MEDIUM**

(57)     This application may be applied to a protocol framework, for example, LTE or NR, and relates to the field of mobile communication, and in particular, to a data transmission method and apparatus, and a readable storage medium. The method includes: presetting a quantity of second MAC PDUs used for coding or presetting a total amount of original data used for coding, next, calculating a quantity of coded packets based on a preset code rate, and subsequently forming, in a specific rule sequence, a first MAC PDU by using an original data packet and the coded packets generated by using the original data, and then using a TB to carry the first MAC PDU for transmission. According to embodiments of this application, a network coding technology can be applied to a MAC layer, to effectively use a correct data packet on a TB that is transmitted incorrectly, and restore original data that is transmitted incorrectly, so as to improve performance of an ultra-reliable and low-latency service, reduce retransmission latency, and improve transmission reliability. This application can be applied to an XR service and a low-latency service.

FIG. 5

## Description

This application claims priority to Chinese Patent Application No. 202111132039.5, filed with the China National intellectual Property Administration on September 26, 2021 and entitled "DATA TRANSMISSION METHOD AND APPARATUS, AND READABLE STORAGE MEDIUM", which is incorporated herein by reference in its entirety.

## TECHNICAL FIELD

This application relates to the field of communication technologies, and in particular, to a data transmission method and apparatus, and a readable storage medium.

## BACKGROUND

In an existing low-latency and high-rate scenario, a feedback retransmission mechanism may not be ensured due to a low-latency requirement, and an incorrect transport block (transport block, TB) is directly discarded. This causes a great loss of system performance. In this case, how to use correct data packet information in the incorrect transport block to improve performance of an ultra-reliable and low-latency service is an important issue. A transport block includes a medium access control (medium access control, MAC) protocol data unit (protocol data unit, PDU). As an important candidate technology, a network coding technology may be used to obtain a coded data packet (briefly referred to as a coded packet) by coding several pieces of original data in a same size, and restore the original data by decoding the coded data packet. In other words, the coded packet includes information about the several pieces of original data, and therefore may be used to restore any related original data. This technology is a method that can effectively improve transmission performance of a wireless communication system.

In an existing new radio access technology (new radio access technology, NR)/5G, it is considered that a network coding technology is applied to one layer or between two layers of a layer 2 (including a packet data convergence protocol (packet data convergence protocol, PDCP) layer, a radio link control (radio link control, RLC) layer, and a MAC layer). When a TB at the MAC layer is transmitted incorrectly, actually, only an individual data packet on the incorrect TB has a bit error, and most data packets can still be correct. How to apply the network coding technology to the MAC layer to effectively use correct data packet on the TB that is transmitted incorrectly becomes an important difficulty in future application.

## SUMMARY

Embodiments of this application provide a data transmission method and apparatus, and a readable storage medium, so that a network coding technology can be applied to a MAC layer, to effectively use a correct data packet on a TB that is transmitted incorrectly, and restore original data that is transmitted incorrectly, so as to improve performance of an ultra-reliable and low-latency service, reduce retransmission latency, and improve transmission reliability.

The following describes this application from different aspects. It should be understood that the following implementations and beneficial effects of the different aspects may be mutually referenced.

According to a first aspect, this application provides a data transmission method. The method includes: A first device generates P first MAC PDUs, then carries the P first MAC PDUs on P TBs, and transmits the P transport blocks that carry the P first MAC PDUs, where one first MAC PDU is carried on one TB. The P first MAC PDUs include K first data packets and Q second data packets, and the K first data packets and the Q second data packets are arranged according to a preset rule. The first data packet herein is an original data packet. Specifically, for a definition of the original data packet, refer to the following description. Details are not described herein again. The second data packet is a coded packet, for example, a redundant packet. Each original data packet includes one original data packet header or one coded packet header, and each coded packet (or redundant packet) includes one coded packet header. Herein, a size of the original data packet header may be equal to a size of the coded packet header.

The preset rule indicates locations of the original data packet and the coded packet (or the redundant packet) in the P first MAC PDUs. Optionally, the preset rule may be autonomously negotiated by a receive end and a transmit end, or may be preset, or may be determined in another manner, so that both a receive end and a transmit end know the preset rule. In other words, the locations of the original data packet and the coded packet (or the redundant packet) in the P first MAC PDUs may be inferred/deduced according to the preset rule.

Presetting in this application may be understood as setting, pre-setting, predefining, storing, pre-storing, pre-negotiating, preconfiguring, solidifying, or pre-burning.

Each of the P first MAC PDUs includes an integer quantity of data packets, and sizes of other data packets than the last data packet in each first MAC PDU are equal. The sizes of the other data packets than the last data packet included in each of the P first MAC PDUs are all equal to a preset data packet size (L), and a size of the last data packet is less than or equal to the preset data packet size (L).

The K first data packets are obtained by separately adding headers (namely, original data packet headers or the coded packet headers) to K pieces of original data. The K pieces of original data are obtained by separately performing a segmentation operation on P second MAC PDUs. The segmentation operation herein may be performing equal-size segmentation on each second MAC PDU. It should be understood that a size of the second MAC PDU may not be an integer multiple of a segmentation size. Therefore, a size of remaining original data obtained after equal-size segmentation is performed on the second MAC PDU may be less than the segmentation size. To be specific, a size of the last piece of original data that is obtained after the second MAC PDU is segmented may be less than the segmentation size.

N first data packets in the K first data packets are obtained by separately adding headers (namely, original data packet headers or coded packet headers) to N pieces of original data in the K pieces of original data. M second data packets in the Q second data packets are generated by performing a network coding operation on the N pieces of original data. The network coding operation includes at least network coding and coded packet header adding, and may further include a padding operation or another operation. Details are not described herein.

P, K, Q, N, and M each are a positive integer, K is greater than or equal to N, and Q is greater than or equal to M.

In an implementation, if K is equal to N, and Q is equal to M, the P first MAC PDUs include the N first data packets and the M second data packets in total. The N first data packets are obtained by separately adding the headers (namely, the original data packet headers or the coded packet headers) to the N pieces of original data, and the M second data packets are generated by performing the network coding operation on the N pieces of original data. The N pieces of original data are obtained by separately performing the segmentation operation on the P second MAC PDUs. The N pieces of original data are in one network coding group or one network coding window, and network coding may be performed on the network coding group or the network coding window (namely, the N pieces of original data) to obtain coded data (namely, coded data separately included in the M second data packets) corresponding to the network coding group.

In another implementation, if K is not equal to N (that is, K is greater than N), or Q is not equal to M (that is, Q is greater than M), the K first data packets are obtained by separately adding the headers (namely, the original data packet headers or the coded packet headers) to the K pieces of original data. The N first data packets in the K first data packets are obtained by separately adding the headers (namely, the original data packet headers or the coded packet headers) to the N pieces of original data in the K pieces of original data. The M second data packets in the Q second data packets are generated by performing the network coding operation on the N pieces of original data. In other words, a data part of at least one of the Q second data packets and a data part of at least one of the K first data packets satisfy a network coding relationship. Alternatively, all or some of the Q second data packets are obtained by performing the network coding operation on a data part of all or some of the K first data packets. The K pieces of original data are obtained by separately performing the segmentation operation on the P second MAC PDUs. The N pieces of original data are in the network coding group or the network coding window, and remaining K-N (which may be possibly 0) pieces of original data in the K pieces of original data belong to another network coding group or another network coding window. In other words, data packets included in the P first MAC PDUs may form two different network coding groups or network coding windows.

The second MAC PDU is a MAC PDU generated by using data (namely, an RLC PDU) transmitted from an RLC layer to a MAC layer. In other words, the second MAC PDU is generated/obtained by adding MAC layer additional information to the data transmitted from the RLC layer to the MAC layer. It should be understood that, for a meaning of the "network coding group", refer to descriptions in the following embodiments. Details are not described herein.

It can be learned that, in this solution, each first MAC PDU is restricted to including the integer quantity of data packets and the sizes of the other data packets than the last data packet are restricted to being equal, and arrangement rankings (locations) of the original data packet and the coded packet in one or more first MAC PDUs are further restricted, to imply location information of the data packet. In this way, a location and a boundary of each data packet on the TB can be identified at a MAC layer of a receive end/decoding end, so that original data that is transmitted incorrectly can be restored by using a correct data packet on a TB that is transmitted incorrectly, to apply a network coding technology to the MAC layer, improve performance of an ultra-reliable and low-latency service, reduce retransmission latency, and improve transmission reliability.

According to a second aspect, this application provides a data transmission apparatus. The data transmission apparatus may be a first device or a chip or a circuit in a first device. The data transmission apparatus includes: a generation module, configured to generate P first MAC PDUs, where K first data packets and Q second data packets that are included in the P first MAC PDUs are arranged according to a preset rule; and a transmission module, configured to transmit P transport blocks that carry the P first MAC PDUs, where one first MAC PDU is carried on one transport block. Herein, the first data packet is an original data packet, and the second data packet is a coded packet or a redundant packet. Each original data packet includes one original data packet header or one coded packet header, and each coded packet (or redundant packet) includes one coded packet header. Herein, a size of the original data packet header may be equal to a size of the coded packet header.

The preset rule indicates locations of the original data packet and the coded packet (or the redundant packet) in the P first MAC PDUs.

Each of the P first MAC PDUs includes an integer quantity of data packets, and sizes of other data packets than the last data packet in each first MAC PDU are equal.

The K first data packets are obtained by separately adding headers (namely, original data packet headers or the coded packet headers) to K pieces of original data. The K pieces of original data are obtained by separately performing a segmentation operation on P second MAC PDUs. N first data packets in the K first data packets are obtained by separately adding headers (namely, original data packet header or coded packet header) to N pieces of original data in the K pieces of original data. M second data packets in the Q second data packets are generated by performing a network coding operation on the N pieces of original data.

P, K, Q, N, and M each are a positive integer, K is greater than or equal to N, and Q is greater than or equal to M.

In an implementation, if K is equal to N, and Q is equal to M, the P first MAC PDUs include the N first data packets and the M second data packets in total. The N first data packets are obtained by separately adding the headers (namely, the original data packets header or the coded packet headers) to the N pieces of original data, and the M second data packets are generated by performing the network coding operation on the N pieces of original data. The N pieces of original data are obtained by separately performing the segmentation operation on the P second MAC PDUs.

In another implementation, if K is not equal to N (that is, K is greater than N), or Q is not equal to M (that is, Q is greater than M), the K first data packets are obtained by separately adding the headers (namely, the original data packet headers or the coded packet headers) to the K pieces of original data. The N first data packets in the K first data packets are obtained by separately adding the headers (namely, the original data packet headers or the coded packet headers) to the N pieces of original data in the K pieces of original data. The M second data packets in the Q second data packets are generated by performing the network coding operation on the N pieces of original data. The K pieces of original data are obtained by separately performing the segmentation operation on the P second MAC PDUs.

The second MAC PDU is a MAC PDU generated by using data (namely, an RLC PDU) transmitted from an RLC layer to a MAC layer. In other words, the second MAC PDU is generated/obtained by adding MAC layer additional information to the data transmitted from the RLC layer to the MAC layer.

According to a third aspect, this application provides a data receiving method. The method includes: A second device obtains P transport blocks, where the P transport blocks carry P first MAC PDUs; and then performs a decoding operation on the P transport blocks to obtain N pieces of original data, and merges the N pieces of original data to obtain one or more second MAC PDUs. One first MAC PDU is carried on one TB. The P first MAC PDUs include K first data packets and Q second data packets, and the K first data packets and the Q second data packets are arranged according to a preset rule. Herein, the first data packet is an original data packet, and the second data packet is a coded packet or a redundant packet. Each original data packet includes one original data packet header or one coded packet header, and each coded packet (or redundant packet) includes one coded packet header. Herein, a size of the original data packet header may be equal to a size of the coded packet header.

The preset rule indicates locations of the original data packet and the coded packet (or the redundant packet) in the P first MAC PDUs.

Each of the P first MAC PDUs includes an integer quantity of data packets, and sizes of other data packets than the last data packet in each first MAC PDU are equal.

The K first data packets are obtained by separately adding headers (namely, original data packet headers or coded packet headers) to K pieces of original data. The K pieces of original data are obtained by separately performing a segmentation operation on P second MAC PDUs. It should be understood that the foregoing process of merging the N pieces of original data is an inverse process of performing the segmentation operation on the P second MAC PDUs.

N first data packets in the K first data packets are obtained by separately adding headers (namely, original data packet headers or coded packet headers) to the N pieces of original data in the K pieces of original data. M second data packets in the Q second data packets are generated by performing a network coding operation on the N pieces of original data.

P, K, Q, N, and M each are a positive integer, K is greater than or equal to N, and Q is greater than or equal to M.

In an implementation, if K is equal to N, and Q is equal to M, the P first MAC PDUs include the N first data packets and the M second data packets in total. The N first data packets are obtained by separately adding the headers (namely, the original data packet headers or the coded packet headers) to the N pieces of original data, and the M second data packets are generated by performing the network coding operation on the N pieces of original data. The N pieces of original data are obtained by separately performing the segmentation operation on the P second MAC PDUs.

Correspondingly, with reference to the third aspect, in a possible implementation, the decoding operation of the second device includes: If there is a transport block with a cyclic redundancy check (cyclic redundancy check, CRC) error in the P transport blocks, a MAC layer of the second device determines a data packet with check success on the transport block with the CRC error based on a check result of CRC performed on a coding block (coding block, CB) in the transport block with the CRC error, a quantity of data packets included in the transport block with the CRC error, and a size of each data packet. Then, the MAC layer of the second device decodes a data packet with check success on the P transport blocks to obtain the N pieces of original data. Both CRC performed on the TB and CRC performed on the CB may be implemented at a physical (physical, PHY) layer of the second device. Specifically, after receiving the TB, the physical layer of the second device performs CRC on the TB, and perform CB CRC. If determining that CRC performed on the TB has an error, the PHY layer of the second device still submits the TB with the CRC error to the MAC layer. Then, the MAC layer of the second device determines the data packet with check success on the transport block with the CRC error based on a CB CRC result from the PHY layer, the quantity of data packets included in the TB with the CRC error, and the size of each data packet. Certainly, if the PHY layer of the second device determines that CRC performed on the TB succeeds, the TB also needs to be submitted to the MAC layer. It may be understood that, in this application, regardless of whether CRC performed on the TB succeeds, the TB is submitted from the PHY layer to the MAC layer.

It should be understood that the second device (a decoding end/a receive end) knows a size of each coding block (CB), and also knows the size of each data packet on the TB, and therefore the second device may determine a mapping relationship between the CB and the data packet based on the size of each data packet on the TB, the size of each coding block, and the CB CRC check result, to find out a data packet with the check error (success) on the TB. Herein, the size of each coding block (CB) may be a fixed value, or may not be a fixed value (that is, sizes of the coding blocks are not equal, for example, the second device determines the size of each CB according to a specific rule or based on one or more items in an indication) provided that the second device can know the size of each coding block.

It can be learned that, in this solution, when K is equal to N, and Q is equal to M, a decoding procedure and an operation are provided. Which data packets are correct and which data packets are incorrect on the TB with the CRC error can be determined based on the CB CRC result in the TB with the CRC error and the mapping relationship between the CB and the data packet, to perform decoding by using the correct data packet on the TB, so as to restore original data. This can improve performance of an ultra-reliable and low-latency service, reduce retransmission latency, and improve transmission reliability.

In another implementation, if K is not equal to N (that is, K is greater than N), or Q is not equal to M (that is, Q is greater than M), the K first data packets are obtained by separately adding the headers (namely, the original data packet headers or the coded packet headers) to the K pieces of original data. The N first data packets in the K first data packets are obtained by separately adding the headers (namely, the original data packet headers or the coded packet headers) to the N pieces of original data in the K pieces of original data. The M second data packets in the Q second data packets are generated by performing the network coding operation on the N pieces of original data. The K pieces of original data are obtained by separately performing the segmentation operation on the P second MAC PDUs.

Correspondingly, with reference to the third aspect, in a possible implementation, the decoding operation of the second device includes: A MAC layer of the second device determines the N first data packets and the M second data packets from the P transport blocks, where the M second data packets are obtained by performing the network coding operation on the N pieces of original data included in the N first data packets. If there is a transport block with a CRC error in the P transport blocks, the MAC layer of the second device determines a data packet with check success on the transport block with the CRC error based on a check result of CRC performed on a CB in the transport block with the CRC error, a quantity of data packets included in the transport block with the CRC error, and a size of each data packet. Then, the second device decodes data packets with check success in the N first data packets and the M second data packets to obtain the N pieces of original data. Both CRC performed on the TB and CRC performed on the CB are implemented at a PHY layer of the second device. Specifically, after receiving the TB, the physical layer of the second device performs CRC on the TB, and perform CB CRC. If determining that CRC performed on the TB has an error, the PHY layer of the second device still submits the TB with the CRC error to the MAC layer. Then, the MAC layer of the second device determines the data packet with check success on the transport block with the CRC error based on a CB CRC result from the PHY layer, the quantity of data packets included in the TB with the CRC error, and the size of each data packet. Certainly, if the PHY layer of the second device determines that CRC performed on the TB succeeds, the TB also needs to be submitted to the MAC layer. It may be understood that, in this application, regardless of whether CRC performed on the TB succeeds, the TB is submitted from the PHY layer to the MAC layer.

It can be learned that, in this solution, when K is not equal to N (that is, K is greater than N), or Q is not equal to M (that is, Q is greater than M), a decoding procedure and an operation are provided. Whether an original data packet and a coded packet that belong to a same network coding group on the P transport blocks are correct is determined based on a TB CRC result and the CB CRC result from the PHY layer. Correct data packets in the original data packet and the coded packet are decoded to restore original data. This can improve performance of an ultra-reliable and low-latency service, reduce retransmission latency, and improve transmission reliability.

Data obtained by removing MAC layer additional information from the second MAC PDU obtained by performing the decoding operation is data that needs to be submitted from the MAC layer to an upper layer (for example, an RLC layer).

According to a fourth aspect, this application provides a data receiving apparatus. The data receiving apparatus may be a second device or a chip or a circuit in a second device. The data receiving apparatus includes: an obtaining module, configured to obtain P transport blocks, where the P transport blocks carry P first MAC PDUs; a decoding module, configured to perform a decoding operation on the P transport blocks to obtain N pieces of original data; and a merging module, configured to merge the N pieces of original data to obtain one or more second MAC PDUs. One first MAC PDU is carried on one TB. The P first MAC PDUs include K first data packets and Q second data packets, and the K first data packets and the Q second data packets are arranged according to a preset rule. Herein, the first data packet is an original data packet, and the second data packet is a coded packet or a redundant packet. Each original data packet includes one original data packet header or one coded packet header, and each coded packet (or redundant packet) includes one coded packet header. Herein, a size of the original data packet header may be equal to a size of the coded packet header.

The preset rule indicates locations of the original data packet and the coded packet (or the redundant packet) in the P first MAC PDUs.

Each of the P first MAC PDUs includes an integer quantity of data packets, and sizes of other data packets than the last data packet in each first MAC PDU are equal.

The K first data packets are obtained by separately adding headers (namely, original data packet headers or the coded packet headers) to K pieces of original data. The K pieces of original data are obtained by separately performing a segmentation operation on P second MAC PDUs. It should be understood that the foregoing process of merging the N pieces of original data is an inverse process of performing the segmentation operation on the second MAC PDU.

N first data packets in the K first data packets are obtained by separately adding headers (namely, original data packet headers or coded packet headers) to the N pieces of original data in the K pieces of original data. M second data packets in the Q second data packets are generated by performing a network coding operation on the N pieces of original data.

P, K, Q, N, and M each are a positive integer, K is greater than or equal to N, and Q is greater than or equal to M.

In an implementation, if K is equal to N, and Q is equal to M, the P first MAC PDUs include the N first data packets and the M second data packets in total. The N first data packets are obtained by separately adding the headers (namely, the original data packet headers or the coded packet headers) to the N pieces of original data, and the M second data packets are generated by performing the network coding operation on the N pieces of original data. The N pieces of original data are obtained by separately performing the segmentation operation on the P second MAC PDUs.

Correspondingly, with reference to the fourth aspect, in a possible implementation, the decoding module includes a determining unit and a decoding unit. The determining unit is configured to: when there is a transport block with a CRC error in the P transport blocks, determine a data packet with check success on the transport block with the CRC error based on a check result of CRC performed on a CB in the transport block with the CRC error, a quantity of data packets included in the transport block with the CRC error, and a size of each data packet. The decoding unit is configured to decode a data packet with check success on the P transport blocks to obtain the N pieces of original data.

In another implementation, if K is not equal to N (that is, K is greater than N), or Q is not equal to M (that is, Q is greater than M), the K first data packets are obtained by separately adding the headers (namely, the original data packet headers or the coded packet headers) to the K pieces of original data. The N first data packets in the K first data packets are obtained by separately adding the headers (namely, the original data packet headers or the coded packet headers) to the N pieces of original data in the K pieces of original data. The M second data packets in the Q second data packets are generated by performing the network coding operation on the N pieces of original data. The K pieces of original data are obtained by separately performing the segmentation operation on P second MAC PDUs.

Correspondingly, with reference to the fourth aspect, in a possible implementation, the determining unit is configured to determine the N first data packets and the M second data packets from the P transport blocks, where the M second data packets are obtained by performing the network coding operation on the N pieces of original data included in the N first data packets. The determining unit is further configured to: when there is a transport block with a CRC error in the P transport blocks, determine a data packet with check success on the transport block with the CRC error based on a check result of CRC performed on a CB in the transport block with the CRC error, a quantity of data packets included in the transport block with the CRC error, and a size of each data packet. The decoding unit is configured to decode data packets with check success in the N first data packets and the M second data packets to obtain the N pieces of original data.

Data obtained by removing MAC layer additional information from the second MAC PDU obtained by performing the decoding operation is data that needs to be submitted from the MAC layer to an upper layer (for example, an RLC layer).

In a possible implementation of any one of the foregoing aspects, if K is equal to N, and Q is equal to M, both N and M may be determined based on a total quantity (n) of data packets included in the P first MAC PDUs and a code rate (cr).

The code rate may indicate a ratio of a quantity of original data packets to the quantity of total data packets. Optionally, the code rate may be the ratio of the quantity of original data packets to the quantity of total data packets, or may be a ratio of a quantity of redundant packets to the quantity of total data packets, a ratio of the quantity of original data packets to a quantity of redundant packets, or other information that may indicate the ratio of the quantity of original data packets to the quantity of total data packets. This is not limited herein.

Specifically, P is a preset value. For example, P is a semi-statically configured value. Alternatively, P is a value negotiated in advance by the transmit end and the receive end (namely, the first device and the second device), or a value predetermined in a protocol.

Optionally, N and M may be separately obtained through calculation according to the following formulas:

$$M = \lceil n \times (1 - cr) \rceil \text{ or } M = \lfloor n \times (1 - cr) \rfloor;$$

and

$$N = n - M,$$

where

n indicates the quantity of total data packets included in the P first MAC PDUs; cr indicates the code rate, and is the ratio of the quantity of original data packets to the quantity of total data packets, and the quantity of total data packets is a sum of the quantity of original data packets and a quantity of coded packets generated by coding the original data packets; and

$$n = \sum_{i=1}^{P} n^i,$$

where

$n^i$ indicates a quantity of data packets included in an ith first MAC PDU in the P first MAC PDUs.

The symbol $\lceil \ \rceil$ indicates rounding up, and the symbol $\lfloor \ \rfloor$ indicates rounding down. Details are not described in the following again.

It can be learned that, in this solution, when K is equal to N and Q is equal to M, a preset quantity (namely, P) of second MAC PDUs are used as reference objects to generate a specific quantity of original data packets and a specific quantity of coded packets, and the original data packets and the coded packets are placed on a preset quantity of TBs for transmission. In this way, the decoding end (namely, the second device) can learn the quantity of original data packets and the quantity of coded packets that are transmitted by a coding end (namely, the first device). This facilitates decoding by the decoding end, for example, determining whether decoding can be normally performed (namely, whether a quantity of correctly received data packets is greater than or equal to N).

Optionally, a header of the first data packet is an original data packet header. A size of the original data packet header is equal to the size of the coded packet header. For example, the size of the original data packet header is equal to a preset header size (H), and the size of the coded packet header is also equal to the preset header size (H).

In this way, the decoding end/receive end (namely, the second device) can clearly identify, based on the preset header size, which part is a header and which part is data in a data packet, to facilitate subsequent decoding. A header length information indication does not need to be carried in the header, to reduce overheads of a signaling field.

Optionally, the preset rule includes: The last data packet included in each of the P first MAC PDUs is an original data packet. Under this preset rule, the original data packet header includes an original/coded (original/coded, O/C) field, and the coded packet header includes an O/C field and a coding factor (coeff ID) field. Optionally, the original data packet header and the coded packet header each further include a block identifier (block ID) field/an offset (offset) field.

It can be learned that, in this solution, the last data packet of each first MAC PDU is restricted to being an original data packet, to fully use transmission resources. If the last data packet of a first MAC PDU is a coded packet and is incomplete (for example, a size is less than the preset data packet size), the coded packet cannot be decoded (because information is incomplete). Therefore, when the coded packet is transmitted incorrectly, the coded packet cannot be stored neither by using another correctly transmitted data packet. However, if the last data packet of the first MAC PDU is an original data packet, although a size of the original data packet may also be less than the preset data packet size, if the original data packet is correctly transmitted, the original data packet can be decoded to restore other original data that is transmitted incorrectly. If the original data packet is transmitted incorrectly, original data of the original data packet can also be restored by using another correctly transmitted data packet, to fully use the transmission resources.

The O/C field indicates whether a data packet in which the O/C field is located is an original data packet or a coded packet. When being set to a first value (for example, 0), the O/C field indicates first indication information, and indicates that the data packet in which the O/C field is located is an original data packet. When being set to a second value (for example, 1), the O/C field indicates second indication information, and indicates that the data packet in which the O/C field is located is a coded packet. The coding factor (coeff ID) field indicates an index of a codebook. The codebook herein may be one or more of a Vandermonde codebook, a Cauchy codebook, a random code book, and the like. The offset field indicates an offset value of a first MAC PDU, in which the offset field is located in the P first MAC PDUs, relative to a start first MAC PDU. The block identifier (Block ID) field indicates an identifier of a network coding group in which a data packet including the block ID field is located. Optionally, the block identifier may be a sequence number (sequence number, SN).

It should be understood that, if the headers (namely, the original data packet header and the coded packet header) carry O/C fields, the decoding end (namely, the second device) can distinguish between the original data packet and the coded packet. If the headers (namely, the original data packet header and the coded packet header) carry block ID fields/offset fields, the decoding end (namely, the second device) conveniently distinguishes which data packets that include data from one network coding group, to determine which data packets can be decoded together. The coded packet header carries the coding factor field, so that the decoding end (namely, the second device) can construct a corresponding coefficient factor matrix according to an indication of the coding factor field, and perform decoding. In addition, in this solution design, header overheads are low, designs of the original data packet header and the coded packet header are simple and clear, and field information such as segmentation concatenation information and an SN of each data packet does not need to be introduced, to reduce redundancy of header information.

Optionally, the header may further include a reserved field, to support subsequent extension.

Optionally, the preset rule includes: If a size of the last data packet included in a first MAC PDU is less than the preset data packet size, the last data packet is an original data packet; and if a size of the last data packet included in the last first MAC PDU in the P first MAC PDUs is equal to the preset data packet size (L), the last data packet may be a coded packet or may be an original data packet. Under this preset rule, the original data packet header includes an O/C field, and the coded packet header includes an O/C field and a coding factor field. Optionally, the original data packet header and the coded packet header each further include a block ID field/an offset (offset) field.

It can be learned that, in this solution, the last data packet of each first MAC PDU is not strictly restricted to being an original data packet, but whether the last data packet is an original data packet or a coded packet is determined by comparing the size of the last data packet with L. This implementation is more flexible.

Optionally, on a basis of any one of the foregoing two preset rules (namely, "the last data packet included in each of the P first MAC PDUs is an original data packet" and "if a size of the last data packet included in a first MAC PDU is less than the preset data packet size, the last data packet is an original data packet; and if a size of the last data packet included in the last first MAC PDU in the P first MAC PDUs is equal to the preset data packet size, the last data packet may be a coded packet or may be an original data packet"), the preset rule further includes: An original data packet is before a coded packet in the P first MAC PDUs other than the last data packet included in each first MAC PDU. Under this preset rule, the original data packet header may not carry any field, and the coded packet header may carry the coding factor field. Certainly, the original data packet header and the coded packet header each may alternatively carry the O/C field and/or the block ID field/offset field.

It can be learned that, in this solution, an arrangement ranking of each data packet in the P first MAC PDUs is restricted, so that no field needs to be carried in the original data packet header, to reduce signaling overheads.

Optionally, the network coding operation includes a padding operation and a coding operation. The padding operation is used to pad original data whose size is less than the difference between the preset data packet size and the preset header size in the N pieces of original data. The coding operation includes block coding or sliding window coding (also referred to as convolutional coding). If the coding operation includes sliding window coding, and a size of a sliding window for sliding window coding is fixed or configured, no new field may be added to the coded packet header. If a size of a sliding window for sliding window coding is variable, the coded packet header may further include an association depth field. The association depth field indicates a quantity of first MAC PDUs before a first MAC PDU in which the association depth field is located. Sliding window coding is coding original data in the first MAC PDU in which the association depth field is located and original data in a historical first MAC PDU indicated by the association depth field together. For example, if the quantity indicated by the association depth field is 1, sliding window coding is coding the original data in the first MAC PDU in which the association depth field is located and original data in one first MAC PDU before the first MAC PDU together. In other words, which MAC PDUs include original data coded together are learned by the decoding end/receive end by using the association depth field, to support decoding by the decoding end/receive end.

It can be learned that this solution supports not only block coding but also sliding window coding, to enrich applicable coding types at the MAC layer.

In a possible implementation of any one of the foregoing aspects, if K is not equal to N, or Q is not equal to M, N is a preset quantity of original data packets, and M is determined based on N and a code rate (cr).

The code rate may indicate a ratio of the quantity of original data packets to the quantity of total data packets. To be specific, the code rate may be the ratio, or may be another ratio provided that the code rate can indicate the ratio of the quantity of original data packets to the quantity of total data packets.

Optionally, M may be obtained through calculation according to the following formula:

$$M = \left\lceil \frac{N}{cr} \right\rceil - N \quad \text{or} \quad M = \left\lfloor \frac{N}{cr} \right\rfloor - N,$$

where

cr indicates the code rate, and is the ratio of the quantity of original data packets to the quantity of total data packets, and the quantity of total data packets is a sum of the quantity of original data packets and a quantity of coded packets generated by coding the original data packets.

It can be learned that, in this solution, when K is not equal to N, or Q is not equal to M, in one network coding group, an amount of original data is preset, or a quantity of original data packets is preset, a specific quantity of coded packets are generated with reference to the code rate, and these original data packets and coded packets are arranged on the TB according to the predefined rule for transmission. In this way, the decoding end (namely, the second device) can learn the quantity of coded packets transmitted by a coding end (namely, the first device). This facilitates decoding by the decoding end, for example, determining, with reference to the preset rule, which data packets are coded packets.

Optionally, a header of the first data packet is an original data packet header or a coded packet header. The second data packet also includes a coded packet header. A size of the header of the first data packet and a size of the header of the second data packet are equal, for example, may be equal to a preset header size (H).

Optionally, the preset rule includes: If a size of the last data packet included in a first MAC PDU is less than the preset data packet size (L), the last data packet is an original data packet. In other words, if a size of the last data packet included in a first MAC PDU is equal to the preset data packet size (L), the last data packet included in the first MAC PDU is allowed to be a coded packet, or certainly, may be an original data packet. Certainly, if a size of the last data packet included in each of the P first MAC PDUs is less than the preset data packet size, the last data packet included in each first MAC PDU is an original data packet. Under this preset rule, the header of the first data packet and the header of the second data packet each include a block ID field and a coeff ID field. Optionally, the header of the first data packet and the header of the second data packet each further include an O/C field. The O/C field in the header of the first data packet indicates that a data packet in which the O/C field is located is an original data packet. In other words, the O/C field is set to a first value (for example, 0). The O/C field in the header of the second data packet indicates that a data packet in which the O/C field is located is a coded packet. In other words, the O/C field is set to a second value (for example, 1).

The coding factor (coeff ID) field in the header of the first data packet indicates a unit vector, and the coding factor (coeff ID) field in the header of the second data packet indicates an index of a codebook. The codebook herein may be one or more of a Vandermonde codebook, a Cauchy codebook, a random code book, and the like. In this solution, the coding factor field is also carried in the header of the first data packet, and indicates the unit vector. This helps the decoding end (namely, the second device) construct a corresponding coefficient factor matrix with reference to an indication of the coding factor field in the header, to perform decoding by using the coefficient factor matrix. In addition, in this solution design, header overheads are low, the design is simple and clear, and field information such as segmentation concatenation information and an SN of each data packet may not be introduced, to reduce redundancy of header information. Optionally, the header may further include a reserved field, to support subsequent extension.

It can be learned that, in this solution, when a size of the last data packet included in a first MAC PDU is less than the preset data packet size (L), the last data packet is restricted to being an original data packet, to fully use transmission resources.

Optionally, on a basis of the preset rule (namely, "if a size of the last data packet included in a first MAC PDU is less than the preset data packet size, the last data packet is an original data packet"), the preset rule further includes: The N first data packets and the M second data packets in the P first MAC PDUs satisfy a relationship that an original data packet is before a coded packet. In other words, the N first data packets and the M second data packets in the P first MAC PDUs are arranged in a sequence in which the original data packet is before the coded packet. When the preset rule is met, the remaining K-N original data packets and remaining Q-M coded packets may be after the M second data packets. Under this preset rule, the header of the first data packet and the header of the second data packet each include the block ID field and the coeff ID field. Optionally, the header of the first data packet and the header of the second data packet each further include the O/C field. The O/C field in the header of the first data packet indicates that the data packet in which the O/C field is located is an original data packet. In other words, the O/C field is set to the first value (for example, 0). The O/C field in the header of the second data packet indicates that the data packet in which the O/C field is located is a coded packet. In other words, the O/C field is set to a second value (for example, 1).

It can be learned that, in this solution, arrangement rankings of an original data packet and a coded packet generated by using one network coding group are further restricted, so that a boundary (which means a start location or an end location of a data packet) between data packets is clear (that is, a location of each data packet in the first MAC PDU may be deduced by using the preset data packet size), to support the decoding end/receive end (namely, the second device) in identifying which data packets are original data packets and which data packets are coded packets.

Optionally, on a basis of the preset rules (namely, "if a size of the last data packet included in a first MAC PDU is less than the preset data packet size, the last data packet is an original data packet" and "the N first data packets and the M second data packets in the P first MAC PDUs satisfy a relationship that an original data packet is before a coded packet"), the preset rule further includes: If a size of a first MAC PDU in which the last first data packet in the N first data packets is located is not an integer multiple of the preset data packet size (L), the last data packet of the first MAC PDU is a first data packet other than the N first data packets in the K first data packets, for example, a first data packet in a next network coding group. If a size of a first MAC PDU in which any second data packet in the M second data packets is located is not an integer multiple of the preset data packet size (L), the last data packet of the first MAC PDU in which the any second data packet is located is a first data packet other than the N first data packets in the K first data packets, for example, the first data packet in the next network coding group. Under the preset rule, the header of the first data packet and the header of the second data packet each include the coeff ID field. Optionally, the header of the first data packet and the header of the second data packet each further include the O/C field and/or the block ID field. The O/C field in the header of the first data packet indicates that the data packet in which the O/C field is located is an original data packet. In other words, the O/C field is set to the first value (for example, 0). The O/C field in the header of the second data packet indicates that the data packet in which the O/C field is located is a coded packet. In other words, the O/C field is set to a second value (for example, 1).

It can be learned that, in this solution, a manner of arranging the original data packet and the coded packet is restricted, to fully use transmission resources.

In a possible implementation of any one of the foregoing aspects, the sizes of the other data packets than the last data packet included in each of the P first MAC PDUs all equal to the preset data packet size (L), and the size of the last data packet is less than or equal to the preset data packet size (L). The size of the original data packet header and the size of the coded packet header are equal to the preset header size (H).

It can be learned that, in this solution, the sizes of the other data packets than the last data packet of each first MAC PDU are equal, so that a boundary between data packets included in each first MAC PDU is clear. This can support the decoding end (namely, the second device) in implicitly dividing each TB by using the preset data packet size L, thereby identifying location and boundary information of each data packet, and support the decoding end (namely, the second device) in identifying a correctly received data packet on the TB with the error through CB CRC, thereby decoding correctly received related data packets jointly, to restore original data or generate feedback information.

In a possible implementation of any one of the foregoing aspects, a size of the last data packet included in the $i^{\text{th}}$ first MAC PDU in the P first MAC PDUs is determined based on a size (denoted as $Tbs^i$) of the $i^{\text{th}}$ first MAC PDU, the quantity (denoted as $n^i$) of data packets included in the $i^{\text{th}}$ first MAC PDU, and the preset data packet size (L). The quantity ($n^i$) of data packets included in the $i^{\text{th}}$ first MAC PDU is determined based on the size ($Tbs'$) of the first MAC PDU and the preset data packet size (L). Specifically, the size of the last data packet included in the $i^{\text{th}}$ first MAC PDU satisfies the following formula:

$$L_{sys}^i = Tbs^i - (n^i - 1) \times L.$$

$L_{sys}^i$ indicates the size of the last data packet included in the $i^{\text{th}}$ first MAC PDU, $Tbs^i$ indicates the size of the $i^{\text{th}}$ first MAC PDU, $n^i$ indicates the quantity of data packets included in the $i^{\text{th}}$ first MAC PDU, and L indicates the preset data packet size.

The quantity $n^i$ of data packets included in the $i^{\text{th}}$ first MAC PDU satisfies the following formula:

$$n^i = \left\lceil \frac{Tbs^i}{L} \right\rceil$$

In a possible implementation of any one of the foregoing aspects, a size (denoted as $y_i$) of an $i^{\text{th}}$ second MAC PDU in the P second MAC PDUs is determined based on a quantity ($n^i$) of original data packets included in the $i^{\text{th}}$ first

MAC PDU in the P first MAC PDUs, the preset data packet size (L), the preset header size (H), and the size of the last data packet included in the i<sup>th</sup> first MAC PDU. The quantity of original data packets included in the i<sup>th</sup> first MAC PDU is determined based on the quantity ($n^i$) of data packets included in the i<sup>th</sup> first MAC PDU and according to the preset rule. Specifically, the size of the i<sup>th</sup> second MAC PDU satisfies the following formula:

$$y_i = (n^i_{sys} - 1) \times (L - H) + L^i_{sys} - H \, ,$$

where

$y_i$ indicates the size of the i<sup>th</sup> second MAC PDU, $n^i_{sys}$ indicates the quantity of original data packets included in the i<sup>th</sup> first MAC PDU, H indicates the preset header size, and $L^i_{sys}$ indicates the size of the last data packet included in the i<sup>th</sup> first MAC PDU.

In a possible implementation of any one of the foregoing aspects, the P first MAC PDUs further include CRC codes in a preset size (or with a fixed bit) obtained by separately performing CRC on the K+Q data packets. A CRC code in/with the preset size/fixed bit obtained by performing CRC on a data packet is after the last bit of the data packet, and the CRC code is adjacent to the last bit of the data packet.

Optionally, the size of the last data packet included in the i<sup>th</sup> first MAC PDU in the P first MAC PDUs is determined based on the size (denoted as $Tbs^i$) of the i<sup>th</sup> first MAC PDU, the quantity ($n^i$) of data packets included in the i<sup>th</sup> first MAC PDU, the preset data packet size (L), and the preset size/fixed bit (R) of the CRC code. The quantity ($n^i$) of data packets included in the i<sup>th</sup> first MAC PDU is determined based on the size ($Tbs^i$) of the first MAC PDU and the preset data packet size (L). Specifically, the size of the last data packet included in the i<sup>th</sup> first MAC PDU satisfies the following formula:

$$L^i_{sys} = Tbs^i - (n^i - 1) \times (L + R) - R \, .$$

$L^i_{sys}$ indicates the size of the last data packet included in the i<sup>th</sup> first MAC PDU, $Tbs^i$ indicates the size of the i<sup>th</sup> first MAC PDU, $n^i$ indicates the quantity of data packets included in the i<sup>th</sup> first MAC PDU, L indicates the preset data packet size, and R indicates the preset size of the CRC code of the data packet.

The quantity $n^i$ of data packets included in the i<sup>th</sup> first MAC PDU satisfies the following formula:

$$n^i = \left\lceil \frac{Tbs^i}{L + R} \right\rceil$$

Correspondingly, the coding end (namely, the first device) introduces the CRC code in/with the preset size/fixed bit after the last bit of each data packet. Therefore, the decoding end (namely, the second device) may determine whether the data packet is correct without using a CB CRC result from the PHY layer, but may determine, with reference to the CRC code after the last bit of each data packet, whether the data packet is correct. Specifically, the decoding operation of the decoding end (namely, the second device) includes: The second device determines the N first data packets and the M second data packets from the P transport blocks, where the M second data packets are obtained by performing the network coding operation on the N pieces of original data included in the N first data packets. If there is a transport block with the CRC error in the P transport blocks, the second device performs CRC on each data packet on the transport block with the CRC error to obtain a check result, and determines, based on the check result and the CRC code after the last bit of the data packet, the data packet with check success on the transport block with the CRC error. The second device decodes the data packets with check success in the N first data packets and the M second data packets to obtain the N pieces of original data.

Optionally, the size (denoted as $y_i$) of the i<sup>th</sup> second MAC PDU in the P second MAC PDUs is determined based on the quantity ($n^i$) of original data packets included in the i<sup>th</sup> first MAC PDU in the P first MAC PDUs, the preset data packet size (L), the preset header size (H), the size of the last data packet included in the i<sup>th</sup> first MAC PDU, and the preset size/fixed bit (R) of the CRC code. The quantity of original data packets included in the i<sup>th</sup> first MAC PDU is determined based on the quantity ($n^i$) of data packets included in the i<sup>th</sup> first MAC PDU and according to the preset rule. Specifically, the size of the i<sup>th</sup> second MAC PDU satisfies the following formula:

$$y_i = (n_{sys}^i - 1) \times (L - H - R) + L_{sys}^i - H - R,$$

where

$y_i$ indicates the size of the $i^{th}$ second MAC PDU, $n_{sys}^i$ indicates the quantity of original data packets included in the $i^{th}$ first MAC PDU, H indicates the preset header size, $L_{sys}^i$ indicates the size of the last data packet included in the $i^{th}$ first MAC PDU, and R indicates the preset size of the CRC code of the data packet.

It can be learned that, in this solution, the CRC code with the preset bit is introduced after the last bit of each data packet, to support the decoding end/receive end (namely, the second device) in dividing the first MAC PDU or the TB, based on a sum (namely, L+R) of the preset data packet size L and the preset size/fixed bit R of the CRC code, when CRC performed on the TB has the error. In this way, the data packet on the TB/first MAC PDU is clearly located, that is, the boundary and the location of each data are obtained. CRC is performed on the data packet, to determine whether each data packet on the TB with the error is correct. Therefore, each data packet can be determined more accurately without depending on CRC performed on the CB in the TB, which is more accurate than CB CRC.

In a possible implementation of any one of the foregoing aspects, the segmentation operation includes performing equal-size segmentation based on the difference (L-H) between the preset data packet size (L) and the preset header size (H).

According to a fifth aspect, this application provides a communication apparatus. The communication apparatus may include a processor and a memory, and optionally include a transceiver. The memory is configured to store a computer program. The transceiver is configured to receive and send various data packets or signals. The computer program includes program instructions. When the processor runs the program instructions, the communication apparatus is enabled to perform the data transmission method according to the first aspect, the third aspect, or any one of the possible implementations of the first aspect or the third aspect. The transceiver may be a radio frequency module, a combination of a radio frequency module and an antenna, or an input/output interface of a chip or a circuit in the communication apparatus.

According to a sixth aspect, this application provides a readable storage medium. The readable storage medium stores program instructions. When the program instructions are run on a computer, the computer is enabled to perform the data transmission method according to the first aspect, the third aspect, or any one of the possible implementations of the first aspect or the third aspect.

According to a seventh aspect, this application provides a program product including program instructions. When the program product runs, the data transmission method according to the first aspect, the third aspect, or any one of the possible implementations of the first aspect or the third aspect is performed.

According to an eighth aspect, this application provides an apparatus. The apparatus may be implemented in a form of a chip, or may be implemented in a form of a device. The apparatus includes a processor. The processor is configured to: read a program stored in a memory and execute the program, to perform the data transmission method according to any one or more of the first aspect and the third aspect, or one or more of the possible implementations of the first aspect or the third aspect. Optionally, the apparatus further includes a memory, and the memory is connected to the processor through a circuit. Further, optionally, the apparatus further includes a communication interface, and the processor is connected to the communication interface. The communication interface is configured to receive a to-be-processed data packet and/or to-be-processed information. The processor obtains the data packet and/or the information from the communication interface, processes the data packet and/or the information, and outputs a processing result through the communication interface. The communication interface may be an input/output interface.

Optionally, the processor and the memory may be physically mutually independent units, or the memory may be integrated with the processor.

According to a ninth aspect, this application provides a communication system. The communication system includes the first device according to any one of the foregoing aspects and the second device according to any one of the foregoing aspects.

According to embodiments of this application, a network coding technology can be applied to a MAC layer, to effectively use a correct data packet on a TB that is transmitted incorrectly, and restore original data that is transmitted incorrectly, so as to improve performance of an ultra-reliable and low-latency service, reduce retransmission latency, and improve transmission reliability.

## BRIEF DESCRIPTION OF DRAWINGS

To describe the technical solutions in embodiments of this application more clearly, the following briefly describes the accompanying drawings used for describing embodiments.

FIG. 1 is a schematic diagram of an architecture of a wireless communication system according to an embodiment of this application;
FIG. 2 is a schematic diagram of an application scenario according to an embodiment of this application;
FIG. 3 is a simplified schematic diagram of a communication system according to an embodiment of this application;
FIG. 4 is a schematic diagram of random linear network coding;
FIG. 5 is a first schematic flowchart of a data transmission method according to an embodiment of this application;
FIG. 6 is a second schematic flowchart of a data transmission method according to an embodiment of this application;
FIG. 7 is a schematic diagram of a format of an original data packet header according to an embodiment of this application;
FIG. 8 is a schematic diagram of a format of a coded packet header according to an embodiment of this application;
FIG. 9 is a schematic diagram of a protocol stack between an RLC layer and a MAC layer according to an embodiment of this application;
FIG. 10a is a first schematic diagram of data transmission by a coding end according to an embodiment of this application;
FIG. 10b is a second schematic diagram of data transmission by a coding end according to an embodiment of this application;
FIG. 11 is a schematic diagram of sliding window coding according to an embodiment of this application;
FIG. 12a is a first schematic diagram of data transmission by a decoding end according to an embodiment of this application;
FIG. 12b is a second schematic diagram of data transmission by a decoding end according to an embodiment of this application;
FIG. 13 is a third schematic flowchart of a data transmission method according to an embodiment of this application;
FIG. 14a is a third schematic diagram of data transmission by a coding end according to an embodiment of this application;
FIG. 14b is a fourth schematic diagram of data transmission by a coding end according to an embodiment of this application;
FIG. 15 is a fourth schematic flowchart of a data transmission method according to an embodiment of this application;
FIG. 16a is a fifth schematic diagram of data transmission by a coding end according to an embodiment of this application;
FIG. 16b is a sixth schematic diagram of data transmission by a coding end according to an embodiment of this application;
FIG. 17 is a schematic diagram of a structure of a data transmission apparatus according to an embodiment of this application;
FIG. 18 is a schematic diagram of a structure of a data receiving apparatus according to an embodiment of this application; and
FIG. 19 is a schematic diagram of a structure of a communication apparatus according to an embodiment of this application.

## DESCRIPTION OF EMBODIMENTS

The following clearly and completely describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions or purposes. For example, a first MAC PDU and a second MAC PDU are merely intended to distinguish between different information, and are not intended to limit a sequence of the first MAC PDU and the second MAC PDU. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of plural items (pieces). For example, at least one of a, b, or c may indicate a, b, c, a and b, a and c, b and c, or a, b, and c. Herein, a, b, and c may be singular or plural.

It may be understood that, in this application, "when", "if", and "in case of" all mean that an apparatus performs corresponding processing in an objective case, are not intended to limit time, does not require the apparatus to necessarily have a determining action during implementation, and do not mean that there is another limitation.

"At the same time" in this application may be understood as being at a same time point, or may be understood as being within a time period, or may be understood as being within a same cycle, and may be specifically understood with reference to a context.

In this application, an element indicated in a singular form is intended to indicate "one or more", but does not indicate "one and only one", unless otherwise specified.

In addition, the terms "system" and "network" are often used interchangeably in this specification.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

For ease of understanding the technical solutions provided in embodiments of this application, the following describes a system architecture and an application scenario for a data transmission method provided in embodiments of this application. It may be understood that the system architecture and the application scenario that are described in embodiments of this application are intended to describe the technical solutions in embodiments of this application more clearly, and do not constitute a limitation on the technical solutions provided in embodiments of this application.

A wireless communication system includes communication devices, and the communication devices may perform wireless communication over an air interface resource. The communication devices may include a network device and a terminal device, and the network device may also be referred to as a base station device. The air interface resource may include at least one of a time domain resource, a frequency domain resource, a code resource, and a spatial resource.

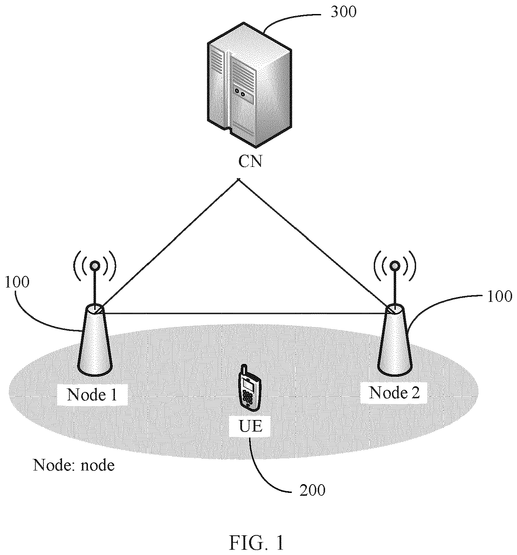

FIG. 1 is a schematic diagram of an architecture of a wireless communication system according to an embodiment of this application. As shown in FIG. 1, the wireless communication system includes access network devices 100 (for example, a node 1 and a node 2 in FIG. 1) and UE 200, and optionally further includes a core network (core network, CN) device 300. The access network device 100 may be configured with a plurality of antennas, and the UE 200 may also be configured with a plurality of antennas. The access network device and the core network device may be collectively referred to as a network device or a network side device, and an access network and a core network may be collectively referred to as a network side. In the wireless communication system, both the node 1 and the node 2 may communicate with a plurality of pieces of UE. However, it should be understood that UE communicating with the node 1 and UE communicating with the node 2 may be the same or different. The UE 200 shown in FIG. 1 may communicate with both the node 1 and the node 2. However, this shows merely one possible scenario. In some scenarios, the UE may communicate with only the node 1 or the node 2. This is not limited in this application.

It should be understood that the access network device and a terminal each may further include a plurality of components (for example, one or more of a processor, a modulator, a multiplexer, a demodulator, or a demultiplexer) related to signal sending and receiving.

The network device in embodiments of this application includes an access network device, for example, a base station (base station, BS). The BS may be an entity that is configured to transmit or receive a signal and that is on a network side, or a device that can perform wireless communication with a terminal and that is deployed in a radio access network. The base station (BS) may be fixed or mobile. The base station may be in a plurality of forms such as a macro base station, a micro base station, a relay station, and an access point. For example, the base station in embodiments of this application may be a base station in 5G or an evolved base station (Evolved NodeB, eNB) in LTE. The base station in 5G may also be referred to as a transmission reception point (transmission reception point, TRP) or a 5G base station (Next-Generation NodeB, gNB). The base station may also be replaced with the following names, for example, a NodeB (NodeB), a transmitting point (transmitting point, TP), a master station MeNB, a secondary station SeNB, a multi-standard radio (multi-standard radio, MSR) node, a home base station, a network controller, an access node, a radio node, a transmission node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), a positioning node, and an IAB donor (IAB donor) In embodiments of this application, an apparatus configured to implement a function of the network device may be a network device, or may be an apparatus that can support the network device in implementing a function, for example, a chip system, a communication module, or a modem. The apparatus may be installed in the network device. In the technical solutions provided in embodiments of this application, the technical solutions provided in embodiments of this application are described by using an example in which the apparatus configured to implement the function of the network device is a network device and the network device is a base station. The base station may support networks of a same access technology or different access technologies. A specific technology and a specific device form that are used by the network device are not limited in embodiments of this application.

The terminal device in embodiments of this application may also be referred to as a terminal, user equipment (user equipment, UE), a mobile station (mobile station, MS), a mobile terminal (mobile terminal, MT), or the like. The terminal device may be an entity that is configured to receive or transmit a signal and that is on a user side, for example, a mobile phone. The terminal device may be deployed on land, including indoor, outdoor, handheld, or vehicle-mounted deployment, or may be deployed on a water surface (for example, a ship), or may be deployed in the air (for example, an airplane, a balloon, or a satellite). The UE includes a handheld device, a vehicle-mounted device, a wearable device, or a computing device that has wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus that can support the terminal in implementing a function, for example, a chip system, a communication module, or a modem. The apparatus may be installed in the terminal. In this embodiment of this application, the chip system may include a chip, or may include a chip and another discrete component. In the technical solutions provided in the embodiments of this application, the technical solutions provided in the embodiments of this application are described by using an example in which the apparatus for implementing a terminal function is a terminal and the terminal is UE. A specific technology and a specific device form that are used by the terminal device are not limited in embodiments of this application.

Optionally, the UE may alternatively be configured to serve as a base station. For example, the UE may serve as a scheduling entity. The UE provides a sidelink signal between UE in vehicle-to-everything (V2X), device-to-device (D2D), peer-to-peer (P2P), or the like.

Optionally, the UE may alternatively be configured to serve as a relay node. For example, the UE may serve as a relay device (relay) or an integrated access and backhaul (integrated access and backhaul, IAB) node, and is configured to provide a wireless backhaul service for the terminal device.

The technical solutions provided in embodiments of this application may be applied to wireless communication between the communication devices. The wireless communication between the communication devices may include wireless communication between the network device and the terminal, wireless communication between network devices, and wireless communication between terminals. In embodiments of this application, the term "wireless communication" may be briefly referred to as "communication", and the term "communication" may also be described as "data transmission", "information transmission, or "transmission".

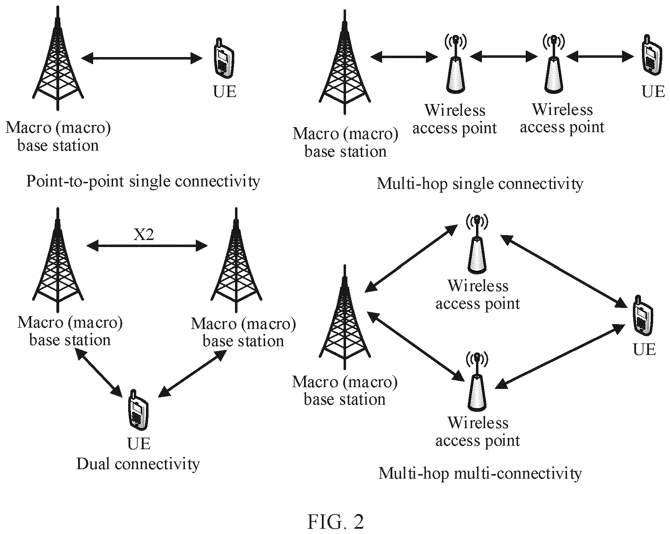

The data transmission method provided in embodiments of this application is mainly for a protocol framework like long term evolution (long term evolution, LTE) or NR, and may be applied to a plurality of mobile communication scenarios such as scenarios, for example, point-to-point transmission in a standalone (standalone, SA) scenario between the base station and the user equipment (user equipment, UE) or between UE, multi-hop/relay (relay) transmission between the base station and the user equipment, and dual connectivity (dual connectivity, DC) or multi-connectivity between a plurality of base stations and the user equipment. FIG. 2 is a schematic diagram of an application scenario according to an embodiment of this application. FIG. 2 shows four application scenarios: point-to-point single connectivity, multi-hop single connectivity, dual connectivity, and multi-hop multi-connectivity. It should be understood that the data transmission method provided in embodiments of this application may be applied to various application scenarios shown in FIG. 2. It should be further understood that FIG. 2 is merely an example. From a perspective of a service scenario, the data transmission method provided in embodiments of this application is further applicable to many scenarios, including but not limited to a data coding scenario in an extended reality (extended reality, XR) service and an uplink large-capacity scenario. In addition, FIG. 2 constitutes no limitation on a network architecture applicable to this application. Transmission like uplink transmission, downlink transmission, access link transmission, backhaul (backhaul) link transmission, and sidelink (sidelink) transmission is not limited in this application.

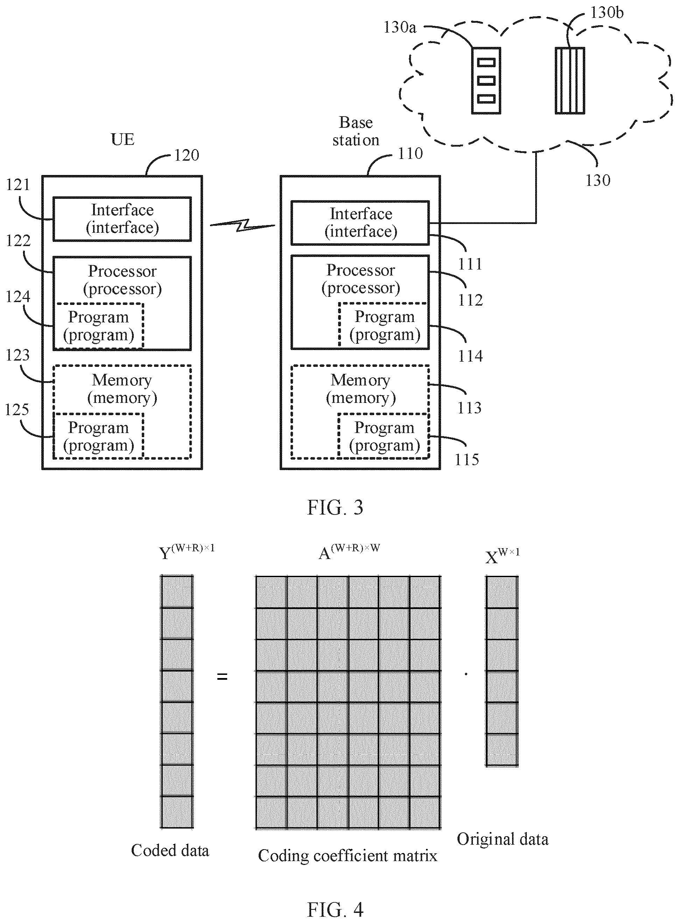

FIG. 3 is a simplified schematic diagram of a communication system according to an embodiment of this application. For simplicity, FIG. 3 shows only a base station 110, UE 120, and a network 130. The base station 110 includes an interface 111 and a processor 112. The processor 112 may optionally store a program 114. The base station 110 may optionally include a memory 113. The memory 113 may optionally store a program 115. The UE 120 includes an interface 121 and a processor 122. The processor 122 may optionally store a program 124. The UE 120 may optionally include a memory 123. The memory 123 may optionally store a program 125. These components operate together to provide various functions described in this application. For example, the processor 112 and the interface 111 operate together to provide a wireless connection between the base station 110 and the UE 120. The processor 122 and the interface 121 operate together to implement downlink transmission and/or uplink transmission of the UE 120.

The network 130 may include one or more network nodes 130a and 130b to provide a core network function. The network nodes 130a and 130b each may be a 5G core network node, or an earlier-generation (for example, 4G, 3G, or 2G) core network node. For example, the network nodes 130a and 130b each may be an access management function (AMF) or a mobility management entity (MME). The network 130 may further include one or more network nodes in a public switched telephone network (PSTN), a packet data network, an optical network, and an internet protocol (IP) network. The network 130 may include a wide area network (WAN), a local area network (LAN), a wireless local area network (WLAN), a wired network, a wireless network, a metropolitan area network, and another network, so that communication can be performed between UE 120 and/or base stations 110.

A processor (for example, the processor 112 and/or the processor 122) may include one or more processors and is implemented as a combination of a computing device. The processor (for example, the processor 112 and/or the processor 122) may include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other appropriate hardware, firmware, and/or a combination of hardware and software, and is configured to perform the various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to: enable the base station 110 and/or the UE 120 to execute a software program, and process data in the software program.

An interface (for example, the interface 111 and/or the interface 121) may include a part configured to implement communication with one or more computer devices (for example, UE, BSs, and/or network nodes). In some embodiments, the interface may include an electrical wire configured to couple a wired connection, a pin configured to couple a wireless transceiver, or a chip and/or a pin configured for a wireless connection. In some embodiments, the interface may include a transmitter, a receiver, a transceiver, and/or an antenna. The interface may be configured to use any available protocol (for example, a 3GPP standard).

A program in this application indicates software in a broad sense. A non-limiting example of the software is program code, a program, a subprogram, an instruction, an instruction set, code, a code segment, a software module, an application program, or a software application program. The program may be run in a processor and/or a computer, to enable the base station 110 and/or the UE 120 to perform the various functions and/or various processes described in this application.

A memory (for example, the memory 113 and/or the memory 123) may store data manipulated by the processors 112 and 122 duration execution for the software. The memories 113 and 123 may be implemented by using any storage technology. For example, the memory may be any available storage medium that can be accessed by a processor and/or a computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can be accessed by a processor/computer and that can carry or store software, data, or information.

The memory (for example, the memory 113 and/or the memory 123) and the processor (for example, the processor 112 and/or the processor 122) may be separately disposed or integrated. The memory may be configured to connect to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in a UE, a base station, or another network node).

In the foregoing content, the system architecture and the possible application scenarios in embodiments of this application are briefly described. To better understand the technical solutions in embodiments of this application, the following briefly describes a network coding technology and some terms in this application.

Commonly used network coding schemes include block coding (for example, random linear network coding (random linear network coding, RLNC)), sliding window coding, convolutional network coding (convolutional network coding, CNC), and the like. The following uses block coding as an example for brief description. In a block coding scheme, a network coding group (one network coding group includes several pieces of original data in a same size) is used as a unit, original data is coded by constructing a coding coefficient matrix, and header information is added to coded original data, to obtain a group of coded data packets. Sizes of any two coded data packets are the same. Usually, a coefficient in the coding coefficient matrix is randomly selected in a finite field, for example, a Galois field (Galois field, GF). FIG. 4 is a schematic diagram of random linear network coding. As shown in FIG. 4, a size of a coding coefficient matrix (namely, $A^{(W+R)\times W}$ in FIG. 4) is $(W+R)\times W$, namely, (W+R) rows and W columns. W+R pieces of coded data ($Y^{(W+R)\times 1}$ in FIG. 4) are obtained by performing network coding on a network coding group ($X^{W\times 1}$ in FIG. 4) including W pieces of original data. A corresponding code rate (redundancy) is expressed as W/(W+R). A coefficient in the coding coefficient matrix is randomly selected in the GF(q) field, where q indicates a size of the Galois field, and a value of the Galois field falls within an interval [0, q-1]. Both W and R are positive integers. It should be understood that, in the block coding scheme, coded data blocks (the coded data blocks herein are the W+R pieces of coded data obtained by performing network coding on the network coding group including the W pieces of original data) are not associated with each other. To be specific, the coding operation is performed on each independent network coding group, and redundancy (code rates) of network coding groups may be the same or different. A coding end/transmit end uniformly adds header information to the generated W+R pieces of coded data, and then sends obtained W+R pieces of coded data. When receiving W correct and linearly unrelated coded data packets, a decoding end/receive end may correctly perform decoding and restore the W pieces of original data. Because the coded data packet includes information about several pieces of original data, the receive end can restore the original data by using the coded data packet. In this application, the term "coded data packet" may also be briefly referred to as a "coded packet", and both may be used interchangeably.

The following describes some terms in this application.

Coded packet: The coded packet is generated by performing network coding on a plurality of pieces of original data in a network coding group. The coded packet includes a system packet and a redundant packet. In this application, the coded packet includes the redundant packet, and optionally further includes the system packet.

System packet: The system packet is obtained by adding a coded packet header to coded data obtained by multiplying original data by a coding coefficient that is a unit vector, or by directly adding a coded packet header to original data.

Redundant packet: The redundant packet is generated by performing network coding on original data. A coding coefficient of the redundant packet is not a unit vector. In embodiments of this application, the term "redundant packet" may also be briefly referred to as a "check packet", and both may be used interchangeably.

Original data packet: The original data packet is obtained by directly adding an original data packet header or a coded packet header to original data, that is, the original data packet includes a system packet. In some embodiments (for example, Embodiment 3 below) in the following of this application, the original data packet may also be referred to as a system packet. For details, refer to the following descriptions. Details are not described herein.

Network coding group: The network coding group is a term related to a block code. In the block code, the network coding group is a set including a plurality of pieces of original data. For example, every W pieces of original data are put into one network coding group for independent network coding, to obtain coded data corresponding to the network coding group. In embodiments of this application, the term "network coding group" may also be referred to as a "network coding block", a "coding group", or a "network coding window".

Finite field: The finite field, also referred to as a Galois field, is a field that includes only a limited quantity of elements and in which addition, subtraction, multiplication, and division operations may be performed. Results of the addition, subtraction, multiplication, and division operations do not exceed a set of the field.

Protocol data unit (protocol data unit, PDU): The protocol data unit is a data unit transmitted between protocol entities. The PDU includes information from an upper layer and additional information of an entity at a current layer. The PDU is transmitted to a next lower layer.

Service data unit (service data unit, SDU): The service data unit is a data unit transmitted between protocol layers, and is data from an upper layer or data to be transmitted to an upper layer.

Code rate (code rate): The code rate may indicate a ratio of a quantity of original data packets to a quantity of total data packets (the quantity of total data packets is a sum of the quantity of original data packets and a quantity of coded packets). Optionally, the code rate may be the ratio of the quantity of original data packets to the quantity of total data packets, or may be a ratio of a quantity of redundant packets to the quantity of total data packets, a ratio of the quantity of original data packets to a quantity of redundant packets, or other information that may indicate the ratio of the quantity of original data packets to the quantity of total data packets. This is not limited herein.

Network coding layer: The network coding layer is a protocol layer having a network coding function. The network coding layer may be one or more of protocol layers such as a radio resource control (radio resource control, RRC) layer, a service data adaptation protocol (service data adaptation protocol, SDAP) layer, a packet data convergence protocol (packet data convergence protocol, PDCP) layer, a backhaul adaptation protocol (backhaul adaptation protocol, BAP) layer, a radio link control (radio link control, RLC) layer, a medium access control (medium access control , MAC) layer, and a physical layer (physical layer, PHY) that have the network coding function. This application mainly relates to the MAC layer having the network coding function. The network coding layer may alternatively be a new protocol layer other than the foregoing protocol layer. For example, the new protocol layer may be below the MAC layer, or between the MAC layer and the PHY layer. A location of the new protocol layer may not be limited in this application. In embodiments of this application, the term "network coding layer" may also be referred to as a "coding or decoding layer", an "encoding or decoding layer", a "network coding or decoding layer", a "network encoding or decoding layer", a "network coding/decoding layer", a "network encoding/decoding layer", or another name. This is not limited in this application.

Decoding corresponding to network coding: Decoding corresponding to network coding is an inverse process of network coding. An original data packet may be restored, by using received coded data, by multiplying the coded data by an inverse matrix of a matrix corresponding to the coded data.

It should be understood that the network coding technology requires that sizes of original data are all the same. However, in an existing NR protocol, it cannot be ensured that sizes of SDUs or PDUs corresponding to any layer are the same. Therefore, an NR/5G system cannot directly support the network coding technology. To be specific, the original data cannot be directly coded without performing any processing, and one or more of operations such as padding (padding), segmentation, and concatenation are required, that is, original data in a same size needs to be obtained in a manner like segmentation, concatenation, and/or padding, and then coded to generate a coded packet.

In addition, in the network coding technology and an NR communication protocol and system, it is not supported to identify and decode, when a TB has an error, a correct data packet on the TB with the error. Therefore, to support decoding a data packet with check success on the TB with the error to restore a data packet with a check error, to transmit the correct data packet and the restored data packet to an upper layer, a corresponding design is required.

In an implementation, a header information indication may be introduced into a data packet included in a TB, and indicates, for example, a boundary location (namely, a start location or an end location) of a data packet in each TB. However, in this implementation, header overheads are introduced, overheads are high, and a design procedure is complex.

Therefore, embodiments of this application provide a data transmission method, to not only identify a correct data packet on a TB with an error, decode the correct data packet to restore a data packet with a check error, so as to improve performance of an ultra-reliable and low-latency service, reduce retransmission latency, and improve transmission reliability, but also simplify a header design, so as to reduce redundancy caused by indication information.

With reference to more accompanying drawings, the following describes in detail the technical solutions provided in this application.

The technical solutions provided in this application are described in detail by using a plurality of embodiments. For details, refer to descriptions of the following embodiments. It should be understood that the technical solutions described in the following embodiments of this application may be randomly combined to form a new embodiment, and parts that are related to a same or similar concept or solution may be mutually referenced or combined. The following describes each embodiment in detail.

Optionally, the technical solutions provided in this application may be implemented by using a first device and a second device. The first device may be a network device like a base station, or may be a terminal device like UE. The second device may be a network device like a base station, or may be a terminal device like UE. In all the embodiments of this application, the first device is used as a coding end (or a transmit end) for description, and the second device is used as a decoding end (or a receive end) for description. However, during actual application, the first device may alternatively be used as a decoding end (or a receive end), and the second device is used as a coding end (or a transmit end). This is not limited in this application. In addition, in one data transmission process, it is assumed that the first device is a coding end, and the second device is a decoding end. In another data transmission process, the first device may be a decoding end, the second device may be a coding end, or the first device is still the coding, and the second device is still the decoding end. In other words, the coding end and the decoding end are for both communication parties. In a communication process, one communication party is the coding end, and the other communication party is the decoding end.

**Embodiment 1**

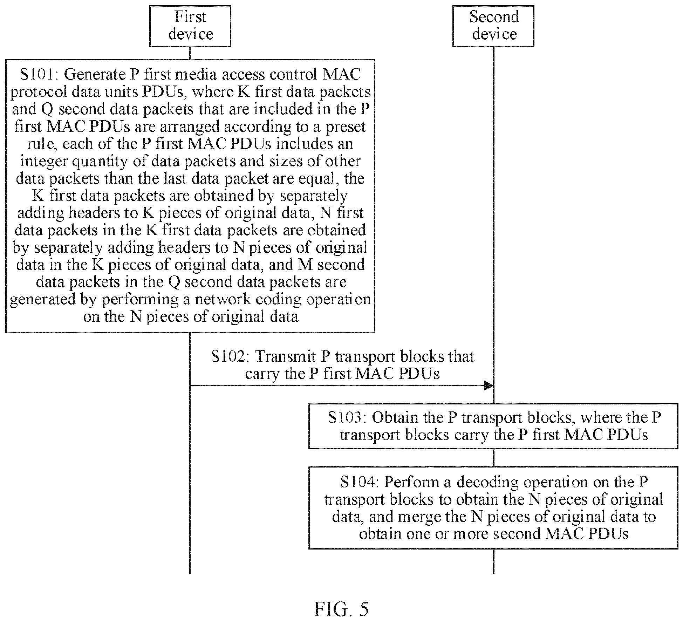

FIG. 5 is a first schematic flowchart of the data transmission method according to an embodiment of this application. As shown in FIG. 5, the data transmission method includes but is not limited to the following steps.

S101: A first device generates P first medium access control MAC protocol data units PDUs, where K first data packets and Q second data packets that are included in the P first MAC PDUs are arranged according to a preset rule, each of the P first MAC PDUs includes an integer quantity of data packets and sizes of other data packets than the last data packet are equal, the K first data packets are obtained by separately adding headers to K pieces of original data, N first data packets in the K first data packets are obtained by separately adding headers to N pieces of original data in the K pieces of original data, and M second data packets in the Q second data packets are generated by performing a network coding operation on the N pieces of original data.

S102: The first device transmits P transport blocks that carry the P first MAC PDUs.

Optionally, a data packet includes two parts: a header and a body, and the body is data in the data packet. The first data packet is an original data packet, and a header of the first data packet is an original data packet header or a coded packet header. The second data packet is a coded packet and includes a coded packet header. The original data packet may be understood as a data packet on which network coding is not performed or a data packet (namely, a system packet) whose coding coefficient is a unit vector. The coded packet may be understood as a data packet on which network coding is performed. The coded packet (herein, the second data packet) in this application includes a redundant packet, and may optionally further include a system packet. In some embodiments, the coded packet in this application and the redundant packet may be used interchangeably. Each original data packet includes one original data packet header or one coded packet header, and each coded packet includes one coded packet header. In this application, a size of the original data packet header may be equal to a size of the coded packet header.

Optionally, the preset rule indicates locations of the original data packet and the coded packet in the P first MAC PDUs. The preset rule may be autonomously negotiated by a receive end and a transmit end, or may be preset, or may be determined in another manner, so that both a receive end and a transmit end know the preset rule. In other words, the locations of the original data packet and the coded packet in the P first MAC PDUs may be inferred/deduced according to the preset rule.

Presetting in this application may be understood as setting, pre-setting, predefining, storing, pre-storing, pre-negotiating, preconfiguring, solidifying, or pre-burning. A fixed value in this application means that the value is known to both a receive party and a transmit party. A manner in which both the receive party and the transmit party know the value may be preset, for example, pre-burned, configured, or negotiated, in a protocol. This is not limited herein. Therefore, in this application, presetting and fixing may be replaced with each other with reference to descriptions of a context.

Optionally, the K pieces of original data are obtained by separately performing a segmentation operation on P second MAC PDUs. The segmentation operation herein may be performing equal-size segmentation on each second MAC PDU. It should be understood that a size of a remaining part of a second MAC PDU may be insufficient for a segmentation size, that is, a size of the last data packet of the second MAC PDU may be less than a segmentation size. In this case, the N pieces of original data are obtained by separately performing the segmentation operation on some or all of the P second MAC PDUs.

The second MAC PDU is a MAC PDU generated by using data transmitted from an RLC layer to a MAC layer. In other words, the second MAC PDU may be understood as being generated/obtained by adding MAC layer additional information (for example, a MAC control element (control element, CE)) to the data (namely, an RLC PDU) transmitted from the RLC layer to the MAC layer. Alternatively, the second MAC PDU is a MAC PDU on which network coding is not performed.

Optionally, the N pieces of original data are in one network coding group, and network coding may be performed on the network coding group (namely, the N pieces of original data) to obtain coded data (namely, coded data separately included in the M second data packets) corresponding to the network coding group. Remaining K-N pieces of original data in the K pieces of original data belong to another network coding group, and network coding may be performed on the another network coding group to obtain coded data (namely, coded data separately included in remaining Q-M second data packets in the Q second data packets) corresponding to the another network coding group.

Optionally, P, K, Q, N, and M each are a positive integer. K may be greater than or equal to N, and Q may be greater than or equal to M. When K is equal to N, and Q is equal to M, it indicates that all original data packets included in the P first MAC PDUs are from one network coding group, and all coded packets included in the P first MAC PDUs are generated by performing the network coding operation on the network coding group. Specifically, when K is equal to N, and Q is equal to M, for a specific implementation process of the data transmission method, refer to the following descriptions in Embodiment 2. Details are not described herein again. When K is not equal to N (that is, K is greater than N), or Q is not equal to M (that is, Q is greater than M), it indicates that original data packets included in the P first MAC PDUs are from two different network coding groups, or coded packets included in the P first MAC PDUs are generated by separately performing the network coding operation on two different network coding groups. Specifically, when K is not equal to N, and Q is not equal to M, for a specific implementation process of the data transmission method, refer to the following descriptions in Embodiment 3. Details are not described herein again. Certainly, when K is equal to N, and Q is equal to M, a data transmission method described in Embodiment 3 may also be used.

Optionally, one first MAC PDU is carried on one transport block. A size of the transport block is determined based on a physical resource and a scheduling algorithm.

The foregoing step S101 and step S102 are steps performed by the first device used as a transmit end. Correspondingly, a second device used as a receive end performs the following steps.

S103 : The second device obtains the P transport blocks, where the P transport blocks carry the P first MAC PDUs.

The K first data packets and the Q second data packets that are included in the P first MAC PDUs are arranged according to the preset rule. Each of the P first MAC PDUs includes the integer quantity of data packets and the sizes of the other data packets than the last data packet are equal. The K first data packets include the K pieces of original data and original data packet headers/coded packet headers. The N first data packets in the K first data packets include the N pieces of original data in the K pieces of original data and original data packet headers/coded packet headers. The M second data packets in the Q second data packets and the N pieces of original data meet a network coding relationship.

S104: The second device performs a decoding operation on the P transport blocks to obtain the N pieces of original data, and merges the N pieces of original data to obtain one or more second MAC PDUs.

Optionally, the second device receives the P transport blocks, or reads the P transport blocks from storage space (for example, a buffer). Each transport block carries one first MAC PDU. Then, the second device performs the decoding operation on the P transport blocks to obtain the N pieces of original data, and merges the N pieces of original data to obtain the one or more second MAC PDUs. A process of merging the N pieces of original data is an inverse process of performing the segmentation operation on the second MAC PDU by a coding end/the transmit end (namely, the first device). The second device may separately remove the MAC layer additional information from the obtained one or more second MAC PDUs, and then submit obtained one or more second MAC PDUs to an upper layer. Specifically, for a specific decoding process of the second device, refer to descriptions of the following embodiments. Details are not described herein again.

It can be learned that, in embodiments of this application, a network coding technology is applied to the MAC layer, so that the decoding end/receive end can restore original data, that is transmitted incorrectly, by using information about the coded packet, to improve performance of an ultra-reliable and low-latency service, reduce retransmission latency, and improve transmission reliability.

In Embodiment 1, the data transmission method provided in this application is briefly described. In Embodiments 2, 3, and 4, the data transmission method provided in this application is described in detail with reference to specific scenarios, for example, a value relationship between K and N, and a value relationship between Q and M.

## Embodiment 2

In Embodiment 2 of this application, that one or more second MAC PDUs (generated/obtained by adding MAC layer additional information to data transmitted from an RLC layer to a MAC layer) are used as a reference object, segmentation and a network coding operation are performed on the one or more second MAC PDUs with reference to a requirement of a code rate to generate a specific quantity of original data packets and a specific quantity of coded packets, and a first MAC PDU is formed by using the generated original data packets and coded packets, and then is carried on a TB for transmission are mainly described.

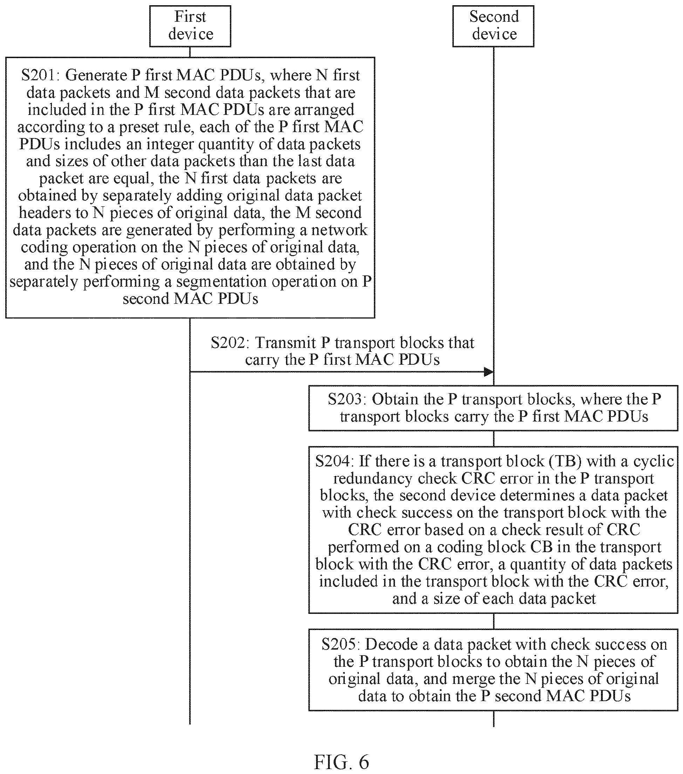

FIG. 6 is a second schematic flowchart of the data transmission method according to an embodiment of this application. As shown in FIG. 6, the data transmission method includes but is not limited to the following steps.

S201: A first device generates P first MAC PDUs, where N first data packets and M second data packets that are included in the P first MAC PDUs are arranged according to a preset rule, each of the P first MAC PDUs includes an integer quantity of data packets and sizes of other data packets than the last data packet are equal, the N first data packets are obtained by separately adding original data packet headers to N pieces of original data, the M second data packets are generated by performing a network coding operation on the N pieces of original data, and the N pieces of original data are obtained by separately performing a segmentation operation on P second MAC PDUs.

S202: The first device transmits P transport blocks that carry the P first MAC PDUs.

Optionally, the P first MAC PDUs include the N first data packets and the M second data packets in total, and the N first data packets and the M second data packets are arranged in the P first MAC PDUs according to the preset rule. In an embodiment of this application, the first data packet may be referred to as an original data packet, and the second data packet may be referred to as a coded packet, or the second data packet is referred to as a redundant packet. In an embodiment of this application, the original data packet may be understood as a data packet on which network coding is not performed, and the coded packet (or the redundant packet) may be understood as a data packet on which network coding is performed. In an embodiment of this application, each coded packet includes one coded packet header. In an embodiment of this application, each original data packet includes one original data packet header. In an embodiment of this application, a size of the original data packet header may be equal to a size of the coded packet header.

It can be learned that, in embodiments of this application, the first MAC PDU carries the redundant packet. When an original data packet on the TB received by a decoding end/receive end (namely, the second device) has an error, the redundant packet and a correctly received original data packet are jointly decoded to restore the original data packet that is received incorrectly. In this way, the TB with the error does not need to be retransmitted. This helps improve performance of an ultra-reliable and low-latency service, and reduce a quantity of times of retransmission and retransmission latency.

Optionally, each of the P first MAC PDUs includes the integer quantity of data packets and the sizes of the other data packets than the last data packet are equal. The sizes of the other data packets than the last data packet in each first MAC PDU are all equal to a preset data packet size (denoted as L). A size of the last data packet in each first MAC PDU is less than or equal to the preset data packet size (L). A size of the first MAC PDU is determined based on a size of the TB, and the size of the TB is determined based on information such as a physical resource and a modulation and coding scheme (modulation and coding scheme, MCS). Therefore, the size of the first MAC PDU may not be an integer multiple of the preset data packet size (L). Therefore, the size of the last data packet included in the first MAC PDU may be less than the preset data packet size (L). Certainly, the size of the last data packet included in the first MAC PDU may alternatively be equal to L. A data packet includes two parts: a header and a body. Therefore, a size of the data packet may be understood as a sum of size of the header and a size of the body. In an embodiment of this application, the size of the header is preset, for example, may be a fixed value. To be specific, the size of the original data packet header is equal to the size of the coded packet header. For example, both the size of the original data packet header and the size of the coded packet header are equal to a preset header size (denoted as H). Therefore, lengths of bodies of the other data packets than the last data packet in each first MAC PDU are L-H.

It can be learned that, in embodiments of this application, the size of the original data packet header and the size of the coded packet header are designed to be the same, so that the sizes of the other data packets than the last data packet of each first MAC PDU are equal. In this way, a boundary (which is a start location or an end location of a data packet) between data packets included in each first MAC PDU is clear (that is, a location of each data packet in the first MAC PDU can be deduced by using the preset data packet size L). This can support implicitly dividing each TB by using the preset data packet size L, thereby identifying location and boundary information of each data packet, and support the decoding end/receive end (namely, the second device) in identifying a correctly received data packet on the TB with the error through cyclic redundancy check (Cyclic Redundancy Check, CRC) performed on a coding block (Coding block, CB), thereby decoding correctly received related data packets jointly, to restore original data or generate feedback information. For example, the feedback information may be used to request the first device to retransmit a transport block with a CRC error. Alternatively, the feedback information may be used to request the first device to retransmit the coded packet, so that after receiving the retransmitted coded packet, the second device jointly decodes the retransmitted coded packet and the data packet with check success on the P transport blocks.

Optionally, a size of the last data packet included in an ith first MAC PDU in the P first MAC PDUs is determined based on a size (denoted as $Tbs^i$) of the ith first MAC PDU, a quantity (denoted as $n^i$) of data packets included in the ith first MAC PDU, and the preset data packet size (L). The quantity ($n^i$) of data packets included in the ith first MAC PDU is determined based on the size ($Tbs^i$) of the first MAC PDU and the preset data packet size (L). Specifically, the size of the last data packet included in the ith first MAC PDU satisfies Formula (1-1), and the quantity ($n^i$) of data packets included in the ith first MAC PDU satisfies Formula (1-2).

$$L_{sys}^i = Tbs^i - (n^i - 1) \times L \qquad (1\text{-}1)$$

$$n^i = \left\lceil \frac{Tbs^i}{L} \right\rceil \qquad (1\text{-}2)$$

$L_{sys}^i$ in Formula (1-1) indicates the size of the last data packet included in the ith first MAC PDU. A value of i is a positive integer from 1 to P (including two endpoints: 1 and P). The symbol "⌈ ⌉" in Formula (1-2) indicates rounding up. A same symbol in the following has a same meaning. Details are not described again. $Tbs^i$ in Formula (1-1) and Formula (1-2) is known, and is determined based on a size of a TB used to carry the ith first MAC PDU.

Optionally, the N first data packets included in the P first MAC PDUs are obtained by separately adding the original data packet headers or coded packet headers to the N pieces of original data, and the M second data packets included in the P first MAC PDUs are generated by performing the network coding operation on the N pieces of original data. The N pieces of original data are in the network coding group. The N pieces of original data are obtained by separately performing the segmentation operation on the P second MAC PDUs. The segmentation operation herein includes equal-size segmentation, for example, performing equal-size segmentation based on a difference (namely, L-H) between the preset data packet size (L) and the preset header size (H). It should be understood that a size of a remaining part of a second MAC PDU may be insufficient for a segmentation size (namely, L-H). The network coding operation includes operations such as coding and coded packet header adding, and may further include a padding operation. The padding operation is used to pad original data whose size is less than the difference (namely, L-H) between the preset data packet size and the preset header size in the N pieces of original data, so that a size obtained after padding is equal to L-H. The coding operation includes block coding (for example, a maximum distance separable (maximum distance separable, MDS) code or RLNC) or sliding window coding (also referred to as convolutional coding).

Optionally, the second MAC PDU is a MAC PDU generated by using data transmitted from an RLC layer to a MAC layer. In other words, the second MAC PDU is generated/obtained by adding MAC layer additional information (for example, a MAC CE) to the data (namely, an RLC PDU) transmitted from the RLC layer to the MAC layer. Alternatively, the second MAC PDU is a MAC PDU on which network coding is not performed.

Optionally, a size (denoted as $y_i$) of an ith second MAC PDU in the P second MAC PDUs is determined based on a quantity ($n^i$) of original data packets included in the ith first MAC PDU in the P first MAC PDUs, the preset data packet size (L), the preset header size (H), and the size of the last data packet included in the ith first MAC PDU. The quantity of original data packets included in the i<sup>th</sup> first MAC PDU is determined based on the quantity ($n^i$) of data packets included in the i<sup>th</sup> first MAC PDU and according to the preset rule.

If the preset rule includes that the last data packet of each first MAC PDU is an original data packet, the size of the i<sup>th</sup> second MAC PDU satisfies Formula (1-3). If it is determined, according to the preset rule, that the last data packet included in the i<sup>th</sup> first MAC PDU is a coded packet, the size of the i<sup>th</sup> second MAC PDU satisfies Formula (1-4). In short, if the last data packet included in a first MAC PDU is not an original data packet, a size of a second MAC PDU corresponding to the first MAC PDU does not include a size of a body the last data packet.

$$y_i = (n_{sys}^i - 1) \times (L - H) + L_{sys}^i - H \qquad (1\text{-}3)$$

$$y_i = (n_{sys}^i - 1) \times (L - H) \qquad (1\text{-}4)$$

Herein, $n_{sys}^i$ in Formula (1-3) and Formula (1-4) indicates the quantity of original data packets included in the i<sup>th</sup> first MAC PDU.

Optionally, P, N, and M each are a positive integer. P is a preset value, and P is set to 1, or P is set to 2, 3, 4, or the like. Alternatively, P is a semi-statically configured value. Alternatively, P is a value negotiated in advance by a transmit end and the receive end (namely, the first device and the second device), and the value of P remains unchanged at least before current communication ends. In other words, in this embodiment of this application, a quantity of second MAC PDUs used for coding is preset, that is, in this embodiment of this application, a specific quantity of original data packets and a specific quantity of coded packets are generated by using the preset quantity of second MAC PDUs as reference objects (or as a network coding group), and these original data packets and coded packets are placed on a preset quantity of TBs for transmission. N and M may be determined based on a total quantity (denoted as n) of data packets included in the P first MAC PDUs and a code rate (denoted as cr). Specifically, M satisfies Formula (1-5) or Formula (1-6), and N satisfies Formula (1-7).

$$M = \lceil n \times (1 - cr) \rceil \qquad (1\text{-}5)$$

$$M = \lfloor n \times (1 - cr) \rfloor \qquad (1\text{-}6)$$

$$\text{N} = \text{n} - \text{M} \qquad (1\text{-}7)$$

It should be understood that n indicates the quantity of total data packets included in the P first MAC PDUs, and M indicates a total quantity of coded packets included in the P first MAC PDUs. The symbol "⌈ ⌉" in Formula (1-5) indicates rounding up, and the symbol "⌊ ⌋" in Formula (1-6) indicates rounding down. A same symbol in the following has a same meaning. Details are not described again.

Certainly, a total quantity (namely, N) of original data packets may alternatively be obtained by rounding up or rounding down a product of a total quantity n of data packets included in the P first MAC PDUs and a code rate cr, that is, $N = \lfloor n \times cr \rfloor$ or $N = \lceil n \times cr \rceil$. Correspondingly, the total quantity (namely, M) of coded packets is that M=n-N. For example, in practice, to have sufficient redundancy, so that the receive end/decoding end can successfully perform decoding, the total quantity of coded packets may be calculated according to Formula (1-5), or calculated according to a formula $M = n - \lfloor n \times cr \rfloor = n - N$.

Optionally, in an embodiment of this application, the code rate (cr) may be a preset value, may be configured by using higher layer signaling, or may be configured by the transmit end and the receive end (namely, the first device and the second device) before communication at a time by using physical layer signaling. This is not limited in embodiments of this application. It can be learned from Formula (1-5) and Formula (1-6) that the code rate in this application may be different from an actual code rate. If the total quantity (namely, M) of coded packets is obtained through calculation according to Formula (1-5), the actual code rate is less than or equal to the code rate cr herein. If the quantity (namely, M) of coded packets is obtained through calculation according to Formula (1-6), the actual code rate is greater than or equal to the code rate cr herein.

It should be understood that the code rate cr may be a ratio of the quantity of original data packets to the quantity of total data packets. In an embodiment of this application, the quantity of total data packets may be a sum of the quantity of original data packets and a quantity of redundant packets.

Optionally, the total quantity (n) of data packets included in the P first MAC PDUs is a sum of quantities of data packets included in the P first MAC PDUs. A mathematical expression of the total quantity (n) is shown in Formula (1-8).

$$n = \sum_{i=1}^{P} n^i = n^1 + n^2 + n^3 + \ldots + n^P \qquad (1\text{-}8)$$

It should be understood that, if P is equal to 1, n in Formula (1-8) is equal to $n^1$. In other words, when P is equal to 1, N is the quantity of original data packets included in the first MAC PDU, and M is the quantity of coded packets included in the first MAC PDU.

Optionally, the size of the original data packet header is H (for example, 2 bytes), and the header may include only a reserved field, or may include one or more of an original/coded (original/coded, O/C) field and a block identifier (block ID) field/an offset (offset) field. The size of the coded packet header is also H (for example, 2 bytes), and the coded packet header includes a coding factor (coeff ID) field that indicates an index of a codebook. The codebook herein may be a Vandermonde codebook, a Cauchy codebook, a random code book, or the like. It should be understood that, in this application, the coding factor field and the coeff ID field may be used interchangeably. The coded packet header may further include one or more of an O/C field and a block ID field/an offset field. The O/C field indicates whether a data packet in which the O/C field is located is an original data packet or a coded packet. For example, when the O/C field is set to 0, it indicates that the data packet in which the O/C field is located is an original data packet. When the O/C field is set to 1, it indicates that the data packet in which the O/C field is located is a coded packet. Alternatively, when the O/C field is set to 1, it indicates that the data packet in which the O/C field is located is an original data packet. When the O/C field is set to 0, it indicates that the data packet in which the O/C field is located is a coded packet. It should be understood that, when the O/C field in the original data packet header is set to a first value (for example, 0), the O/C field that is set to the first value is first indication information, and indicates that the data packet in which the O/C field is located is an original data packet. Similarly, when the O/C field in the coded packet header is set to a second value (for example, 1), the O/C field that is set to the second value is second indication information, and indicates that the data packet in which the O/C field is located is a coded packet. The offset field indicates an offset value of a first MAC PDU, in which the offset field is located in the P first MAC PDUs, relative to a start first MAC PDU. The block identifier (Block ID) field indicates an identifier or a sequence number (sequence number, SN) of a network coding group in which a data packet including the block ID field is located. It should be understood that an "indication" in this application may be an explicit indication, or may be an implicit indication. This is not limited in this application.

Optionally, if the coding operation is sliding window coding, and a size of a sliding window for sliding window coding is fixed or configured, no new field may be added to the coded packet header. If a size of a sliding window for sliding window coding is variable, the coded packet header further includes an association depth field. The association depth field indicates a quantity of first MAC PDUs before a first MAC PDU in which the association depth field is located. In other words, the association depth field indicates a quantity of historical first MAC PDUs that include original data coded together with original data in the first MAC PDU in which the association depth field is located. In other words, which MAC PDUs that include original data coded together are learned by the decoding end/receive end by using the association depth field, to support decoding by the decoding end/receive end. For example, it is assumed that the quantity indicated by the association depth field is 1, it indicates that the original data in the first MAC PDU in which the association depth field is located and original data in one first MAC PDU before the first MAC PDU are coded together. It is assumed that the quantity indicated by the association depth field is 2, it indicates that the original data in the first MAC PDU in which the association depth field is located and original data in two first MAC PDUs before the first MAC PDU are coded together.

It can be learned that header overheads of the data packet designed in embodiments of this application are low. An effect of performing blind detection on a MAC PDU with an error or the TB with the error can be achieved, to obtain specific location and boundary information of each data packet. The correct data packet on the TB with the error can be effectively obtained by using a result of cyclic redundancy check (Cyclic Redundancy Check, CRC) performed on the coding block (Coding block, CB) of the TB, to perform decoding or generate the feedback information. In addition, designs of the original data packet header and the coded packet header in embodiments of this application are simple and clear, and concatenation information and field information such as an SN of each data packet do not need to be introduced, to reduce redundancy of header information. The reserved field in the original data packet header supports subsequent extension.

Optionally, the preset rule includes: The last data packet included in each of the P first MAC PDUs is an original data packet. Under this preset rule, the original data packet header includes an O/C field, and the coded packet header includes an O/C field and a coding factor field. Optionally, the original data packet header and the coded packet header each further include a block ID field/an offset (offset) field.

It can be learned that, in embodiments of in this application, the last data packet of each first MAC PDU is restricted to being an original data packet, to fully use transmission resources. If the last data packet is a coded packet, and the size of the last data packet is less than the preset data packet size (L), it indicates that the data packet is incomplete. Therefore, the data packet cannot be decoded and cannot be restored by using another correct data packet neither. However, if the last data packet of the first MAC PDU is an original data packet, although the size of the original data packet may also be less than the preset data packet size, if the original data packet is correctly transmitted, the original data packet can be decoded to restore other original data that is transmitted incorrectly. If the original data packet is transmitted incorrectly, original data of the original data packet can also be restored by using another correctly transmitted data packet, to fully use the transmission resources.

Optionally, the preset rule includes: If a size of the last data packet included in a first MAC PDU is less than the preset data packet size, the last data packet is an original data packet; and if a size of the last data packet included in the last first MAC PDU in the P first MAC PDUs is equal to the preset data packet size (L), the last data packet may be a coded packet, or certainly, may be an original data packet. In other words, for first P-1 first MAC PDUs (P-1 first MAC PDUs other than the last first MAC PDU), the last data packet included in each first MAC PDU is an original data packet regardless of whether the size of the last data packet is less than or equal to the preset data packet size. The last data packet included in the last first MAC PDU may be a coded packet only when the size of the last data packet is exactly equal to the preset data packet size. Under this preset rule, the original data packet header includes an O/C field, and the coded packet header includes an O/C field and a coding factor field. Optionally, the original data packet header and the coded packet header each further include a block ID field/an offset (offset) field.

It can be learned that, in embodiments of this application, the last data packet of each first MAC PDU is not strictly restricted to being an original data packet, but whether the last data packet is an original data packet or a coded packet is determined by comparing the size of the last data packet with L. This implementation is more flexible.

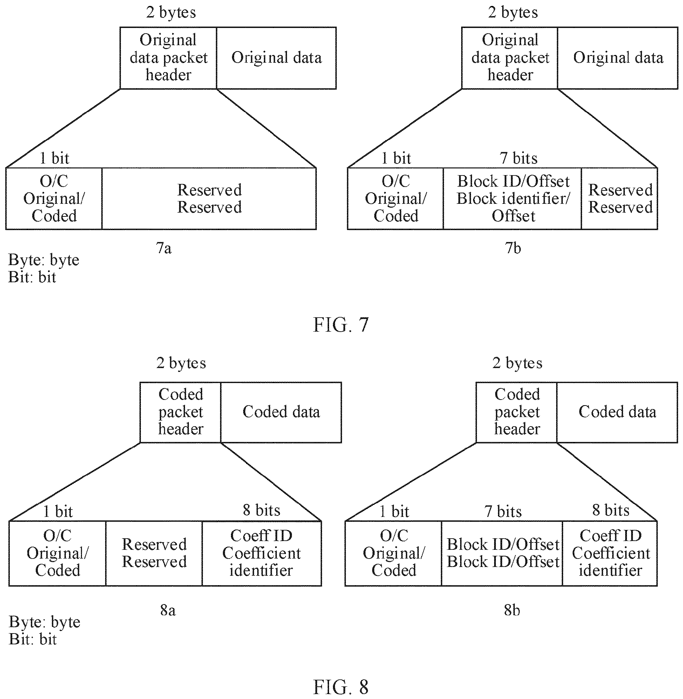

For example, FIG. 7 is a schematic diagram of a format of an original data packet header according to an embodiment of this application. As shown in 7a in FIG. 7, a length of the original data packet header is 2 bytes (bytes), and the original data packet header includes an O/C field. A length of the O/C field may be 1 bit (bit), and remaining bits (15 bits in total) are reserved. As shown in 7b in FIG. 7, a length of the original data packet header is 2 bytes, and the original data packet header includes an O/C field and a block ID field/an offset field. A length of the O/C field may be 1 bit (bit), a length of the block ID field/offset field may be 7 bits, and remaining bits (8 bits in total, 1 byte) are reserved. FIG. 8 is a schematic diagram of a format of a coded packet header according to an embodiment of this application. As shown in 8a in FIG. 8, a length of the coded packet header is 2 bytes, and the coded packet header includes an O/C field and a coeff ID field. A length of the O/C field may be 1 bit, a length of the coeff ID field may be 8 bits, and remaining bits (7 bits in total) are reserved. As shown in 8b in FIG. 8b, a length of the coded packet header is 2 bytes, and the coded packet header includes an O/C field, a block ID field/an offset field, and a coeff ID field. A length of the O/C field may be 1 bit, a length of the block ID field/offset field may be 7 bits, and a length of the coeff ID field may be 8 bits. It should be understood that the "size" and the "length" in this application may be used interchangeably, and the "size" and the "length" is in a unit of a bit (bit), a byte (byte), or the like. This is not limited herein.

Optionally, the preset rule includes: (1) The last data packet included in each of the P first MAC PDUs is an original data packet. Alternatively, if a size of the last data packet included in the last first MAC PDU in the P first MAC PDUs is equal to the preset data packet size (L), the last data packet may be a coded packet. If a size of the last data packet included in any first MAC PDU in the P first MAC PDUs is less than a preset data packet size (L), the last data packet included in the first MAC PDU is an original data packet. (2) An original data packet is before a coded packet in other data packets on the P first MAC PDUs than the last data packet included in each first MAC PDU. In other words, other data packets are arranged in a sequence in which the original data packet is before the coded packet. If the decoding end/receive end (namely, the second device) knows the preset data packet size L and the code rate cr (that is, equivalently knows the total quantity N of original data packets and the total quantity M of coded packets), under this preset rule, the original data packet header may include only the reserved field, and the coded packet header may include only the coding factor field. In other words, under this rule, both the O/C field and the block ID field/offset field are optional.

It can be learned that, in embodiments of this application, an arrangement ranking of each data packet on the P first MAC PDUs is restricted, so that no field needs to be carried in the original data packet header, to reduce signaling overheads.

The foregoing describes the structure and the feature of the first MAC PDU. The following describes a possible implementation in which the first device generates a first MAC PDU that satisfies the feature and the structure.

Step 1: The first device determines, based on a size of the first MAC PDU and the preset data packet size (L), a quantity of data packets included in the first MAC PDU.

Optionally, one first MAC PDU needs to be carried by one TB. Therefore, there is a one-to-one correspondence between a first MAC PDU and a TB. Therefore, the first device determines, based on a size of a TB, a size of a first MAC PDU that can be carried on the TB, and then determines, based on the size of the first MAC PDU and the preset data packet size (L), a quantity of data packets that can be included in the first MAC PDU. For example, the quantity of data packets that can be included in the first MAC PDU is calculated according to Formula (1-2).

Step 2: The first device determines, based on the quantity of data packets included in the first MAC PDU, the size of the first MAC PDU, and the preset data packet size (L), a size of the last data packet included in the first MAC PDU.

Optionally, the size of the first MAC PDU may not be an integer multiple of the preset data packet size (L). Therefore, a size of the last data packet included in the first MAC PDU may be less than the preset data packet size (L). Therefore, a specific size of the last data packet included in the first MAC PDU needs to be obtained through calculation. Specifically, the first device obtains, through calculation according to Formula (1-1), the size of the last data packet included in the first MAC PDU.

Optionally, the last data packet included in the first MAC PDU may not be equal to L. Therefore, to improve transmission resource utilization, the last data packet in each first MAC PDU may be restricted to being an original data packet. In this way, the last data packet (which is an original data packet) of the first MAC PDU may be decoded by the decoding end/receive end.

Step 3: The first device determines a size of a second MAC PDU corresponding to the first MAC PDU, requests data from the RLC layer based on the size of the second MAC PDU, and adds MAC additional information to the data (an RLC PDU) requested from the RLC layer, to generate the second MAC PDU.

Optionally, for the first MAC PDU, the first device may obtain, through calculation, the size of the second MAC PDU according to Formula (1-3) or Formula (1-4), next, obtain, through calculation by using the second MAC PDU, a size of the data (namely, the RLC PDU) to be requested from the RLC layer, and then request the data from the RLC layer. Specifically, the size of the RLC PDU is obtained by subtracting, from the size of the second MAC PDU, encapsulation information (namely, the MAC layer additional information) added at the MAC layer. Whether the first device specifically calculates the size of the second MAC PDU according to Formula (1-3) or calculates the size of the second MAC PDU according to Formula (1-4) may be determined according to the preset rule. If it is determined according to the preset rule that the last data packet included in the first MAC PDU is a coded packet, the first device performs calculation according to Formula (1-4). On the contrary, if it is determined according to the preset rule that the last data packet included in the first MAC PDU is an original data packet, the first device performs calculation according to Formula (1-3).

Step 4: The first device repeatedly performs step 1 to step 3, to obtain P second MAC PDUs and a total quantity (n) of data packets included in P first MAC PDUs.

Optionally, if P is equal to 1, step 4 may not exist. In other words, if P is equal to 1, step 1 to step 3 do not need to be repeatedly performed.

Optionally, if P is greater than 1, step 1 to step 3 need to be performed P times, to obtain the P second MAC PDUs and the quantity of data packets separately included in the P first MAC PDUs. The first device may obtain, through calculation according to Formula (1-8), the total quantity (n) of data packets included in the P first MAC PDUs. For each first MAC PDU, the first device may obtain a size of a second MAC PDU corresponding to the first MAC PDU, to determine a size of data that needs to be requested from the RLC layer, and then request the data in the corresponding size from the RLC layer, to generate the P second MAC PDUs. P is a known value. Header sizes of the data packets included in the P first MAC PDUs are equal, that is, equal to the preset header size (H).

Step 5: The first device determines, based on the total quantity (n) of data packets included in the P first MAC PDUs and the code rate (cr), a total quantity (N) of original data packets and a total quantity (M) of coded packets that are (can be) included in the P first MAC PDUs.

Optionally, the first device may calculate, according to Formula (1-5) or formula (1-6), the total quantity (M) of coded packets that are (can be) included in the P first MAC PDUs, that is, determine a value of M. The first device may calculate, according to Formula (1-7), the total quantity (N) of original data packets that are (can be) included in the P first MAC PDUs, that is, determine a value of N.

Step 6: The first device performs a segmentation operation on each of the P second MAC PDUs to obtain N pieces of original data.

Optionally, for each second MAC PDU, the first device performs equal-size segmentation based on the difference (namely, L-H) between the preset data packet size (L) and the preset header size (H). It should be understood that a size of a remaining part of a second MAC PDU may be insufficient for the segmentation size (namely, L-H), that is, a size of the last data packet of the second MAC PDU may be less than the segmentation size. As a result, sizes of the N pieces of original data obtained through segmentation may not be completely equal.

Step 7: The first device adds original data packet headers to the N pieces of original data to obtain N first data packets, and performs a network coding operation on the N pieces of original data to generate M second data packets.

Optionally, the first device adds the original data packet header to each piece of original data to obtain an original data packet (namely, the first data packet). The sizes of the N pieces of original data obtained through the foregoing segmentation operation are not completely equal, but sizes of a plurality of pieces of data that need to be coded during network coding are the same. Therefore, the first device first performs a padding operation on original data whose size is less than the difference (namely, L-H) between the preset data packet size (L) and the preset header size (H) in the N pieces of original data, so that a size of padded data is equal to L-H. Then, the first device performs coding, for example, block coding or sliding window coding, on N pieces of data whose size is (L-H) to generate M pieces of coded data. The first device separately adds coded packet headers to the M pieces of coded data to obtain M coded packets (namely, the second data packets). For designs of the original data packet header and the coded packet header, refer to the foregoing related descriptions. Details are not described herein again.

Step 8: The first device constructs the P first MAC PDUs according to the preset rule by using the N first data packets and the M second data packets.

Optionally, the first device places an original data packet as the last data packet and arranges other data packets in a sequence, in which an original data packet is before a coded packet, in each first MAC PDU to construct the P first MAC PDUs

Step 9: The first device carries the P first MAC PDUs on P TBs, and transmits the P TBs.

Optionally, in an embodiment of this application, a network coding (network coding, NC) function may be added to the MAC layer. Step S201 and step S202 (or step S1 to step S9) may be implemented at the MAC layer in the first device.

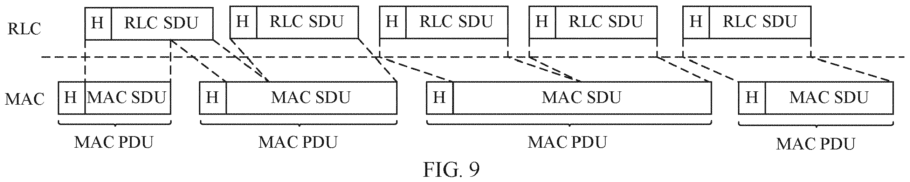

FIG. 9 is a schematic diagram of a protocol stack between an RLC layer and a MAC layer according to an embodiment of this application. In FIG. 9, for example, an NC function is located at the MAC layer. As shown in FIG. 9, an RLC layer entity (namely, an entity implementing an RLC layer function) segments some RLC SDUs to form RLC PDUs, and transmits the RLC PDUs to a MAC layer. A MAC layer entity (namely, an entity implementing a MAC layer function) performs a concatenation operation on the RLC PDUs (also referred to as MAC SDUs), and adds MAC layer additional information (for example, a MAC control element (control element, CE)), to obtain MAC PDUs, namely second MAC PDUs.

The second MAC PDU is used as original data for network coding. Network coding is performed on and a coded packet header is added to the second MAC PDU to generate a coded packet. An original data packet header is added to the original data to generate an original data packet. Then, a first MAC PDU is formed by using the original data packet and the coded packet, and then is carried on a TB for transmission. One TB is used to carry one first MAC PDU, and a size (or a length) of the TB is determined by a quantity of physical resources allocated to the TB and a modulation and coding scheme (modulation and coding scheme, MCS). For determining of the size of the TB, refer to a solution in the conventional technology or a solution that appears in the future. This is not limited herein.

It can be learned that, in embodiments of this application, a network coding scheme is implemented at the MAC layer. Segmentation and concatenate do not need to be performed on the MAC PDU obtain an equivalent data packet for coding to generate a coded packet. A header further does not need to carry indication information for segmentation and concatenation. This reduces header overheads, and reduces implementation complexity. In embodiments of this application, each first MAC PDU is further divided into regular data packets by using the size of the first MAC PDU and the preset data packet size L (namely, the sizes of other data packets than the last data packet are equal to L, and the size of the last data packet may also be obtained through calculation). This helps the decoding end/receive end identify the boundary information of each data packet by using the size of the TB, thereby supporting the decoding end/receive end in obtaining the correct data packet from the TB, that is received incorrectly, for decoding or generating the feedback information.

To better understand a data transmission procedure of the coding end/transmit end (namely, the first device), the following provides example descriptions with reference to several examples.

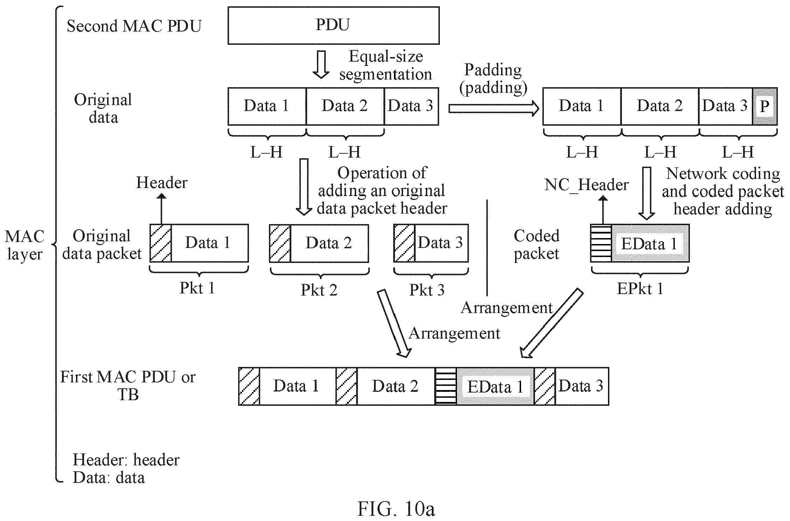

In an example, P is equal to 1. FIG. 10a is a first schematic diagram of data transmission by the coding end according to an embodiment of this application. As shown in FIG. 10a, for example, an NC function is located at the MAC layer. It is assumed that a quantity of data packets included in a first MAC PDU obtained through calculation is 4, and M and N obtained through calculation based on the quantity of data packets included in the first MAC PDU and the code rate (cr) are respectively 1 and 3, that is, the first MAC PDU includes one coded packet and three original data packets in total. The MAC layer calculates, according to Formula (1-3) or formula (1-4), a size of original data (namely, a second MAC PDU) that can be included in the first MAC PDU, and requests the data from an upper layer. After receiving the second MAC PDU transmitted from the upper layer, the MAC layer performs equal-size segmentation on the second MAC PDU based on the difference (namely, L-H) between the preset data packet size (L) and the preset header size (H), to obtain three pieces of original data that are respectively represented as data 1, data 2, and data 3. A size of the data 1 is equal to that of the data 2, and is equal to L-H, and a size of the data 3 is less than L-H. Original data packet headers (for example, headers in FIG. 10a) are respectively added to the data 1, the data 2, and the data 3 to obtain original data packets Pkt 1 to Pkt 3. A size of the data 3 is less than L-H. Therefore, the data 3 needs to be padded (padding), so that a size obtained after padding is equal to L-H. Then, block coding is performed on the data 1, the data 2, and padded data 3 to generate one piece of coded data EData 1. A coded packet header (for example, an NC_Header in FIG. 10a) is added to the coded data EData 1 to obtain a coded packet EPkt 1. The last data packet is fixed as an original data packet, for example, an original data packet Pkt 3 in FIG. 10a, and other data packets are arranged in a sequence in which the original data packets Pkt 1 and Pkt 2 are before the coded packet EPkt 1, to form the first MAC PDU. The first MAC PDU is carried on a TB for transmission.

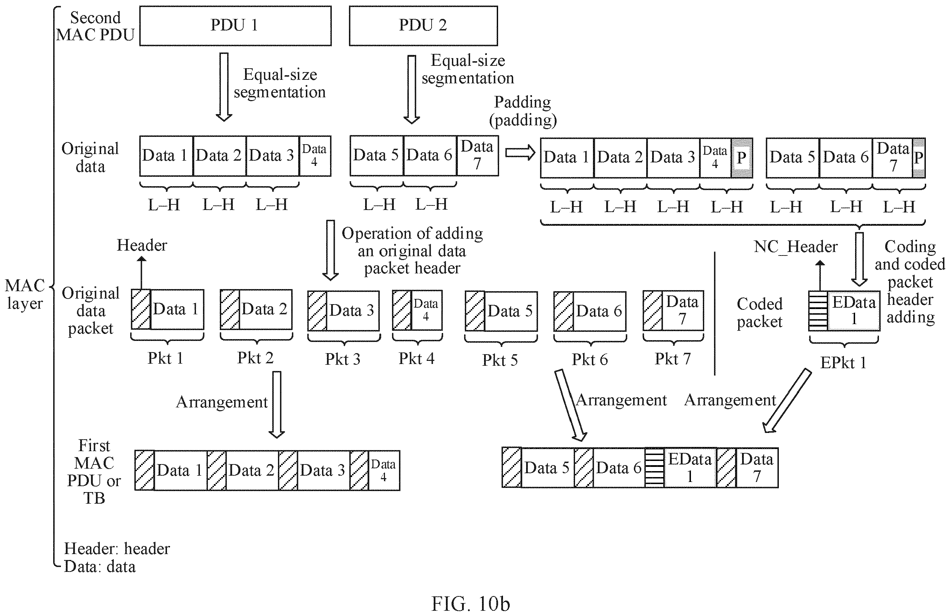

In another example, P is equal to 2. FIG. 10b is a second schematic diagram of data transmission by the coding end according to an embodiment of this application. As shown in FIG. 10b, for example, an NC function is located at the MAC layer. It is assumed that a quantity of total data packets included in two first MAC PDUs obtained through calculation is 8, and M and N obtained through calculation based on the quantity of data packets included in the two first MAC PDU and the code rate (cr) are respectively 1 and 7, that is, the first MAC PDUs include one coded packet and seven original data packets in total. The MAC layer calculates, according to Formula (1-3) or formula (1-4), a size of original data (namely, a second MAC PDU) that can be included in each first MAC PDU, and requests the data from an upper layer. After receiving two second MAC PDUs (for example, a PDU 1 and a PDU 2 in FIG. 10b) transmitted from the upper layer, the MAC layer performs equal-size segmentation on each second MAC PDU based on the difference (namely, L-H) between the preset data packet size (L) and the preset header size (H). Equal-size segmentation is performed on the PDU 1 to obtain four pieces of original data that are respectively represented as data 1 to data 4. Equal-size segmentation is performed on the PDU 2 to obtain three pieces of original data that are respectively represented as data 5 to data 7. Sizes of the data 1 to data 3, the data 5, and data 6 are all equal to L-H, and sizes of the data 4 and the data 7 are less than L-H. Original data packet headers (for example, headers in FIG. 10b) are respectively added to the data 1 to the data 7 to obtain original data packets Pkt 1 to Pkt 7. The sizes of the data 4 and the data 7 are less than L-H. Therefore, the data 4 and the data 7 need to be padded (padding), so that sizes of padded data 4 and padded data 7 are equal to L-H. Then, the data 1 to the data 3, the data 5, the data 6, the padded data 4, and the padded data 7 are coded, to generate one piece of coded data EData 1. Coding herein may be block coding, or may be sliding window coding. In FIG. 10b, block coding is used as an example. A coded packet header (for example, an NC_Header in FIG. 10b) is added to the coded data EData 1 to obtain a coded packet EPkt 1. The last data packets of the two first MAC PDUs are fixed as original data packets, for example, an original data packet Pkt 4 and an original data packet Pkt 7 in FIG. 10b. Other data packets are arranged in a sequence in which original data packets Pkt 1 to Pkt 3, Pkt 5, and Pkt 6 are before the coded packet EPkt 1, to separately form the two first MAC PDUs. The two first MAC PDUs are respectively carried on TBs for transmission.

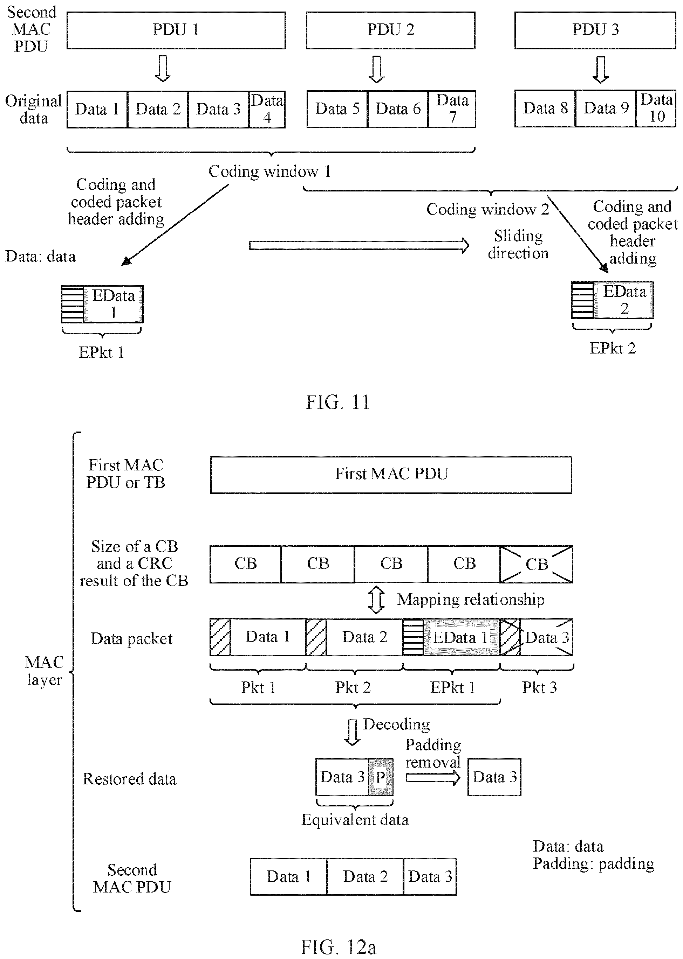

FIG. 11 is a schematic diagram of sliding window coding according to an embodiment of this application. For example, a size of a sliding window is a size of two second MAC PDUs, and a size of sliding at a time is one second MAC PDU, that is, two adjacent second MAC PDUs are jointly coded. As shown in FIG. 11, two second MAC PDUs (for example, a PDU 1 and a PDU 2 in FIG. 11) in a coding window 1 are jointly coded to generate a coded packet EPkt 1. It should be understood that, before the PDU 1 and the PDU 2 are jointly coded, a quantity (namely, a value of N) of original data packets coding and a quantity (namely, a value of M) of coded packets, obtained through coding, during current coding need to be determined. Next, the coding window slides from a location of the coding window 1 to a location of a coding window 2, to code two second MAC PDUs (for example, the PDU 2 and a PDU 3 in FIG. 11) in the coding window 2 jointly, that is, code original data, namely, data 5 to data 7, in the PDU 2 and original data, namely, data 8 to data 10, in the PDU 3 jointly to generate a coded packet EPkt 2. By analogy, the coding windows may have different code rates. It should be understood that, before the PDU 2 and the PDU 3 are jointly coded, a quantity (namely, a value of N) of original data packets and a quantity (namely, a value of M) of coded packets, obtained through coding, during current coding also need to be determined. Herein, for a manner of determining N and M, refer to the foregoing descriptions. Details are not described herein again. It should be further understood that historically coded original data and uncoded original data are coded together during sliding window coding, and therefore, when sliding window coding is used, a field (referred to as an association depth field) may be further carried in a coded packet header, and indicates that original data in a first MAC PDU in which the coded packet is located and original data in several historical first MAC PDUs are coded together. For example, in FIG. 11, when an association depth field in a coded packet header in the coded packet EPkt 2 is set to 1, it indicates that a first MAC PDU in which the coded packet EPkt 2 is located and original data in one historical first MAC PDU are coded together.

Due to factors such as interference and noise, not all TBs transmitted by the first device can be correctly received by the second device. In other words, a packet loss may occur in a transmission process. Therefore, in embodiments of this application, network coding is introduced to the MAC layer of the transmit end/coding end, so that when receiving sufficient (at least N pieces of) correct and linearly unrelated data packets, the second device can restore lost original data by using these data packets. The following continues to describe a data receiving procedure of the decoding end, namely, the second device, in FIG. 6.

S203: The second device obtains the P transport blocks, where the P transport blocks carry the P first MAC PDUs. The N first data packets and the M second data packets that are included in the P first MAC PDUs are arranged according to the preset rule. Each of the P first MAC PDUs includes the integer quantity of data packets and the sizes of the other data packets than the last data packet in each first MAC PDU are equal. The N first data packets include the N pieces of original data and headers. The M second data packets and the N pieces of original data satisfy a network coding relationship. The N pieces of original data are obtained by segmenting the P second MAC PDUs.

S204: If there is a transport block (TB) with a cyclic redundancy check CRC error in the P transport blocks, the second device determines a data packet with check success on the transport block with the CRC error based on a check result of CRC performed on a coding block CB in the transport block with the CRC error, a quantity of data packets included in the transport block with the CRC error, and a size of each data packet.

S205: The second device decodes a data packet with check success on the P transport blocks to obtain the N pieces of original data, and merges the N pieces of original data to obtain the P second MAC PDUs.

Optionally, each time receiving a transport block, a physical layer (PHY layer) of the second device may perform CRC on the transport block and CRC on the CB. Alternatively, after receiving the P transport blocks, a PHY layer of the second device separately performs CRC on each transport block and CRC on the CB. P is a positive integer, and P is a preset value, a value configured by using higher layer signaling, or a value negotiated in advance by the transmit end and the receive end (namely, the first device and the second device). If CRC performed on a transport block succeeds, it indicates that all information on the transport block is correct. In this case, the PHY layer of the second device may submit the transport block to a MAC layer. The MAC layer of the second device may perform, based on the preset data packet size (L), equal-size segmentation on a first MAC PDU carried on the transport block, and store, in storage space (for example, a buffer), a data packet (namely, a correct data packet) obtained through segmentation.

If CRC performed on a transport block has an error, the PHY layer of the second device still submits the transport block to a MAC layer for next processing. In other words, in embodiments of this application, regardless of whether the CRC performed on TB succeeds, the PHY layer submits the TB to the MAC layer. Then, the MAC layer of the second device obtains, through calculation according to Formula (1-2) and based on a size (denoted as $Tbs^j$) of the first MAC PDU carried on the transport block with the CRC error and the preset data packet size (L), the quantity (denoted as $n^i$) of data packets included in the transport block. Sizes of first ($n^j$-1) data packets included in the transport block are all the preset data packet size L. The MAC layer of the second device may determine, based on the quantity ($n^i$) of data packets included in the transport block, the size ($Tbs^j$) of the first MAC PDU carried on the transport block, and the preset data packet size (L), a size (denoted as $L'_{sys}$) of the last data packet included in the transport block. Herein, $L'_{sys}=Tbs^j-(n^j-1)\times L$. A value range of j is the same as a value range of i, and both are positive integers from 1 to P (including the two endpoints: 1 and P). Herein, j and i may be equal or may not be equal. The MAC layer of the second device determines a mapping relationship between each coding block and a data packet based on the size of each data packet on the transport block and a size of each coding block in the transport block. The MAC layer of the second device determines, based on a check result of each coding block at the PHY layer and the mapping relationship between each coding block and the data packet, a data packet with check success on the transport block with the CRC error, or may determine a data packet with a check error on the transport block with the CRC error. The second device may determine, according to the preset rule, whether the data packet with the check error on the transport block with the CRC error is an original data packet. If the data packet with the check error on the transport block with the CRC error is not an original data packet, that is, the data packet with the check error on the transport block with the CRC error is a coded packet, the data packet with check success on the transport block with the CRC error may be directly stored in the storage space (for example, the buffer).

If the data packet with the check error on the transport block with the CRC error is an original data packet, step S205 is performed. Specifically, the MAC layer of the second device obtains the data packet with check success on the P transport blocks. If a quantity of data packets with check success on the P transport blocks is greater than or equal to N, based on the total quantity (n) of data packets included in the P transport blocks and the code rate (cr), the MAC layer of the second device calculates the total quantity (M) of coded packets according to Formula (1-5) or Formula (1-6) and calculates the total quantity (N) of original data packets according to Formula (1-7). In an implementation, if headers (which are original data packet headers and coded packet headers) of the data packets include no O/C field, the MAC layer of the second device determines, according to the preset rule and based on the total quantity (M) of coded packets and the total quantity (N) of original data packets, which data packets are original data packets and which data packets are coded packets in the data packets with check success on the P transport blocks. In another implementation, if headers (which are original data packet headers and coded packet headers) of the data packets each includes the O/C field, the MAC layer of the second device determines, based on an O/C field in a header of each data packet with check success on the P transport blocks, whether the data packet is an original data packet or a coded packet. The MAC layer of the second device obtains coding factor fields in coded packet headers of coded packets with check success on the P transport blocks, and constructs a coefficient factor matrix according to indications of these coding factor fields and based on an original data packet with check success on the P transport blocks. A coding coefficient corresponding to the original data packet may be a unit vector. The MAC layer of the second device may decode original data in the original data packet with check success and coded data in the coded packet on the P transport blocks by using the coefficient factor matrix, to restore original data in an original data packet with a check error. It should be understood that, if the original data packet with the check error is the last data packet on the transport block with the CRC error, and a size of original data in the last data packet included in the transport block is less than L-H (namely, $L'_{sys}$-H<L-H, which is equivalent to $L'_{sys}<L$), a padding bit padded during coding needs to be removed from restored original data. There are a total of N pieces of original data, including the restored original data and original data obtained after original data packet headers are removed from all original data packets with check success on the P transport blocks. The MAC layer of the second device merges the N pieces of original data (if there is a padding bit, the N pieces of original data herein are original data obtained after the padding bit is removed) to obtain the P second MAC PDUs. Specifically, the N pieces of original data are merged in a sequence, in the first MAC PDU, of the original data packets corresponding to the N pieces of original data. The MAC layer of the second device separately removes the MAC layer additional information from the P second MAC PDUs, and then submits obtained P second MAC PDUs to an upper layer (for example, an RLC layer) for further processing.

If a quantity of data packets with check success on the P transport blocks is less than N, it indicates that a quantity of correctly received and linearly unrelated data packets is insufficient to support decoding, and the second device may generate the feedback information and feed back the feedback information to the first device. For example, the feedback information may be used to request the first device to retransmit the transport block with the CRC error. Alternatively, the feedback information may be used to request the first device to retransmit the coded packet (a quantity of to-be-retransmitted coded packets is greater than or equal to a difference between N and the quantity of data packets with check success on the P transport blocks), so that after receiving the retransmitted coded packet, the second device jointly decodes the retransmitted coded packet and the data packet with check success on the P transport blocks.

Certainly, if there is no transport block with the CRC error in the P transport blocks, or the data packet with the check error on the transport block with the CRC error is a coded packet, the MAC layer of the second device may directly perform, based on the preset data packet size (L), equal-size segmentation on the P first MAC PDUs carried on the P transport blocks, and separately remove the original data packet headers from the N original data packets obtained through segmentation, to obtain the N pieces of original data. Then, the second device merges the N pieces of original data to obtain the P second MAC PDUs.

In other words, a data transmission process of the decoding end includes: After receiving the TB that carries the first MAC PDU, the receive end (namely, the second device) first performs CRC, for a TB with CRC check success, may directly obtain all original data packets and coded packets, and perform a corresponding decoding operation. For the TB with the check error, a size Tbs of the TB with the CRC error is obtained, and the quantity of data packets included in the TB and the size of each data packet are obtained through deduction based on the preset data packet size L and according to Formula (1-2); header parsing is performed on each data packet, and whether the data packet is an original data packet or a coded packet is determined based on an O/C field; whether each CB is correct may be determined based on a CB CRC result of the TB, and then whether the data packet is correct is determined based on a check result of the CB and the mapping relationship between the CB and the data packet; and the correct data packet is obtained, and decoding is performed, or feedback information is generated.

To better understand a data transmission procedure of the decoding end/receive side (namely, the second device), the following provides example descriptions with reference to two examples.

In an example, P is equal to 1. FIG. 12a is a first schematic diagram of data transmission by the decoding end according to an embodiment of this application. As shown in FIG. 12a, for example, an NC function is located at the MAC layer. A first MAC PDU carried on a TB includes four data packets: original data packets Pkt 1 to Pkt 3 and a coded packet EPkt 1. The coded packet EPkt 1 is generated by coding original data in the original data packets Pkt 1 to Pkt 3 together. Although the TB has the CRC error, a boundary and a location of each data packet may be deduced based on the preset data packet size L. Then, with reference to a CB CRC result corresponding to the TB, it is assumed that a 5th CB is incorrect. According to a size of the CB and the mapping relationship between the CB and the data packet, it can be learned that the original data packet Pkt 3 is incorrect, and original data packets Pkt 1 and Pkt 2 and the coded packet EPkt 1 are correct. Then, the correct original data packets (Pkt 1 and Pkt 2) and the coded packet (EPkt 1) are decoded together, to restore equivalent data whose length is L-H. The original data packet Pkt 3 is the last data packet and an actual length ($L'_{sys}$) is less than L. Therefore, data whose length is equal to $L'_{sys}$-H needs to be intercepted, based on an actual length (namely, $L'_{sys}$-H) of original data, namely, data 3, in the original data packet Pkt 3, from a header (herein, a 1st bit of the equivalent data packet) of the equivalent data whose length is L-H, and the data is used as the original data, namely, the data 3. In other words, a padding bit in the equivalent data whose length is L-H is removed, to obtain actual original data, namely, the data 3. After a complete second MAC PDU is correctly restored, MAC layer additional information is removed from a restored second MAC PDU, and then an obtained second MAC PDU is submitted to the upper layer for further processing.

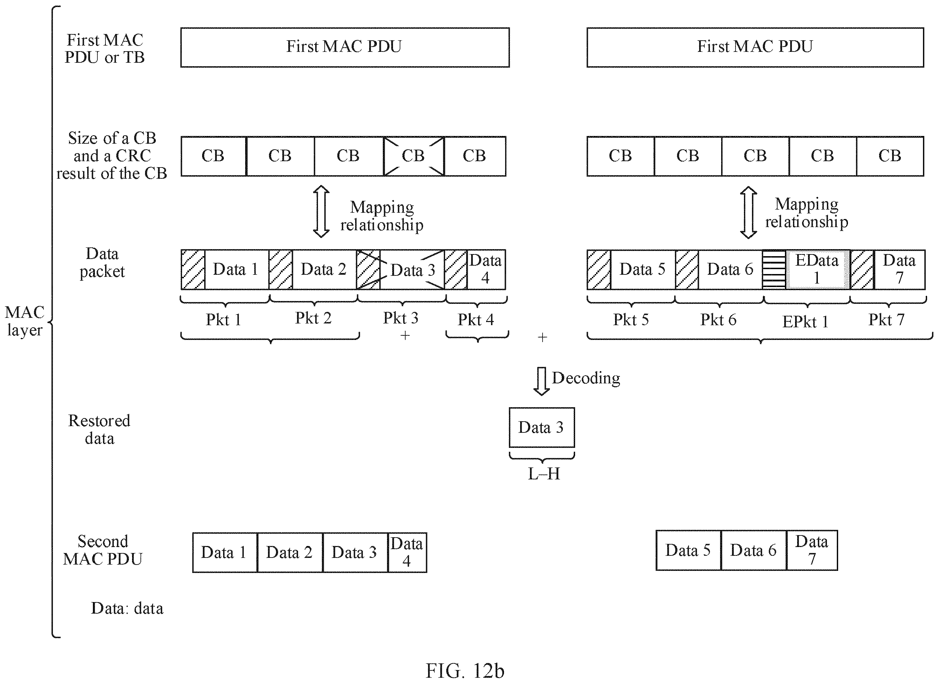

In another example, P is equal to 2. FIG. 12b is a second schematic diagram of data transmission by the decoding end according to an embodiment of this application. As shown in FIG. 12b, for example, an NC function is located at the MAC layer. A first MAC PDU carried on a 1st TB includes four data packets: original data packets Pkt 1 to Pkt 4, and a first MAC PDU carried on a 2nd TB includes four data packets: original data packets Pkt 5 to Pkt 7 and a coded packet EPkt 1. In other words, a quantity of total data packets included in the two TBs is 8. It is assumed that the 1st TB has the CRC error. It can be learned, based on a CB CRC result and a mapping relationship between the CB and the data packet, that an original data packet Pkt 3 is incorrect, and other data packets are correct. Correctly received data packets (original data packets Pkt 1, Pkt 2, Pkt 4, and Pkt 5 to Pkt 7 and the coded packet EPkt 1) are decoded to restore original data, namely, data 3, in the incorrect original data packet Pkt 3. MAC layer additional information is removed from a complete and correct second MAC PDU, and then an obtained second MAC PDU is submitted to the upper layer for processing.

It can be learned that embodiments of this application provide an implementation of network coding at the MAC layer. The transmit end/coding end (namely, the first device) can construct, by using the preset data packet size (L) and the code rate (cr), a quantity and an arrangement manner of original data packets and coded packets of one or more MAC PDUs (herein, the first MAC PDUs), to determine a size of original data (namely, the second MAC PDU) that forms a MAC PDU (herein, the first MAC PDU). In addition, in embodiments of this application, the location information of the data packet is implied. To be specific, the receive end/decoding end (namely, the second device) can identify a location and a boundary of each data packet on the TB, obtain the correct data packet by using the CRC result of the CB in TB and a mapping relationship between a length of the CB and the data packet, and then identify the original data packet and the coded packet by parsing a header of the correct data packet. Finally, the correct coded packet and original data packet are jointly decoded to restore the lost original data. In embodiments of this application, for a latency-sensitive and high-rate service, especially when retransmission cannot be ensured, the correct data packet can be obtained from the TB with the error, and the lost original data can be restored by using the redundant packet. This can improve performance of a low-latency and high-rate service (for example, an XR service), reduce the retransmission latency, and improve transmission reliability.

**Embodiment 3**

In Embodiment 3 of this application, that network coding is performed by using a preset quantity of original data packets as a reference, a specific quantity of coded packets are generated based on a code rate, and a first MAC PDU is formed by using the obtained original data packets and coded packets, and then is carried on a TB for transmission is mainly described.

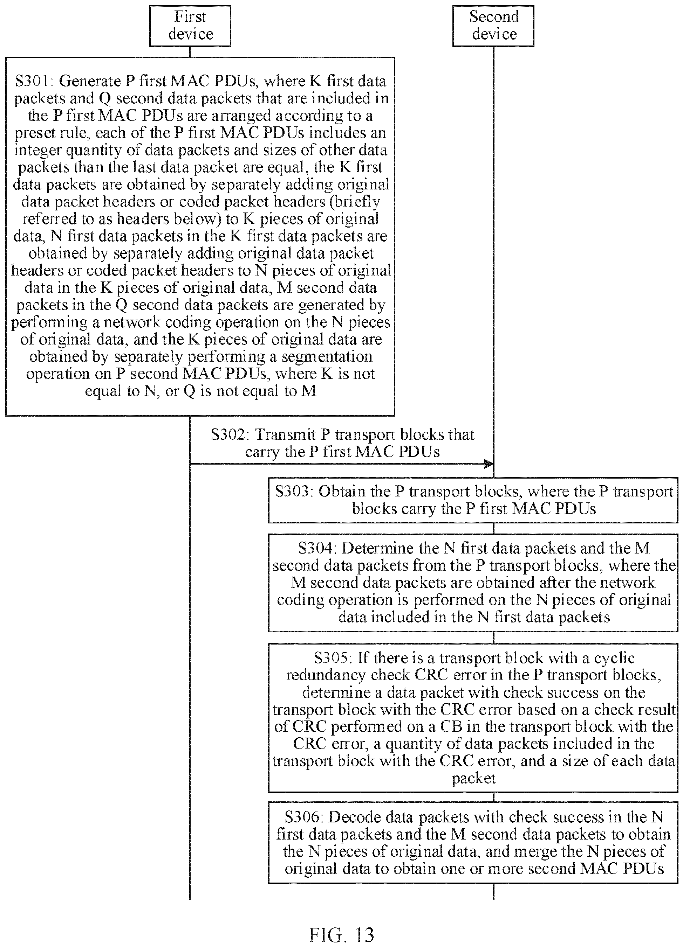

FIG. 13 is a third schematic flowchart of the data transmission method according to an embodiment of this application. As shown in FIG. 13, the data transmission method includes but is not limited to the following steps.

S301: A first device generates P first MAC PDUs, where K first data packets and Q second data packets that are included in the P first MAC PDUs are arranged according to a preset rule, each of the P first MAC PDUs includes an integer quantity of data packets and sizes of other data packets than the last data packet are equal, the K first data packets are obtained by separately adding original data packet headers or coded packet headers (briefly referred to as headers below) to K pieces of original data, N first data packets in the K first data packets are obtained by separately adding original data packet headers or coded packet headers to N pieces of original data in the K pieces of original data, M second data packets in the Q second data packets are generated by performing a network coding operation on the N pieces of original data, and the K pieces of original data are obtained by separately performing a segmentation operation on P second MAC PDUs, where K is not equal to N, or Q is not equal to M.

S302: The first device transmits P transport blocks that carry the P first MAC PDUs.

Optionally, the P first MAC PDUs include the K first data packets and the Q second data packets in total, and the K first data packets and the Q second data packets are arranged on the P first MAC PDUs according to the preset rule. The N first data packets in the K first data packets are obtained by adding the headers to one network coding group (including the N pieces of original data), and remaining K-N (may be equal to 0) first data packets are obtained by separately adding headers to K-N pieces of original data in another network coding group. In other words, the original data in the K first data packets may form two different network coding groups. In other words, the K first data packets are obtained by separately adding the headers to the K pieces of original data, and the N first data packets in the K first data packets are obtained by separately adding the headers to the N pieces of original data (namely, the network coding group) in the K pieces of original data. Correspondingly, a coded packet may be generated by performing network coding on the network coding group. The M second data packets in the Q second data packets are generated by performing the network coding operation on the N pieces of original data (namely, the network coding group), and remaining Q-M (may be equal to 0) second data packets are generated by performing the network coding operation on another network coding group. In other words, the Q second data packets may be generated by coding two different network coding group codes.

K, N, Q, and M each are a positive integer, K is greater than or equal to N, and Q is greater than or equal to M. In an embodiment of this application, K is not equal to N (which is equivalent to K>N), or Q is not equal to M (Q>M). Certainly, the technical solutions provided in embodiments of this application are also applicable to a case in which K is equal to N and Q is equal to M. A case in which K is equal to N and Q is equal to M is described in detail in Embodiment 2, an example in which K is not equal to N or Q is not equal to M is mainly used for description herein.

Optionally, a header of the first data packet is a coded packet header. To be specific, in an embodiment of this application, the first data packet is a data packet whose coding coefficient is a unit vector, and the second data packet is a data packet whose coding coefficient is not a unit vector. In an embodiment of this application, the first data packet may be referred to as an original data packet, and the second data packet may be referred to as a coded packet. In an embodiment of this application, a header of each first data packet is a coded packet header. In other words, in this embodiment of this application, a header of each original data packet is a coded packet header. Each second data packet (namely, each coded packet or redundant packet) includes one coded packet header. In an embodiment of this application, a size of the header of the first data packet may be equal to a size of the header of the second data packet. For example, both are equal to a preset header size (H).

Optionally, N is a preset quantity of original data packets (namely, the first data packets). N may be a preset value. Alternatively, N is a semi-statically configured value. Alternatively, N is a value negotiated in advance by a transmit end and a receive end (namely, a first device and a second device), and the value of N remains unchanged at least before current communication ends. In other words, in this embodiment of this application, an amount of original data in a network coding group is preset, or the quantity of original data packets (namely, the first data packets) is preset. A specific quantity of coded packets are generated based on a code rate, and these original data packets (namely, the first data packets) and coded packets (namely, the second data packets) are arranged on a TB according to a predefined rule for transmission. Because N is known, M may be determined based on N and the code rate (cr). Specifically, M satisfies Formula (2-1) or Formula (2-2). M indicates a total quantity of coded packets (namely, the second data packets).

$$M = \left\lceil \frac{N}{cr} \right\rceil - N \qquad\qquad (2\text{-}1)$$

$$M = \left\lfloor \frac{N}{cr} \right\rfloor - N \qquad\qquad (2\text{-}2)$$

The code rate (cr) may be a preset value, may be semi-statically configured, or may be dynamically configured by the transmit end and the receive end (namely, the first device and the second device) before communication at a time. This is not limited in embodiments of this application. It can be learned from Formula (2-1) and Formula (2-2) that the code rate in this application may be different from an actual code rate. If the total quantity (namely, M) of coded packets is obtained through calculation according to Formula (2-1), the actual code rate is less than or equal to the code rate cr herein. If the total quantity (namely, M) of coded packets is obtained through calculation according to Formula (2-2), the actual code rate is greater than or equal to the code rate cr herein. It should be understood that the code rate cr may be a ratio of the quantity of original data packets to the quantity of total data packets. In an embodiment of this application, the quantity of total data packets is a sum of the quantity of original data packets and the quantity of redundant packets.

It can be learned that, in embodiments of this application, the total quantity (N) of original data packets is preset, and the total quantity (M) of coded packets is calculated based on the code rate (cr). When the preset quantity of original data packets is large, the actual code rate may more accurately approximate the code rate (cr). In addition, in embodiments of this application, a problem that a corresponding total quantity (n) of data packets is small when the first MAC PDU is small, and the actual code rate is less accurate than the code rate (cr) can be resolved.

Optionally, each of the P first MAC PDUs includes the integer quantity of data packets and the sizes of the other data packets than the last data packet are equal. The sizes of the other data packets than the last data packet in each first MAC PDU are all equal to a preset data packet size (L). A size of the last data packet in each first MAC PDU is less than or equal to the preset data packet size (L).

Optionally, for a size of the last data packet included in an ith first MAC PDU in the P first MAC PDUs, refer to the corresponding descriptions in Embodiment 2. Details are not described herein again.

Optionally, the N first data packets in the K first data packets are obtained by separately adding the coded packet headers to the N pieces of original data in the K pieces of original data. The M second data packets in the Q second data packets are generated by performing the network coding operation on the N pieces of original data. In other words, a data part of at least one of the Q second data packets and a data part of at least one of the K first data packets satisfy a network coding relationship. Alternatively, all or some of the Q second data packets are obtained by performing the network coding operation on a data part of all or some of the K first data packets.

The K pieces of original data are obtained by separately performing the segmentation operation on the P second MAC PDUs. The N pieces of original data in the K pieces of original data are obtained by separately performing the segmentation operation on some or all of the P second MAC PDUs. The N pieces of original data are in the network coding group. The segmentation operation herein includes equal-size segmentation, for example, performing equal-size segmentation based on a difference (namely, L-H) between the preset data packet size (L) and the preset header size (H). It should be understood that a size of a remaining part of a second MAC PDU may be insufficient for a segmentation size (namely, L-H), that is, a size of the last data packet of the second MAC PDU may be less than the segmentation size. The network coding operation includes at least network coding and coded packet header adding, and optionally further includes operations such as padding. The padding operation is used to pad original data whose size is less than the difference (namely, L-H) between the preset data packet size and the preset header size in the N pieces of original data, so that a size obtained after padding is equal to L-H. The coding operation includes block coding (for example, an MDS code or RLNC).

Optionally, the second MAC PDU is a MAC PDU generated by using data transmitted from an RLC layer to a MAC layer. In other words, the second MAC PDU is generated/obtained by adding MAC layer additional information (for example, a MAC CE) to the data (namely, an RLC PDU) transmitted from the RLC layer to the MAC layer. Alternatively, the second MAC PDU is a MAC PDU on which network coding is not performed. For a size ($y_i$) of an $i^{th}$ second MAC PDU in the P second MAC PDUs, refer to the corresponding descriptions in Embodiment 2. Details are not described herein again.

Optionally, a size of the coded packet header is the preset header size H (for example, 2 bytes). The coded packet header includes a coding factor (coeff ID) field. A coding factor (coeff ID) field in the header of the first data packet indicates a unit vector, and a coding factor (coeff ID) field in the header of the second data packet indicates an index of a codebook. The codebook herein may be a Vandermonde codebook, a Cauchy codebook, a random code book, or the like. It should be understood that, in this application, the coding factor field and the coeff ID field may be used interchangeably. The header of the first data packet and the header of the second data packet each may further include one or more of an O/C field and a block ID field. The O/C field in the header of the first data packet is set to a first value (for example, 0), and indicates that a data packet in which the O/C field is located is an original data packet. The O/C field in the header of the second data packet is set to a second value (for example, 1), and indicates that a data packet in which the O/C field is located is a coded packet. For a meaning of the block ID field, refer to the corresponding descriptions in Embodiment 2. Details are not described herein again.

Optionally, the preset rule includes: If a size of the last data packet included in a first MAC PDU is less than the preset data packet size (L), the last data packet is an original data packet. In other words, if a size of the last data packet included in a first MAC PDU is equal to the preset data packet size (L), the last data packet included in the first MAC PDU is allowed to be a coded packet, or certainly, may be an original data packet. Certainly, if a size of the last data packet included in each of the P first MAC PDUs is less than the preset data packet size, the last data packet included in each first MAC PDU is an original data packet. Under this preset rule, the header of the first data packet and the header of the second data packet each include the block ID field and the coeff ID field. Optionally, the header of the first data packet and the header of the second data packet each further include the O/C field. The O/C field in the header of the first data packet is set to the first value (for example, 0), and the O/C field in the header of the second data packet is set to the second value (for example, 1).

It can be learned that, in embodiments of this application, when a size of the last data packet included in a first MAC PDU is less than the preset data packet size (L), the last data packet is restricted to being an original data packet, to fully use transmission resources.

Optionally, the preset rule further includes: The N first data packets and the M second data packets on the P first MAC PDUs satisfy a relationship that an original data packet is before a coded packet. In other words, the N first data packets and the M second data packets on the P first MAC PDUs are arranged in a sequence in which the original data packet is before the coded packet. In other words, on the P first MAC PDUs, original data packets generated by adding original data packet headers to a same network coding group and coded packets generated through coding are arranged in the sequence in which the original data packet is before the coded packet. The remaining K-N original data packets and Q-M coded packets may be after the M second data packets when the preset rule (namely, "the N first data packets and the M second data packets on the P first MAC PDUs satisfy a relationship that an original data packet is before a coded packet") is met. Specifically, the preset rule is: If a size of the last data packet included in a first MAC PDU is less than the preset data packet size (L), the last data packet is an original data packet, and the N first data packets and the M second data packets satisfy the relationship that the original data packet is before the coded packet. Under this preset rule, the header of the first data packet and the header of the second data packet each include the coeff ID field. Optionally, the header of the first data packet and the header of the second data packet each further include the block ID field. Further, the header of the first data packet and the header of the second data packet each further include the O/C field. The O/C field in the header of the first data packet is set to the first value (for example, 0), and the O/C field in the header of the second data packet is set to the second value (for example, 1).

It can be learned that, in embodiments of this application, arrangement rankings of an original data packet and a coded packet generated by using one network coding group are restricted, so that a boundary (which means a start location or an end location of a data packet) between data packets is clear (that is, a location of each data packet in the first MAC PDU may be deduced by using the preset data packet size), to support a decoding end/receive end (namely, the second device) in identifying which data packets are original data packets and which data packets are coded packets.

In addition, the header of the first data packet and the header of the second data packet each carry the block ID field. In this way, each correctly received data packet can have a clear network coding group ID, that is, which data packets are from a same network coding group can be clearly known. This facilitates decoding.

Optionally, the preset rule further includes: If a size of a first MAC PDU in which the last first data packet in the N first data packets is located is not an integer multiple of the preset data packet size (L), the last data packet of the first MAC PDU is a first data packet other than the N first data packets in the K first data packets, for example, a first data packet in a next network coding group. If a size of a first MAC PDU in which any second data packet in the M second data packets is located is not an integer multiple of the preset data packet size (L), the last data packet of the first MAC PDU in which the any second data packet is located is a first data packet other than the N first data packets in the K first data packets, for example, the first data packet in the next network coding group. When a first MAC PDU in which the last second data packet in the M second data packets is located has a remaining size after the last second data packet, the last second data packet is followed by the first data packet in the next network coding group. Specifically, the preset rule is: If a size of the last data packet included in a first MAC PDU is less than the preset data packet size (L), the last data packet is an original data packet; and the N first data packets and the M second data packets satisfy the relationship that the original data packet is before the coded packet. If the size of the first MAC PDU in which the last first data packet in the N first data packets is located is not the integer multiple of the preset data packet size (L), the last data packet of the first MAC PDU is the first data packet other than the N first data packets in the K first data packets. If the size of the first MAC PDU in which the any second data packet in the M second data packets is located is not the integer multiple of the preset data packet size (L), the last data packet of the first MAC PDU in which the any second data packet is located is the first data packet other than the N first data packets in the K first data packets.

If the decoding end/receive end (namely, the second device) knows the preset data packet size L and the code rate cr (that is, equivalently knows the total quantity N of original data packets and the total quantity M of coded packets), under this preset rule, the header of the first data packet and the header of the second data packet each include the coeff ID field. Optionally, the header of the first data packet and the header of the second data packet each further include the O/C field and/or the block ID field. The O/C field in the header of the first data packet is set to the first value (for example, 0), and the O/C field in the header of the second data packet is set to the second value (for example, 1).

It can be learned that, in embodiments of this application, a manner of arranging the original data packet and the coded packet is strictly restricted, to reduce header overheads. In addition, the header of the first data packet and the header of the second data packet each carries the coeff ID field, to support the decoding end/receive end (namely, the second device) in constructing a coefficient factor matrix by using the coeff ID field, to perform decoding.

To better understand a data transmission procedure of a coding end/transmit end (namely, the first device), the following provides example descriptions with reference to two examples.

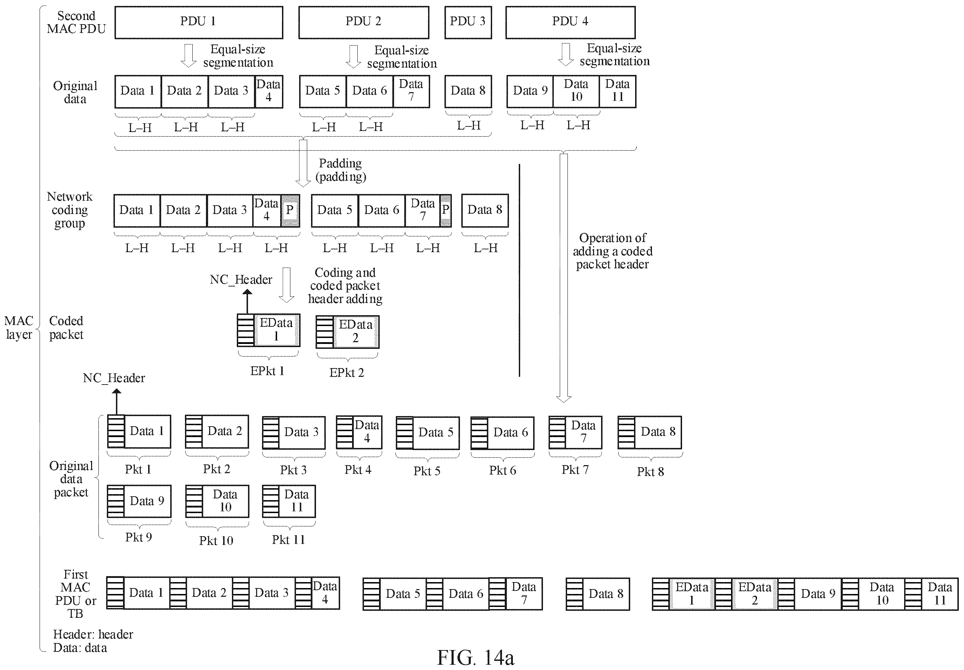

In an example, FIG. 14a is a third schematic diagram of data transmission by the coding end according to an embodiment of this application. In FIG. 14a, for example, the last data packet included in each first MAC PDU is an original data packet in the preset rule. As shown in FIG. 14a, an NC function is located at the MAC layer. It is assumed that N is equal to 8, it is obtained, through calculation based on the code rate (cr), that M is equal to 2. It is obtained, through calculation according to Formula (1-2) that a $1^{st}$ first MAC PDU can include four data packets, a $2^{nd}$ first MAC PDU can include three data packets, a $3^{rd}$ first MAC PDU can include one data packet, and a $4^{th}$ first MAC PDU can include five data packets. The MAC layer calculates, according to Formula (1-3) or formula (1-4), a size of original data (namely, a second MAC PDU) that can be included in each first MAC PDU, and requests the data from an upper layer. Each time receiving a second MAC PDU (for example, a PDU 1 to a PDU 4 in FIG. 14a), the MAC layer performs equal-size segmentation on the second MAC PDU based on the difference (namely, L-H) between the preset data packet size (L) and the preset header size (H). Equal-size segmentation is performed on the PDU 1 to obtain four pieces of original data that are respectively represented as data 1 to data 4. Equal-size segmentation is performed on a PDU 2 to obtain three pieces of original data that are respectively represented as data 5 to data 7. A size of a PDU 3 is exactly equal to L-H, is used as one piece of original data, and is represented as data 8. Equal-size segmentation is performed on the PDU 4 to obtain three pieces of original data that are respectively represented as data 9 to data 11. Because N is equal to 8, original data, namely, the data 1 to the data 8, is in one network coding group, and original data, namely the data 9 to the data 11, is original data in another network coding group. Sizes of the data 1 to data 3, the data 5, data 6, and the data 8 are all equal to L-H, and sizes of the data 4 and the data 7 are less than L-H. Coded packet headers (for example, NC_Header in FIG. 14a) are respectively added to the data 1 to the data 8 to obtain original data packets Pkt 1 to Pkt 8. Coded packet headers are respectively added to the data 9 to the data 11 to obtain original data packets Pkt 9 to Pkt 11. The sizes of the data 4 and the data 7 are less than L-H. Therefore, the data 4 and the data 7 need to be padded (padding), so that sizes of padded data 4 and padded data 7 are equal to L-H. Then, block coding is performed on the data 1 to the data 3, the data 5, the data 6, the data 8, the padded data 4, and the padded data 7 to generate two pieces of coded data that are respectively represented as EData 1 and EData 2. Coded packet headers (for example, NC_Header in FIG. 14a) are respectively added to the coded data EData 1 and EData 2 to obtain coded packets EPkt 1 and EPkt 2. Only eight data packets can be placed in the first three first MAC PDUs. Therefore, the original data packets Pkt 1 to Pkt 8 and the coded packets EPkt 1 and EPkt 2 are arranged according to the rule that the original data packet is before the coded data packet. In this case, the coded packets EPkt 1 and EPkt 2 and the original data packets Pkt 9 to Pkt 11 are sequentially placed in the $4^{th}$ first MAC PDU. Herein, P is equal to 4, K is equal to 11 (8+3), and Q is equal to 2. The first MAC PDU is carried on a TB for transmission.

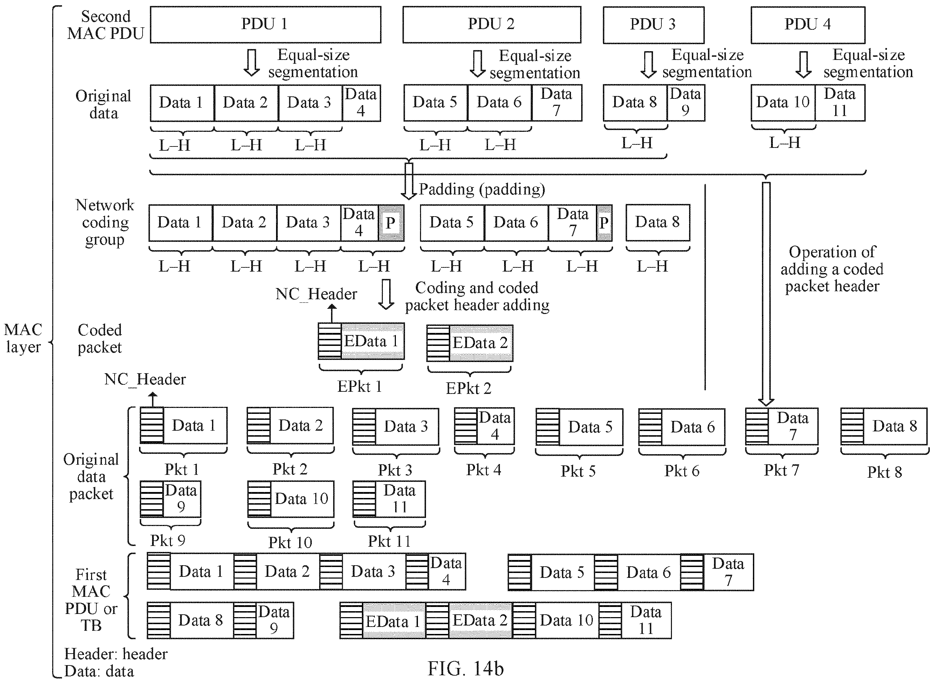

In another example, FIG. 14b is a fourth schematic diagram of data transmission by the coding end according to an embodiment of this application. As shown in FIG. 14b, an NC function is located at the MAC layer. It is assumed that N is equal to 8, it is obtained, through calculation based on the code rate (cr), that M is equal to 2. It is obtained, through calculation according to Formula (1-2) that a $1^{st}$ first MAC PDU can include four data packets, a $2^{nd}$ first MAC PDU can include three data packets, a $3^{rd}$ first MAC PDU can include two data packets, and a $4^{th}$ first MAC PDU can include four data packets. The MAC layer calculates, according to Formula (1-3) or formula (1-4), a size of original data (namely, a second MAC PDU) that can be included in each first MAC PDU, and requests the data from an upper layer. Each time receiving a second MAC PDU (for example, a PDU 1 to a PDU 4 in FIG. 14b), the MAC layer performs equal-size segmentation on the second MAC PDU based on the difference (namely, L-H) between the preset data packet size (L) and the preset header size (H). Equal-size segmentation is performed on the PDU 1 to obtain four pieces of original data that are respectively represented as data 1 to data 4. Equal-size segmentation is performed on a PDU 2 to obtain three pieces of original data that are respectively represented as data 5 to data 7. Equal-size segmentation is performed on a PDU 3 to obtain two pieces of original data that are respectively represented as data 8 and data 9. Equal-size segmentation is performed on the PDU 4 to obtain two pieces of original data that are respectively represented as data 10 to data 11. Because N is equal to 8, original data, namely, data 1 to data 8, is used as one network coding group, and original data, namely, data 9 to data 11, is some or all of original data in another network coding group. Sizes of the data 1 to data 3, the data 5, data 6, and the data 8 are all equal to L-H, and sizes of the data 4, the data 7, and the data 9 are all less than L-H. Coded packet headers (for example, NC_Header in FIG. 14b) are respectively added to the data 1 to the data 8 to obtain original data packets Pkt 1 to Pkt 8. Coded packet headers are respectively added to the data 9 to the data 11 to obtain original data packets Pkt 9 to Pkt 11. The sizes of the data 4 and the data 7 are less than L-H. Therefore, the data 4 and the data 7 need to be padded (padding), so that sizes of padded data 4 and padded data 7 are equal to L-H. Then, block coding is performed on the data 1 to the data 3, the data 5, the data 6, the data 8, the padded data 4, and the padded data 7 to generate two pieces of coded data that are respectively represented as EData 1 and EData 2. Coded packet headers (for example, NC_Header in FIG. 14b) are respectively added to the coded data EData 1 and EData 2 to obtain coded packets EPkt 1 and EPkt 2. It is assumed that the preset rule is as follows: When a size of the last data packet included in a first MAC PDU is less than L, the data packet is an original data packet; the original data packets Pkt 1 to Pkt 8 and the coded packets EPkt 1 to EPkt 2 are arranged according to a rule that an original data packet is before a coded packet; and further, an original data packet and a coded packet that are generated by using a same network coding group are preferably adjacent to each other. In this case, the original data packet Pkt 8 is placed at a start location in the $3^{rd}$ first MAC PDU. Because a remaining size other than a size of the Pkt 8 is less than L, the Pkt 8 is followed by a start original data packet, namely Pkt 9, in a next network coding group. The coded packets EPkt 1 and EPkt 2 and the original data packets Pkt 10 and Pkt 11 are sequentially placed in the $4^{th}$ first MAC PDU. Herein, P is equal to 4, K is equal to 11 (8+3), and Q is equal to 2. The first MAC PDU is carried on a TB for transmission.

Due to factors such as interference and noise, not all TBs transmitted by the first device can be correctly received by the second device. In other words, a packet loss may occur in a transmission process. Therefore, in embodiments of this application, network coding is introduced to the MAC layer of the transmit end/coding end, so that when receiving sufficient correct and linearly unrelated data packets, the second device can restore lost original data by using these data packets. The following describes a data receiving procedure of the decoding end in FIG. 13.

S303: The second device obtains the P transport blocks, where the P transport blocks carry the P first MAC PDUs.

S304: The second device determines the N first data packets and the M second data packets from the P transport blocks, where the M second data packets are obtained by performing the network coding operation on the N pieces of original data included in the N first data packets.

S305: If there is a transport block with a cyclic redundancy check CRC error in the P transport blocks, the second device determines a data packet with check success on the transport block with the CRC error based on a check result of CRC performed on a CB in the transport block with the CRC error, a quantity of data packets included in the transport block with the CRC error, and a size of each data packet.

S306: The second device decodes data packets with check success in the N first data packets and the M second data packets to obtain the N pieces of original data, and merges the N pieces of original data to obtain one or more second MAC PDUs.

Optionally, each time receiving a transport block, a PHY layer of the second device may perform CRC on the transport block and CRC on the CB. If CRC performed on a transport block succeeds, it indicates that all information on the transport block is correct. In this case, the PHY layer of the second device may submit the transport block to a MAC layer. The MAC layer of the second device may perform, based on the preset data packet size (L), equal-size segmentation on a first MAC PDU carried on the transport block, and store, in storage space (for example, a buffer), a data packet (namely, a correct data packet) obtained through segmentation.

If CRC performed on a transport block has an error, the PHY layer of the second device still submits the transport block to a MAC layer for next processing. In other words, in embodiments of this application, regardless of whether the CRC performed on TB succeeds, the PHY layer submits the TB to the MAC layer. Then, the MAC layer of the second device obtains, through calculation according to Formula (1-2) and based on a size (denoted as $Tbs^j$) of the first MAC PDU carried on the transport block with the CRC error and the preset data packet size (L), the quantity (denoted as $Tbs^j$) of data packets included in the transport block. Sizes of first ($n^j$-1) data packets included in the transport block are all the preset data packet size L. The MAC layer of the second device may determine, based on the quantity ($n^j$) of data packets included in the transport block, the size ($Tbs^j$) of the first MAC PDU carried on the transport block, and the preset data packet size (L), a size (denoted as $L'_{sys}$) of the last data packet included in the transport block. Herein, $L'_{sys}=Tbs^j-(n^j-1)\times L$. Herein, j and i may be equal or may not be equal. The MAC layer of the second device determines a mapping relationship between each coding block and a data packet based on the size of each data packet on the transport block and a size of each coding block in the transport block. The MAC layer of the second device determines, based on a check result of each coding block at the PHY layer and the mapping relationship between each coding block and the data packet, a data packet with check success on the transport block with the CRC error, or may determine a data packet with a check error on the transport block with the CRC error. The second device may determine, according to the preset rule, whether the data packet with the check error on the transport block with the CRC error is an original data packet. If the data packet with the check error on the transport block with the CRC error is not an original data packet, that is, the data packet with the check error on the transport block with the CRC error is a coded packet, the data packet with check success on the transport block with the CRC error may be directly stored in the storage space (for example, the buffer).

The MAC layer of the second device obtains the P first MAC PDUs carried on the P transport blocks, and performs equal-size segmentation on the P first MAC PDUs based on the preset data packet size L, to obtain K+Q data packets. If headers of the data packets each include a block ID field, the MAC layer of the second device may determine, from the K+Q data packets, N+M data packets whose block ID fields are the same. If headers (which are original data packet headers and coded packet headers) of the N+M data packets each include an O/C field, the MAC layer of the second device determines, according to an indication of the O/C field in the header of each data packet, whether the data packet is an original data packet or a coded packet, so as to determine, from the N+M data packets, which data packets are original data packets and which data packets are coded packets, and obtain N original data packets (namely, the N first data packets) and M coded packets (namely, the M second data packets) in total. The M second data packets are obtained by performing the network coding operation on the N pieces of original data included in the N first data packets. If headers (which are original data packet headers and coded packet headers) of the N+M data packets each include no O/C field, the MAC layer of the second device determines the N first data packets and the M second data packets from the N+M data packets according to the preset rule. If headers of the data packets each include no block ID field, it indicates that information carried in the header cannot be used to distinguish which data packets are generated by using a same network coding group. N is the preset value, a value configured by using signaling, or a value negotiated by the transmit end and the receive end. Therefore, M may be obtained through calculation according to Formula (2-1) or Formula (2-2) and based on the code rate. Then, the MAC layer of the second device determines the N first data packets and the M second data packets from the K+Q data packets based on the value of N, the value of M, and locations of the K+Q data packets on the P first MAC PDUs (namely, according to the preset rule).

It should be understood that an execution sequence of step S304 and step S305 is not limited. For example, step S304 is performed before step S305, step S304 is performed after step S305, or step S304 and step S305 are performed at the same time.

If the data packet with the check error on the transport block with the CRC error is an original data packet, the MAC layer of the second device determines whether the original data packet with the check error is one of the N first data packets. In an implementation, if the original data packet with the check error includes a block ID field, the MAC layer of the second device determines whether a value of the block ID field in the original data packet with the check error is the same as a value of a block ID field in any one of the N first data packets. If the two values are the same, it indicates that the original data packet with the check error is one of the N first data packets. If the two values are different, it indicates that the original data packet with the check error does not belong to the N first data packets. In another implementation, if the original data packet with the check error includes no block ID field, the MAC layer of the second device determines, based on locations (determined according to the preset rule) of the N first data packets on the P transport blocks and a location of the original data packet with the check error in the transport block with the CRC error, whether the original data packet with the check error is one of the N first data packets. If the original data packet with the check error is one of the N first data packets, the MAC layer of the second device obtains the data packets with check success in the N first data packets and the M second data packets. If a quantity of the data packets with check success in the N first data packets and the M second data packets is greater than or equal to N, the MAC layer of the second device obtains a coding factor field in a header of each original data packet with check success in the N first data packets and the M second data packets and a coding factor field in a coded packet header of each coded packet. The MAC layer of the second device constructs the coefficient factor matrix according to indications of these coding factor fields. The coding factor field in the header of the first data packet indicates the unit vector. The MAC layer of the second device may decode, by using the coefficient factor matrix, original data of the original data packets with check success and coded data of the coded packet in the N first data packets and the M second data packets, to restore original data in the original data packet with the check error. It should be understood that, if the original data packet with the check error is the last data packet on the transport block with the CRC error, and a size of original data in the last data packet included in the transport block is less than L-H (namely, $L'_{sys}$-H<L-H, which is equivalent to $L'_{sys}$<L), a padding bit padded during coding needs to be removed from restored original data. There are a total of N pieces of original data, including the restored original data and original data obtained after headers are removed from all original data packets with check success in the N first data packets. The second device merges the N pieces of original data (if there is a padding bit, the N pieces of original data herein are original data obtained after the padding bit is removed) to obtain the P second MAC PDUs. Specifically, the N pieces of original data are merged in a sequence, in the first MAC PDU, of the original data packets corresponding to the N pieces of original data. The MAC layer of the second device separately removes the MAC layer additional information from the one or more second MAC PDUs, and then submits obtained one or more second MAC PDUs to an upper layer (for example, an RLC layer) for further processing.

If a quantity of data packets with check success on the P transport blocks is less than N, it indicates that a quantity of correctly received and linearly unrelated data packets is insufficient to support decoding, and the second device may generate the feedback information and feed back the feedback information to the first device.

If the original data packet with the check error does not belong to the N first data packets, the second device may directly remove the headers from the N first data packets separately to obtain the N pieces of original data. The second device merges the N pieces of original data according to the preset rule to obtain the one or more second MAC PDUs. The second device separately removes the MAC layer additional information from the one or more second MAC PDUs, and then submits obtained one or more second MAC PDUs to an upper layer (for example, an RLC layer) for further processing.

Certainly, if there is no transport block with the CRC error in the P transport blocks, or the data packet with the check error on the transport block with the CRC error is a coded packet, the second device may directly determine the N first data packets from the P first MAC PDUs carried on the P transport blocks. Then, the second device separately removes the headers from the N first data packets to obtain the N pieces of original data. The second device merges the N pieces of original data according to the preset rule to obtain the one or more second MAC PDUs. The second device separately removes the MAC layer additional information from the one or more second MAC PDUs, and then submits obtained one or more second MAC PDUs to an upper layer (for example, an RLC layer) for further processing.

It should be understood that a data receiving process of the decoding end may be understood as an inverse process of the coding end.

The coding end in FIG. 14a is used as an example. A corresponding decoding process is as follows: The second device receives four TBs. The second device separately performs CRC on the received four TBs, and is assumed that a CRC performed on a 1st TB has an error. Then, the second device obtains a CB CRC result of the first TB, and it is assumed that CRC performed on a 4th coding block has an error. The second device determines, based on a mapping relationship between each coding block in the 1st TB and a data packet, that the 4th coding block corresponds to an original data packet Pkt 3. The second device obtains correct original data packets Pkt 1, Pkt 2, and Pkt 4 to Pkt 7, and the coded packets EPkt 1 to EPkt 2, and decodes the correct original data packets Pkt 1, Pkt 2, and Pkt 4 to Pkt 7, and the coded packets EPkt 1 to EPkt 2, to restore the original data, namely, the data 3, in the incorrect original data packet Pkt 3. Then, the second device merges the correct original data, namely, the data 1, the data 2, the restored data 3, and the data 4 to the data 8 into second MAC PDUs (for example, the PDU 1 to the PDU 3 in FIG. 14a), and submits the second MAC PDUs to an upper layer for processing. It should be understood that a process of merging the original data, namely, the data 1 to the data 8, is an inverse process of segmenting the PDU 1 to the PDU 3 into the data 1 to the data 8 in FIG. 14a.

It can be learned that embodiments of this application provide another implementation of network coding at the MAC layer. The total quantity (N) of original data packets is preset. Then, the total quantity (M) of coded packets is determined based on the code rate (cr). The MAC PDU (herein, the first MAC PDU) is formed according to the preset rule by using the obtained original data packets and coded packets, and then is carried on the TB for transmission. In this implementation, a quantity of first MAC PDUs during communication at a time is not fixed. In other words, in embodiments of this application, one or more MAC PDUs (herein, the second MAC PDUs) are no longer used as a reference to form a group of original data packets and coded packets. Embodiments of this application provide a MAC layer network coding scheme from a perspective of presetting the quantity of original data packets. For a latency-sensitive and high-rate service, especially when retransmission cannot be ensured, the correct data packet can be obtained from the TB with the error, and the lost original data can be restored by using the redundant packet. This can improve performance of a low-latency and high-rate service (for example, an XR service), reduce retransmission latency, and improve transmission reliability.

**Embodiment 4**

In Embodiment 4 of this application, on a basis of Embodiment 2 and Embodiment 3, a MAC layer network coding scheme in which a CRC code with a preset or fixed bit is introduced after the last bit of each data packet is mainly described.

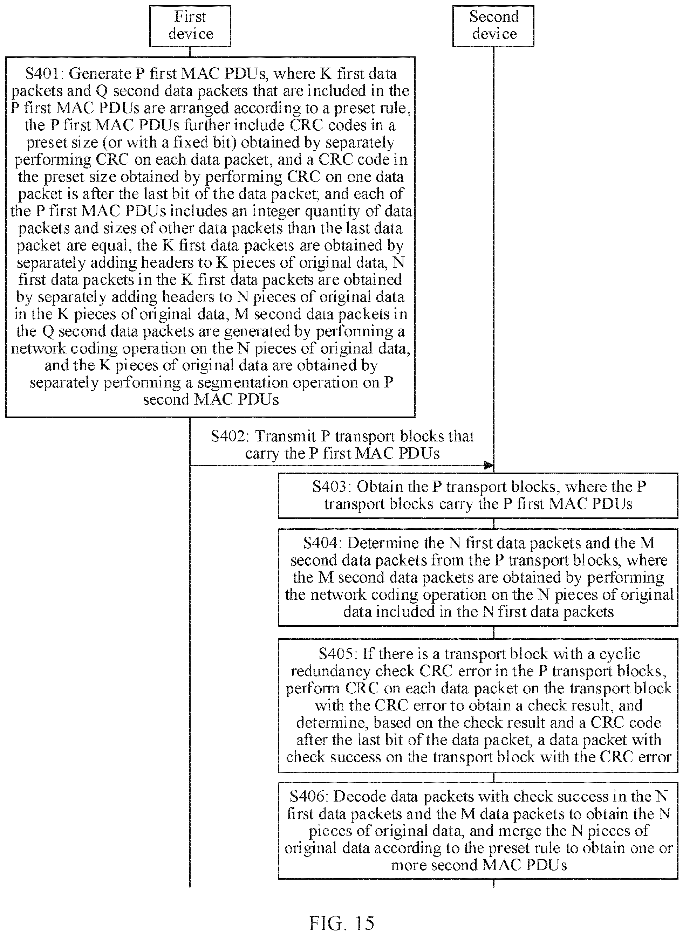

FIG. 15 is a fourth schematic flowchart of the data transmission method according to an embodiment of this application. As shown in FIG. 15, the data transmission method includes but is not limited to the following steps.

S401: A first device generates P first MAC PDUs, where K first data packets and Q second data packets that are included in the P first MAC PDUs are arranged according to a preset rule, the P first MAC PDUs further include CRC codes in a preset size (or with a fixed bit) obtained by performing CRC on each data packet, and a CRC code in the preset size that is obtained by performing CRC on one data packet is after the last bit of the data packet; and each of the P first MAC PDUs includes an integer quantity of data packets and sizes of other data packets than the last data packet are equal, the K first data packets are obtained by separately adding headers to K pieces of original data, N first data packets in the K first data packets are obtained by separately adding headers to N pieces of original data in the K pieces of original data, M second data packets in the Q second data packets are generated by performing a network coding operation on the N pieces of original data, and the K pieces of original data are obtained by separately performing a segmentation operation on P second MAC PDUs.

S402: The first device transmits P transport blocks that carry the P first MAC PDUs.

Optionally, the P first MAC PDUs include the K first data packets and the Q second data packets, and further include CRC codes in the preset size (or with the fixed bit) obtained by separately performing CRC on the K+Q data packets. The CRC code in/with the preset size/fixed bit obtained by performing CRC on the data packet is after the last bit of the data packet, and the CRC code is adjacent to the last bit of the data packet. For ease of description, the preset size of the CRC code is denoted as R. The K first data packets and the Q second data packets are arranged on the P first MAC PDUs according to the preset rule.

In an embodiment of this application, the first data packet may be referred to as an original data packet, and the second data packet may be referred to as a coded packet, or the second data packet is referred to as a redundant packet. In an embodiment of this application, a header of the first data packet is an original data packet header or a coded packet header. In other words, each original data packet includes one original data packet header or one coded packet header, and each coded packet (or redundant packet) includes a coded packet header. In an embodiment of this application, a size of the original data packet header may be equal to a size of the coded packet header. For example, both the size of the original data packet header and the size of the coded packet header are equal to a preset header size (H).

Optionally, each of the P first MAC PDUs includes the integer quantity of data packets and the sizes of the other data packets than the last data packet are equal. The sizes of the other data packets than the last data packet in each first MAC PDU are all equal to a preset data packet size (L). A size of the last data packet in each first MAC PDU is less than or equal to the preset data packet size (L).

Optionally, P, K, Q, N, and M each are a positive integer, K is greater than or equal to N, and Q is greater than or equal to M. In an implementation, P is a preset value, a semi-statically configured value, or a value that is negotiated in advance by a transmit end and a receive end (namely, the first device and a second device). In this implementation, K is equal to N, and Q is equal to M. For details about values of N and M, refer to the descriptions in Embodiment 2. Details are not described herein again. In this implementation, the P first MAC PDUs include the N first data packets and the M second data packets in total. The N first data packets are obtained by separately adding original data packet headers to the N pieces of original data, and the M second data packets are generated by performing the network coding operation on the N pieces of original data. The N pieces of original data are in one network coding group. The N pieces of original data are obtained by separately performing the segmentation operation on the P second MAC PDUs.

In another implementation, N is a preset value, a semi-statically configured value, or a value that is negotiated in advance by a transmit end and a receive end (namely, the first device and a second device). In this implementation, K is greater than N, or Q is greater than M. For details about values of N and M, refer to the descriptions in Embodiment 3. Details are not described herein again. The N first data packets in the K first data packets are obtained by adding coded packet headers to one network coding group (including the N pieces of original data), and remaining K-N (may be equal to 0) first data packets are obtained by adding coded packet headers to K-N pieces of original data in another network coding group. The K first data packets are obtained by separately adding coded packet headers to the K pieces of original data. The N first data packets in the K first data packets are obtained by separately adding coded packet headers to the N pieces of original data (namely, the network coding group) in the K pieces of original data. The M second data packets in the Q second data packets are generated by performing the network coding operation on the N pieces of original data (namely, the network coding group), and remaining Q-M (may be equal to 0) second data packets are generated by performing the network coding operation on another network coding group. The K pieces of original data are obtained by separately performing the segmentation operation on the P second MAC PDUs.

The second MAC PDU is a MAC PDU generated by using data transmitted from an RLC layer to a MAC layer. In other words, the second MAC PDU is generated/obtained by adding MAC layer additional information (for example, a MAC CE) to the data (namely, an RLC PDU) transmitted from the RLC layer to the MAC layer.

Optionally, a CRC code in/with the preset size/fixed bit is introduced after the last bit of each data packet, and a size of the first MAC PDU remains unchanged when the CRC code in/with the preset size/fixed bit is introduced. Therefore, a size of original data (namely, the second MAC PDU) that can be included in the first MAC PDU is reduced when the CRC code in/with the preset size/fixed bit is introduced after the last bit of each data packet. Consequently, for each first MAC PDU, a quantity of data packets included in each first MAC PDU and a size of original data (namely, the second MAC PDU) that can be included in the MAC PDU, and the like need to be recalculated.

A size of the last data packet included in an $i^{th}$ first MAC PDU in the P first MAC PDUs is determined based on a size (denoted as $Tbs^i$) of the $i^{th}$ first MAC PDU, a quantity ($n^i$) of data packets included in the $i^{th}$ first MAC PDU, the preset data packet size (L), and the preset size/fixed bit (R) of the CRC code. The quantity ($n^i$) of data packets included in the $i^{th}$ first MAC PDU is determined based on the size ($Tbs^i$) of the first MAC PDU and the preset data packet size (L). Specifically, the size of the last data packet included in the $i^{th}$ first MAC PDU satisfies Formula (3-1), and the quantity ($n^i$) of data packets included in the $i^{th}$ first MAC PDU satisfies Formula (3-2).

$$L_{sys}^i = Tbs^i - (n^i - 1) \times (L+R) - R \tag{3-1}$$

$$n^i = \left\lceil \frac{Tbs^i}{L+R} \right\rceil \tag{3-2}$$

Optionally, a size (denoted as $y_i$) of an $i^{th}$ second MAC PDU in the P second MAC PDUs is determined based on the quantity ($n^i$) of original data packets included in the $i^{th}$ first MAC PDU in the P first MAC PDUs, the preset data packet size (L), the preset header size (H), the size of the last data packet included in the $i^{th}$ first MAC PDU, and the preset size/fixed bit (R) of the CRC code. The quantity of original data packets included in the $i^{th}$ first MAC PDU is determined based on the quantity (n') of data packets included in the $i^{th}$ first MAC PDU and according to the preset rule.

If it is determined, according to the preset rule, that the last data packet included in the $i^{th}$ first MAC PDU is an original data packet, the size of the $i^{th}$ second MAC PDU satisfies Formula (3-3). If it is determined, according to the preset rule, that the last data packet included in the $i^{th}$ first MAC PDU is a coded packet, the size of the $i^{th}$ second MAC PDU satisfies Formula (3-4). For example, if the size of the last data packet included in the $i^{th}$ first MAC PDU is less than the preset data packet size L, the last data packet is an original data packet, and the size of the $i^{th}$ second MAC PDU satisfies Formula (3-3). If the size of the last data packet included in the $i^{th}$ first MAC PDU is equal to the preset data packet size L, and the last data packet is a coded packet, the size of the $i^{th}$ second MAC PDU satisfies Formula (3-4).

$$y_i = (n_{sys}^i - 1) \times (L - H - R) + L_{sys}^i - H - R \tag{3-3}$$

$$y_i = (n_{sys}^i - 1) \times (L - H - R) \tag{3-4}$$

Herein, $n_{sys}^i$ in Formula (3-3) and Formula (3-4) indicates the quantity of original data packets included in the $i^{th}$ first MAC PDU.

Optionally, for implementations of the original data packet header and the coded packet header, refer to the corresponding descriptions in Embodiment 2 or Embodiment 3. Details are not described herein again. Specifically, if a value of P is fixed (that is, is a preset value, a configured value, or a value negotiated by the transmit end and the receive end), for the implementations of the original data packet header and the coded packet header, refer to the corresponding descriptions in Embodiment 2. If a value of N is fixed (that is, is a preset value, a configured value, or a value negotiated by the transmit end and the receive end), for the implementation of the coded packet header, refer to the corresponding descriptions in Embodiment 3.

Optionally, for the preset rule, refer to the corresponding descriptions in Embodiment 2 or Embodiment 3.

Details are not described herein again. Specifically, if the value of P is fixed, for the preset rule, refer to the corresponding descriptions in Embodiment 2. If the value of N is fixed, for the preset rule, refer to the corresponding descriptions in Embodiment 3.

To better understand a data transmission procedure of a coding end/the transmit end (namely, the first device), the following provides example descriptions with reference to two examples.

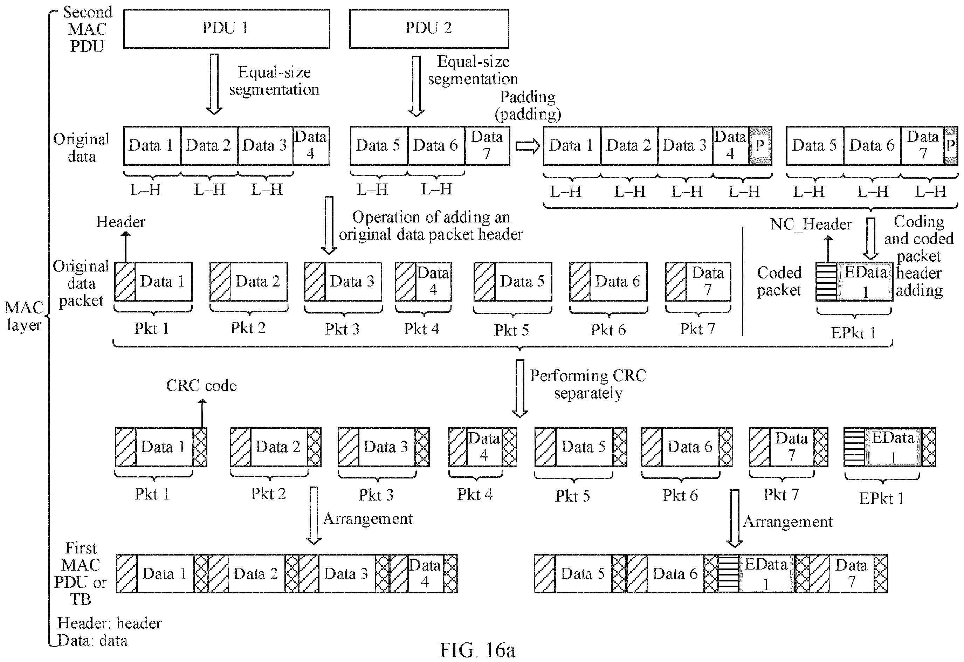

In an example, on a basis of Embodiment 2, the CRC code with the fixed bit is added after the last bit of each data packet. FIG. 16a is a fifth schematic diagram of data transmission by the coding end according to an embodiment of this application. As shown in FIG. 16a, P is equal to 2, and the NC function is located at the MAC layer. It is assumed that a quantity of total data packets included in two first MAC PDUs obtained through calculation is 8, and M and N obtained through calculation based on the quantity of data packets included in the two first MAC PDU and the code rate (cr) are respectively 1 and 7, that is, the first MAC PDUs include one coded packet and seven original data packets in total. The MAC layer calculates, according to Formula (3-3) or formula (3-4), a size of original data (namely, a second MAC PDU) that can be included in each first MAC PDU. After receiving two second MAC PDUs (for example, a PDU 1 and a PDU 2 in FIG. 16a), the MAC layer performs equal-size segmentation on each second MAC PDU based on the difference (namely, L-H) between the preset data packet size (L) and the preset header size (H). Equal-size segmentation is performed on the PDU 1 to obtain four pieces of original data that are respectively represented as data 1 to data 4. Equal-size segmentation is performed on the PDU 2 to obtain three pieces of original data that are respectively represented as data 5 to data 7. Sizes of the data 1 to data 3, the data 5, and data 6 are all equal to L-H, and sizes of the data 4 and the data 7 are less than L-H. Original data packet headers (for example, headers in FIG. 16a) are respectively added to the data 1 to the data 7 to obtain original data packets Pkt 1 to Pkt 7. The sizes of the data 4 and the data 7 are less than L-H. Therefore, the data 4 and the data 7 need to be padded (padding), so that sizes of padded data 4 and padded data 7 are equal to L-H. Then, the data 1 to the data 3, the data 5, the data 6, the padded data 4, and the padded data 7 are coded, to generate one piece of coded data EData 1. Coding herein may be block coding, or may be sliding window coding. In FIG. 16a, block coding is used as an example. A coded packet header (for example, an NC_Header in FIG. 16a) is added to the coded data EData 1 to obtain a coded packet EPkt 1. CRC is separately performed on the original data packets Pkt 1 to Pkt 7 and the coded packet EPkt 1 to generate CRC codes in the preset size (R). The last data packets of the two first MAC PDUs are fixed as original data packets, for example, an original data packet Pkt 4 and the original data packet Pkt 7 in FIG. 16a. Other data packets are arranged in a sequence in which original data packets Pkt 1 to Pkt 3, Pkt 5, and Pkt 6 are before the coded packet EPkt 1, to separately form the two first MAC PDUs. A CRC code generated by performing CRC on each data packet is after the last bit of the data packet. The first MAC PDU is carried on a TB for transmission.

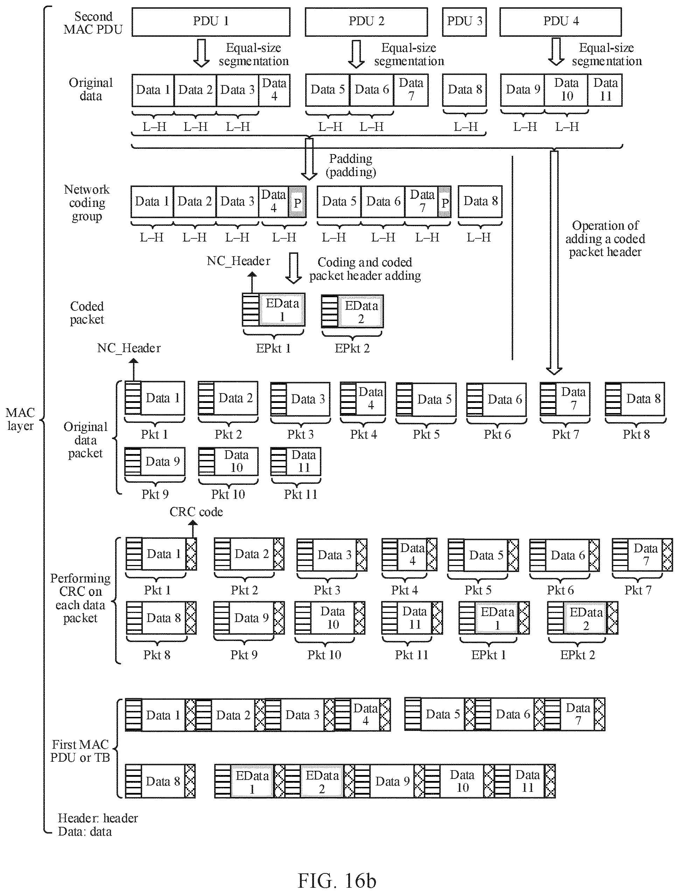

In another example, on a basis of Embodiment 3, the CRC code with the fixed bit is added after the last bit of each data packet. FIG. 16b is a sixth schematic diagram of data transmission by the coding end according to an embodiment of this application. In FIG. 16a, for example, the last data packet included in each first MAC PDU is an original data packet in the preset rule. As shown in FIG. 16b, N is equal to 8, and it is obtained, through calculation based on the code rate (cr), that M is equal to 2. The NC function is located at the MAC layer. It is obtained, through calculation according to Formula (1-2) that a 1st first MAC PDU can include four data packets, a 2nd first MAC PDU can include three data packets, a 3rd first MAC PDU can include one data packet, and a 4th first MAC PDU can include five data packets. The MAC layer calculates, according to Formula (3-3) or formula (3-4), a size of original data (namely, a second MAC PDU) that can be included in each first MAC PDU. Each time receiving a second MAC PDU (for example, a PDU 1 to a PDU 4 in FIG. 16b), the MAC layer performs equal-size segmentation on the second MAC PDU based on the difference (namely, L-H) between the preset data packet size (L) and the preset header size (H). Equal-size segmentation is performed on the PDU 1 to obtain four pieces of original data that are respectively represented as data 1 to data 4. Equal-size segmentation is performed on a PDU 2 to obtain three pieces of original data that are respectively represented as data 5 to data 7. A size of a PDU 3 is exactly equal to L-H, is used as one piece of original data, and is represented as data 8. Equal-size segmentation is performed on the PDU 4 to obtain three pieces of original data that are respectively represented as data 9 to data 11. Because N is equal to 8, original data, namely, the data 1 to the data 8, is in one network coding group, and original data, namely the data 9 to the data 11, is original data in another network coding group. Sizes of the data 1 to data 3, the data 5, data 6, and the data 8 are all equal to L-H, and sizes of the data 4 and the data 7 are less than L-H. Coded packet headers (for example, NC_Header in FIG. 16b) are respectively added to the data 1 to the data 8 to obtain original data packets Pkt 1 to Pkt 8. Coded packet headers are respectively added to the data 9 to the data 11 to obtain original data packets Pkt 9 to Pkt 11. The sizes of the data 4 and the data 7 are less than L-H. Therefore, the data 4 and the data 7 need to be padded (padding), so that sizes of padded data 4 and padded data 7 are equal to L-H. Then, block coding is performed on the data 1 to the data 3, the data 5, the data 6, the data 8, the padded data 4, and the padded data 7 to generate two pieces of coded data that are respectively represented as EData 1 and EData 2. Coded packet headers (for example, NC_Header in FIG. 16b) are respectively added to the coded data EData 1 and EData 2 to obtain coded packets EPkt 1 and EPkt 2. CRC is separately performed on the original data packets Pkt 1 to Pkt 11 and the coded packet EPkt 1 and EPkt 2 to generate CRC codes in the preset size (R). Only eight data packets can be placed in the first three first MAC PDUs. Therefore, the original data packets Pkt 1 to Pkt 8 and the coded packets EPkt 1 and EPkt 2 are arranged according to the rule that the original data packet is before the coded data packet. In this case, the coded packets EPkt 1 and EPkt 2 and the original data packets Pkt 9 to Pkt 11 are sequentially placed in the 4th first MAC PDU. A CRC code generated by performing CRC on each data packet is after the last bit of the data packet. Herein, P is equal to 4, K is equal to 11 (8+3), and Q is equal to 2. The first MAC PDU is carried on a TB for transmission.

It can be learned that, in embodiments of this application, the CRC code with the fixed bit is introduced after the last bit of each data packet. In this way, a decoding end/receive end (namely, the second device) can divide the first MAC PDU or the TB based on a sum (L+R) of the preset data packet size L and the preset size R of the CRC code instead of using a CB CRC result in a TB with a CRC error, to obtain a location and a boundary of each data packet, and then directly perform CRC on each data packet to determine whether each data packet is correct. In a data packet with CRC success, a header is parsed to determine whether the data packet is an original data packet or a coded packet, and then an original data packet and a coded packet that are correctly received are jointly decoded, or feedback information is generated.

Due to factors such as interference and noise, not all TBs transmitted by the first device can be correctly received by the second device. In other words, a packet loss may occur in a transmission process. Therefore, in embodiments of this application, network coding is introduced to the MAC layer of the transmit end/coding end, so that when receiving sufficient correct and linearly unrelated data packets, the second device can restore lost original data by using these data packets. The following describes a data receiving procedure of the decoding end in FIG. 15.

S403: The second device obtains the P transport blocks, where the P transport blocks carry the P first MAC PDUs.

S404: The second device determines the N first data packets and the M second data packets from the P transport blocks, where the M second data packets are obtained by performing the network coding operation on the N pieces of original data included in the N first data packets.

S405: If there is a transport block with a cyclic redundancy check CRC error in the P transport blocks, the second device performs CRC on each data packet on the transport block with the CRC error to obtain a check result, and determines, based on the check result and the CRC code after the last bit of the data packet, a data packet with check success on the transport block with the CRC error.

S406: The second device decodes data packets with check success in the N first data packets and the M second data packets to obtain the N pieces of original data, and merges the N pieces of original data according to the preset rule to obtain one or more second MAC PDUs.

Optionally, for an implementation of step S403 in this embodiment of this application, refer to the implementation of step S303 in the embodiment shown in FIG. 13. Alternatively, for an implementation of step S403 in this embodiment of this application, refer to the implementation of step S203 in the embodiment shown in FIG. 6. Details are not described herein again.

Optionally, a PHY layer of the second device performs CRC on each obtained transport block. If CRC performed on a transport block has an error, the PHY layer of the second device still submits the transport block to a MAC layer for next processing. The MAC layer of the second device may perform equal-size segmentation on the transport block based on the sum (namely, L+R) of the preset data packet size L and the preset size/fixed bit R, to obtain a plurality of data segments. One data segment includes one data packet and a CRC code in/with the preset size/fixed bit generated by performing CRC on the data packet. In other words, in the data segment, front data in the size L is the data packet, and rear data in the size R size the CRC code generated after CRC is performed on the data packet. The MAC layer of the second device performs CRC on a data packet in each data segment to obtain a check result, then compares whether the check result matches the CRC code in the data segment, and if the check result matches the CRC code in the data segment, determines that check performed on the data packet in the data segment succeeds. On the contrary, if the check result does not match the CRC code in the data segment, it indicates that check performed on the data packet in the data segment has an error. In this way, the MAC layer of the second device can determine the data packet with check success on the transport block with the CRC error, or may determine a data packet with the check error in the transport block with the CRC error. The MAC layer of the second device may determine, according to the preset rule, whether the data packet with the check error on the transport block with the CRC error is an original data packet. If the data packet with the check error on the transport block with the CRC error is not an original data packet, that is, the data packet with the check error on the transport block with the CRC error is a coded packet, the data packet with check success on the transport block with the CRC error may be directly stored in storage space (for example, a buffer).

Optionally, the MAC layer of the second device obtains the P first MAC PDUs carried on the P transport blocks, and performs equal-size segmentation on the P first MAC PDUs based on the sum (namely, L+R) of the preset data packet size L and the preset size/fixed bit R, to obtain the K+Q data packets. The MAC layer of the second device may determine the N first data packets and the M second data packets from the K+Q data packet. The M second data packets are obtained by performing the network coding operation on the N pieces of original data included in the N first data packets. For a specific determining manner, refer to the corresponding descriptions in Embodiment 3. Details are not described herein again.

It should be understood that an execution sequence of step S404 and step S405 is not limited. For example, step S404 is performed before step S405, step S404 is performed after step S405, or step S404 and step S405 are performed at the same time.

Optionally, if the data packet with the check error on the transport block with the CRC error is an original data packet, the MAC layer of the second device determines whether the original data packet with the check error is one of the N first data packets. For a specific determining manner, refer to the corresponding descriptions in Embodiment 3. Details are not described herein again.

If the original data packet with the check error is one of the N first data packets, step S406 is performed. For an implementation of step S406 in this embodiment of this application, refer to the implementation of step S306 in the embodiment shown in FIG. 13. Alternatively, for an implementation of step S406 in this embodiment of this application, refer to the implementation of step S205 in the embodiment shown in FIG. 6. Details are not described herein again.

It can be learned that the MAC layer network coding scheme provided in embodiments of this application can improve performance of a low-latency high-rate service (for example, an XR service), reduce retransmission latency, and improve transmission reliability. In embodiments of this application, the CRC code with the fixed bit is further introduced after the last bit of each data packet, to support the decoding end/receive end (namely, the second device) in dividing a MAC PDU (herein, the foregoing first MAC PDU) or the TB, based on the sum (namely, L+R) of the preset data packet size L and the preset size/fixed bit R of the CRC code, when CRC performed on the TB has the error. In this way, the data packet on the TB/MAC PDU (herein, the foregoing first MAC PDU) is clearly located, that is, the boundary and the location of each data are obtained. CRC is performed on the data packet, to determine whether each data packet on the TB with the error is correct. The CB CRC result of the TB is not used. In addition, in embodiments of this application, each data packet can be determined more accurately, which is more accurate than the CB CRC result. For example, a CB corresponds to two data packets, and CRC performed on the CB has an error. In this case, according to a CB CRC determining principle, it is considered that check performed on both the two data packets has an error. However, actually, a bit in one packet may be incorrect, and the other packet is correct. Therefore, in embodiments of this application, the CRC code with the fixed bit directly follows the data packet, so that the data packet that is incorrectly determined through CB CRC to have the check error can be corrected to have check success. Then, all data packets with check success on the TB/MAC PDU (herein, the foregoing first MAC PDU) can be more accurately obtained.

The foregoing describes in detail the method in this application. To better implement the foregoing solutions in embodiments of this application, embodiments of this application further provide a corresponding apparatus or device.

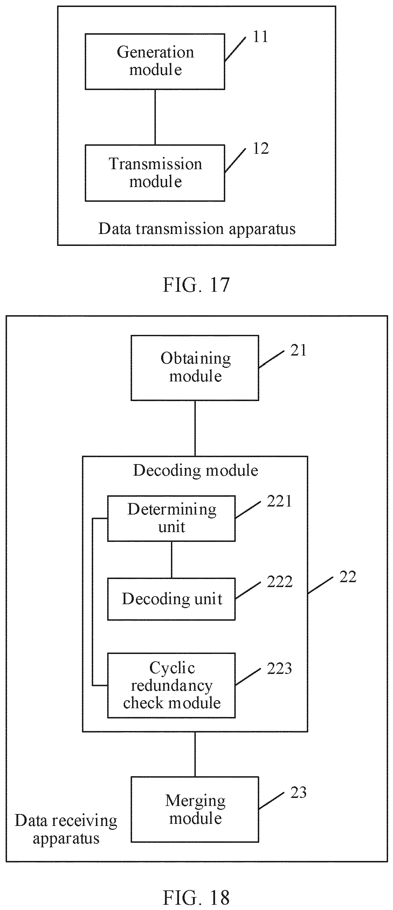

In embodiments of this application, the first device and the second device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that division into the modules in embodiments of this application is an example, is merely logical function division, and may be other division during actual implementation. The following describes in detail the apparatus in embodiments of this application with reference to FIG. 17 to FIG. 19.

When an integrated unit is used, FIG. 17 is a schematic diagram of a structure of a data transmission apparatus according to an embodiment of this application. The data transmission apparatus may be a first device or a chip or a circuit disposed in a first device. As shown in FIG. 17, the data transmission apparatus includes a generation module 11 and a transmission module 12.

The generation module 11 is configured to generate P first MAC PDUs, where K first data packets and Q second data packets that are included in the P first MAC PDUs are arranged according to a preset rule. The transmission module 12 is configured to transmit P transport blocks that carry the P first MAC PDUs, where one first MAC PDU is carried on one transport block.

Each of the P first MAC PDUs includes an integer quantity of data packets and sizes of other data packets than the last data packet are equal. The K first data packets are obtained by separately adding headers to K pieces of original data, and the K pieces of original data are obtained by separately performing a segmentation operation on P second MAC PDUs. The N first data packets in the K first data packets are obtained by separately adding headers to N pieces of original data in the K pieces of original data. M second data packets in the Q second data packets are generated by performing a network coding operation on the N pieces of original data. The second MAC PDU is a MAC PDU generated by data transmitted from a radio link control layer to a medium access control layer. The preset rule indicates locations of an original data packet and a coded packet in the P first MAC PDUs. P, K, Q, N, and M each are a positive integer, K is greater than or equal to N, and Q is greater than or equal to M. The first data packet is an original data packet, a header of the first data packet is an original data packet header or a coded packet header, and the second data packet is a coded packet and includes a coded packet header. A size of the original data packet header is equal to the size of the coded packet header.

Optionally, K is equal to N, and Q is equal to M. In other words, the P first MAC PDUs include N original data packets and M coded packets in total. The header of the first data packet is the original data packet header. Both N and M are determined based on a quantity of total data packets included in the P first MAC PDUs and a code rate. P is a preset value. N and M are respectively as follows:

$$M=\lceil n\times(1-cr)\rceil \ \text{ or } \ M=\lfloor n\times(1-cr)\rfloor;$$

and

$$N=n-M,$$

where

n indicates the quantity of total data packets included in the P first MAC PDUs, cr indicates the code rate, and is a ratio of the quantity of original data packets to the quantity of total data packets, and the quantity of total data packets is a sum of the quantity of original data packets and a quantity of coded packets generated by coding the original data packets; and

$$n = \sum_{i=1}^{P} n^i,$$

where

$n^i$ indicates a quantity of data packets included in an $i^{th}$ first MAC PDU in the P first MAC PDUs.

Optionally, the preset rule includes: The last data packet included in each of the P first MAC PDUs is an original data packet.

Optionally, the preset rule includes: If a size of the last data packet included in each of the P first MAC PDUs is less than a preset data packet size, the last data packet is an original data packet; and if a size of the last data packet included in the last first MAC PDU in the P first MAC PDUs is equal to the preset data packet size (L), the last data packet may be a coded packet or an original data packet.

Under the foregoing two preset rules, the original data packet header includes first indication information. The first indication information indicates that a data packet in which the first indication information is located is an original data packet. The coded packet header includes second indication information and a coding factor field. The second indication information indicates that a data packet in which the second indication information is located is a coded packet. The coding factor field indicates an index of a codebook. Optionally, the original data packet header and the coded packet header each further include a block identifier field or an offset field. The offset field indicates an offset value of a first MAC PDU in which the offset field is located, in the P first MAC PDUs, relative to a start first MAC PDU. The block identifier field indicates an identifier of a network coding group in which a data packet including the block identifier field is located.

Optionally, the preset rule further includes: An original data packet is before a coded packet in the other data packets than the last data packet included in each of the P first MAC PDUs. Under this preset rule, the original data packet header may not carry any field, and the coded packet header may carry the coding factor field.

Optionally, the network coding operation includes a padding operation and a coding operation. The coding operation includes block coding or sliding window coding. The padding operation is used to pad original data whose size is less than a difference between the preset data packet size and a preset header size in the N pieces of original data. If the coding operation includes sliding window coding, the coded packet header further includes an association depth field. The association depth field indicates a quantity of first MAC PDUs before a first MAC PDU in which the association depth field is located. Sliding window coding is coding an original data packet in the first MAC PDU in which the association depth field is located and an original data packet in a historical first MAC PDU indicated by the association depth field together.

Optionally, K is not equal to N, or Q is not equal to M. The header of the first data packet is the coded packet header. N is a preset quantity of original data packets, and M is determined based on N and a code rate. M is as follows:

$$M = \left\lceil \frac{N}{cr} \right\rceil - N \quad \text{or} \quad M = \left\lfloor \frac{N}{cr} \right\rfloor - N,$$

where

cr indicates the code rate.

Optionally, the preset rule includes: If a size of the last data packet included in each of the P first MAC PDUs is less than a preset data packet size, the last data packet is an original data packet. Under this preset rule, the coded packet header includes a block identifier field and a coding factor field. The coding factor field in the header of the first data packet indicates a unit vector, and the coding factor field in a header of the second data packet indicates an index of a codebook. The block identifier field indicates an identifier of a network coding group in which a data packet including the block identifier field is located.

Optionally, the preset rule further includes: The N first data packets and the M second data packets in the P first MAC PDUs satisfy a relationship that an original data packet is before a coded packet. Under this preset rule, the coded packet header includes a coding factor field. The coded packet header may further include a block identifier field. The coding factor field in the header of the first data packet indicates a unit vector, and the coding factor field in the header of the second data packet indicates the index of the codebook. The block identifier field indicates an identifier of a network coding group in which a data packet including the block identifier field is located.

Optionally, the preset rule further includes: If a size of a first MAC PDU in which the last first data packet in the N first data packets is located is not an integer multiple of the preset data packet size (L), the last data packet of the first MAC PDU in which the last first data packet is located is a first data packet other than the N first data packets in the K first data packets. If a size of a first MAC PDU in which any second data packet in the M second data packets is located is not an integer multiple of the preset data packet size, the last data packet of the first MAC PDU in which the any second data packet is located is a first data packet other than the N first data packets in the K first data packets. Under this preset rule, the coded packet header includes the coding factor field. The coding factor field in the header of the first data packet indicates the unit vector, and the coding factor field in the header of the second data packet indicates the index of the codebook.

Optionally, sizes of other data packets than the last data packet included in each of the P first MAC PDUs are all equal to the preset data packet size, and the size of the last data packet is less than or equal to the preset data packet size.

Optionally, a size of the last data packet included in an $i^{th}$ first MAC PDU in the P first MAC PDUs is determined based on a size of the $i^{th}$ first MAC PDU, a quantity of data packets included in the $i^{th}$ first MAC PDU, and the preset data packet size. The quantity of data packets included in the $i^{th}$ first MAC PDU is determined based on the size of the $i^{th}$ first MAC PDU and the preset data packet size.

Optionally, the size of the last data packet included in the $i^{th}$ first MAC PDU is as follows:

$$L_{sys}^{i} = Tbs^{i} - (n^{i} - 1) \times L$$

$L_{sys}^{i}$ indicates the size of the last data packet included in the $i^{th}$ first MAC PDU, $Tbs^{i}$ indicates the size of the $i^{th}$ first MAC PDU, $n^{i}$ indicates the quantity of data packets included in the $i^{th}$ first MAC PDU, and L indicates the preset data packet size.

The quantity $n^{i}$ of data packets included in the $i^{th}$ first MAC PDU is as follows:

$$n^{i} = \left\lceil \frac{Tbs^{i}}{L} \right\rceil$$

Optionally, a size of the last data packet included in an $i^{th}$ first MAC PDU in the P first MAC PDUs is determined based on a size of the $i^{th}$ first MAC PDU, a quantity of data packets included in the $i^{th}$ first MAC PDU, a preset data packet size, and a preset size of a cyclic redundancy check CRC code of the data packet. The quantity of data packets included in the $i^{th}$ first MAC PDU is determined based on the size of the $i^{th}$ first MAC PDU, the preset data packet size, and the preset size of the CRC code of the data packet. The P first MAC PDUs further includes CRC codes in the preset size that are obtained by performing CRC on each data packet. A CRC code in the preset size that is obtained by performing CRC on one data packet is after the last bit of the data packet.

Optionally, the size of the last data packet included in the i$^{th}$ first MAC PDU is as follows:

$$L^i_{sys} = Tbs^i - (n^i - 1) \times (L+R) - R$$

$L^i_{sys}$ indicates the size of the last data packet included in the i$^{th}$ first MAC PDU, $Tbs^i$ indicates the size of the i$^{th}$ first MAC PDU, $n^i$ indicates the quantity of data packets included in the i$^{th}$ first MAC PDU, L indicates the preset data packet size, and R represents the preset size of the CRC code of the data packet.

The quantity $n^i$ of data packets included in the i$^{th}$ first MAC PDU is as follows:

$$n^i = \left\lceil \frac{Tbs^i}{L+R} \right\rceil$$

Optionally, a size of an i$^{th}$ second MAC PDU in the P second MAC PDUs is determined based on a quantity of original data packets included in the i$^{th}$ first MAC PDU in the P first MAC PDUs, the preset data packet size, the preset header size, and the size of the last data packet included in the i$^{th}$ first MAC PDU. The quantity of original data packets included in the i$^{th}$ first MAC PDU is determined based on the quantity of data packets included in the i$^{th}$ first MAC PDU and according to the preset rule.

Optionally, a size of an i$^{th}$ second MAC PDU in the P second MAC PDUs is as follows:

$$y_i = (n^i_{sys} - 1) \times (L - H) + L^i_{sys} - H ,$$

where

$y_i$ indicates the size of the i$^{th}$ second MAC PDU, $n^i_{sys}$ indicates the quantity of original data packets included in the i$^{th}$ first MAC PDU, H indicates the preset header size, and $L^i_{sys}$ indicates the size of the last data packet included in the i$^{th}$ first MAC PDU.

Optionally, a size of an i$^{th}$ second MAC PDU in the P second MAC PDUs is determined based on a quantity of original data packets included in the i$^{th}$ first MAC PDU in the P first MAC PDUs, the preset data packet size, the preset header size, the size of the last data packet included in the i$^{th}$ first MAC PDU, and the preset size of the CRC code of the data packet. The quantity of original data packets included in the i$^{th}$ first MAC PDU is determined based on the quantity of data packets included in the i$^{th}$ first MAC PDU and according to the preset rule. The P first MAC PDUs further includes CRC codes in the preset size that are obtained by performing CRC on each data packet. A CRC code in the preset size that is obtained by performing CRC on one data packet is after the last bit of the data packet.

Optionally, a size of an i$^{th}$ second MAC PDU in the P second MAC PDUs is as follows:

$$y_i = (n^i_{sys} - 1) \times (L - H - R) + L^i_{sys} - H - R ,$$

where

$y_i$ indicates the size of the i$^{th}$ second MAC PDU, $n^i_{sys}$ indicates the quantity of original data packets included in the i$^{th}$ first MAC PDU, H indicates the preset header size, $L^i_{sys}$ indicates the size of the last data packet included in the i$^{th}$ first MAC PDU, and R indicates the preset size of the CRC code of the data packet.

Optionally, the segmentation operation includes performing equal-size segmentation based on the difference between the preset data packet size and the preset header size.

Optionally, the size of the original data packet header and the size of the coded packet header are equal to the preset header size.

The generation module 11 may also be referred to as a processing module, and the transmission module 12 may also be referred to as a transceiver module.

It should be understood that the data transmission apparatus may correspondingly perform any one of the foregoing embodiments, and the foregoing operations or functions of the units in the data transmission apparatus are separately used to implement corresponding operations of the first device in any one of the foregoing embodiments. For technical effects, refer to the technical effects in any one of the foregoing embodiments. For brevity, details are not described herein again.

FIG. 18 is a schematic diagram of a structure of a data receiving apparatus according to an embodiment of this application. The data receiving apparatus may be a second device or a chip or a circuit disposed in a second device. As shown in FIG. 18, the data receiving apparatus includes an obtaining module 21, a decoding module 22, and a merging module 23.

The obtaining module 21 is configured to obtain P transport blocks. The P transport blocks carry P first MAC PDUs. K first data packets and Q second data packets that are included in the P first MAC PDUs are arranged according to a preset rule. Each of the P first MAC PDUs includes an integer quantity of data packets and sizes of other data packets than the last data packet are equal. The K first data packets are obtained by separately adding headers to K pieces of original data. The K pieces of original data are obtained by separately performing a segmentation operation on P second MAC PDUs. N first data packets in the K first data packets are obtained by separately adding headers to N pieces of original data in the K pieces of original data. M second data packets in the Q second data packets are generated by performing a network coding operation on the N pieces of original data. The second MAC PDU is a MAC PDU generated by using data transmitted from a radio link control layer to a medium access control layer. The preset rule indicates locations of an original data packet and a coded packet in the P first MAC PDUs. The decoding module 22 is configured to decode the P transport blocks to obtain the N pieces of original data. The merging module 23 is configured to merge the N pieces of original data according to the preset rule to obtain the one or more second MAC PDUs. P, K, Q, N, and M each are a positive integer, K is greater than or equal to N, and Q is greater than or equal to M. The first data packet is an original data packet, and a header of the first data packet is an original data packet header or a coded packet header. The second data packet is a coded packet and includes a coded packet header.

Optionally, K is equal to N, and Q is equal to M. In other words, the P first MAC PDUs include N original data packets and M coded packets in total. The header of the first data packet is the original data packet header. Both N and M are determined based on a quantity of total data packets included in the P first MAC PDUs and a code rate.

The decoding module 22 includes a determining unit 221 and a decoding unit 222. The determining unit 221 is configured to: when there is a transport block with a cyclic redundancy check CRC error in the P transport blocks, determine a data packet with check success on the transport block with the CRC error based on a check result of CRC performed on a CB in the transport block with the CRC error, a quantity of data packets included in the transport block with the CRC error, and a size of each data packet. The decoding unit 222 is configured to decoding a data packet with check success on the P transport blocks to obtain the N pieces of original data.

Optionally, K is not equal to N, or Q is not equal to M. The header of the first data packet is the coded packet header. N is a preset quantity of original data packets, and M is determined based on N and a code rate.

The determining unit 221 is configured to determine the N first data packets and the M second data packets from the P transport blocks, where the M second data packets are obtained by performing the network coding operation on the N pieces of original data included in the N first data packets. The determining unit 221 is further configured to: when there is a transport block with a CRC error on the P transport blocks, determine a data packet with check success on the transport block with the CRC error based on a check result of CRC performed on the CB in the transport block with the CRC error, a quantity of data packets included in the transport block with the CRC error, and a size of each data packet. The decoding unit 222 is configured to decode data packets with check success in the N first data packets and the M second data packets to obtain the N pieces of original data.

Optionally, the P first MAC PDUs further include CRC codes in a preset size (or with a fixed bit) that are obtained by performing CRC on each data packet. A CRC code in the preset size that is obtained by performing CRC on one data packet is after the last bit of the data packet.

The decoding module 22 further includes a cyclic redundancy check unit 223. The determining unit 221 is configured to determine the N first data packets and the M second data packets from the P transport blocks, where the M second data packets are obtained by performing the network coding operation on the N pieces of original data included in the N first data packets. The cyclic redundancy check unit 223 is configured to: if there is a transport block with a cyclic redundancy check CRC error in the P transport blocks, perform CRC on each data packet on the transport block with the CRC error to obtain a check result. The determining unit 221 is configured to determine, based on the check result and the CRC code after the last bit of the data packet, the data packet with check success on the transport block with the CRC error. The decoding unit 222 is configured to decode the data packets with check success in the N first data packets and the M second data packets to obtain the N pieces of original data.

The obtaining module 21, the decoding module 22, and the merging module 23 may be integrated into one module, for example, a processing module. The obtaining module 21 may include a transceiver unit, configured to receive and transmit data packets, information, or the like.

It should be understood that the data receiving apparatus may correspondingly perform any one of the foregoing embodiments, and the foregoing operations or functions of the units in the data receiving apparatus are separately used to implement corresponding operations of the second device in any one of the foregoing embodiments. For technical effects, refer to the technical effects in any one of the foregoing embodiments. For brevity, details are not described herein again.

Optionally, in the foregoing embodiments, the generation module may correspond to an encoder, and the decoding module may correspond to a decoder. The encoder or the decoder may be implemented by using a hardware circuit or software. A function of a module other than the generation module, the decoding module, and a module corresponding to the transceiver unit may be implemented by a processor.

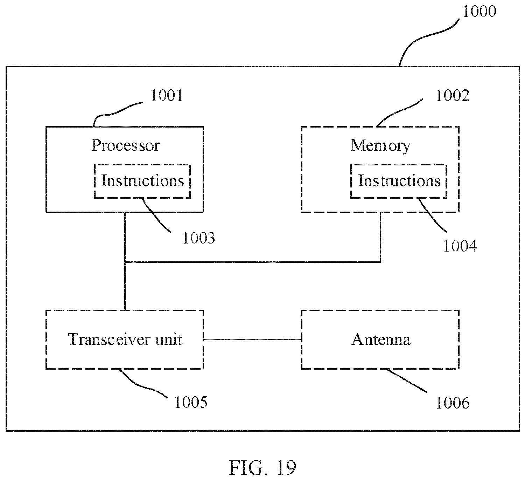

FIG. 19 is a schematic diagram of a structure of a communication apparatus according to an embodiment of this application. As shown in FIG. 19, the communication apparatus 1000 provided in this embodiment of this application may be configured to implement the method described in the foregoing method embodiments. For details, refer to the descriptions in the foregoing method embodiments. The communication apparatus 1000 may be any one of the first device and the second device, or the communication apparatus 1000 may be any one of the data transmission apparatus shown in FIG. 17 and the data receiving apparatus shown in FIG. 18.

The communication apparatus 1000 includes one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control an apparatus (for example, a communication device, a base station, or a chip), execute a software program, and process data of the software program. The apparatus may include a transceiver unit, configured to input (receive) and output (send) signals. For example, the apparatus may be a chip, and the transceiver unit may be an input and/or output circuit of the chip, or a communication interface. The chip may be used in a communication device or an access network device (for example, a base station). For another example, the apparatus may be a communication device (for example, UE) or an access network device (for example, a base station), and the transceiver unit may be a transceiver or a radio frequency chip.

The communication apparatus 1000 includes the one or more processors 1001. The one or more processors 1001 may implement the method performed by the first device or the second device in any one of the foregoing embodiments. The processor 1001 may implement functions of the generation module 11 in FIG. 17, or implement functions of the decoding module 22 and the merging module 23 in FIG. 18. Optionally, the processor 1001 may further implement functions of the transmission module 12 in FIG. 17, or implement functions of the obtaining module in FIG. 18.

Optionally, the processor 1001 may further implement another function in addition to the method in any one of the foregoing embodiments.

Optionally, in a design, the processor 1001 may also include instructions 1003. The instructions may be run on the processor, to enable the communication apparatus 1000 to perform the method described in any one of the foregoing method embodiments.

In another possible design, the communication apparatus 1000 may also include a circuit. The circuit may implement functions of the first device or the second device in any one of the foregoing method embodiments.

In still another possible design, the communication apparatus 1000 may include one or more memories 1002. The memory store instructions 1004. The instructions may be run on the processor, to enable the communication apparatus 1000 to perform the method described in any one of the foregoing method embodiments. Optionally, the memory may further store data. Optionally, the processor may also store instructions and/or data. For example, the one or more memories 1002 may store the first data packet described in the foregoing embodiments, or other information in the foregoing embodiments. The processor and the memory may be separately disposed, or may be integrated together.

In still another possible design, the communication apparatus 1000 may further include a transceiver unit 1005 and an antenna 1006, or include a communication interface. The transceiver unit 1005 may be referred to as a transceiver machine, a transceiver circuit, or a transceiver, and is configured to implement a transceiver function of the apparatus through the antenna 1006. The communication interface (not shown in the figure) may be used for communication between a core network device and an access network device, or communication between an access network device and an access network device. Optionally, the communication interface may be a wired communication interface, for example, an optical fiber communication interface. Optionally, the communication interface may implement functions of the transmission module 12 in FIG. 17 or functions of the obtaining module 21 in FIG. 18.

The processor 1001 may be referred to as a processing unit, and controls an apparatus (for example, a communication device).

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the foregoing embodiments, all or some of the foregoing embodiments may be implemented in a form of a computer program product. The computer program product includes one or more computer instructions or computer programs. When the computer instruction or the computer program is loaded or executed on a computer, the procedure or functions according to embodiments of this application are completely or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, a computer, a server, or a data center to another website, computer, server, or data center in a wired manner, for example, an optical fiber, or a wireless manner, for example, infrared, wireless, or microwave. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

An embodiment of this application further provides a computer program product. The computer program product includes computer program code. When the computer program code is run on a computer, the computer is enabled to perform method steps of the first device described in the foregoing embodiments. Alternatively, when the computer program code is run on a computer, the computer is enabled to perform method steps of the second device described in the foregoing embodiments.

An embodiment of this application further provides a computer-readable storage medium. The computer-readable storage medium stores program instructions. When the program instructions are run on a computer, the computer is enabled to perform method steps of the first device described in the foregoing embodiments. Alternatively, when the computer program code is run on a computer, the computer is enabled to perform method steps of the second device described in the foregoing embodiments.

An embodiment of this application further provides an apparatus. The apparatus may be a chip. The chip includes a processor. The processor is configured to: read a computer program stored in a memory and execute the computer program, to perform the method in any possible implementation of any one of the foregoing embodiments. Optionally, the chip further includes a memory. The memory is connected to the processor through a circuit or an electrical wire. Further optionally, the chip further includes a communication interface. The processor is connected to the communication interface. The communication interface is configured to receive to-be-processed data and/or a to-be-processed signal. The processor obtains the data and/or the signal from the communication interface, processes the data and/or the signal, and outputs a processing result through the communication interface. The communication interface may be an input/output interface.

Optionally, the processor and the memory may be physically mutually independent units, or the memory may be integrated with the processor.

In another embodiment of this application, a communication system is further provided. The communication system includes a first device and a second device. The first device and the second device may perform the method in any one of the foregoing embodiments.

A person of ordinary skill in the art may understand that all or some of the procedures of the methods in embodiments may be implemented by a computer program instructing relevant hardware. The program may be stored in a computer-readable storage medium. When the program is executed, the procedures of the methods in embodiments may be performed. The foregoing storage medium includes any medium that can store program code, for example, a ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data transmission method, comprising:

    generating P first medium access control MAC protocol data units PDUs, wherein K first data packets and Q second data packets that are comprised in the P first MAC PDUs are arranged according to a preset rule, each of the P first MAC PDUs comprises an integer quantity of data packets and sizes of other data packets than the last data packet are equal, the K first data packets are obtained by separately adding headers to K pieces of original data, the K pieces of original data are obtained by separately performing a segmentation operation on P second MAC PDUs, N first data packets in the K first data packets are obtained by separately adding headers to N pieces of original data in the K pieces of original data, M second data packets in the Q second data packets are generated by performing a network coding operation on the N pieces of original data, the second MAC PDU is a MAC PDU generated by using data transmitted from a radio link control layer to a medium access control layer, the preset rule indicates locations of an original data packet and a coded packet in the P first MAC PDUs, P, K, Q, N, and M each are a positive integer, K is greater than or equal to N, and Q is greater than or equal to M; and
    transmitting P transport blocks that carry the P first MAC PDUs, wherein one first MAC PDU is carried on one transport block; and
    the first data packet is an original data packet, a header of the first data packet is an original data packet header or a coded packet header, and the second data packet is a coded packet and comprises a coded packet header.

2.  The method according to claim 1, wherein K is equal to N, Q is equal to M, and both N and M are determined based on a quantity of total data packets comprised in the P first MAC PDUs and a code rate.

3.  The method according to claim 2, wherein P is a preset value, and N and M are respectively as follows:

$$M = \lceil n \times (1-cr) \rceil \ \text{ or } \ M = \lfloor n \times (1-cr) \rfloor;$$

    and

$$N = n - M,$$

    wherein

    n indicates the quantity of total data packets comprised in the P first MAC PDUs, cr indicates the code rate, and is a ratio of the quantity of original data packets to the quantity of total data packets, and the quantity of total data packets is a sum of the quantity of original data packets and a quantity of coded packets generated by coding the original data packets;
    the symbol $\lceil \ \rceil$ indicates rounding up, and the symbol $\lfloor \ \rfloor$ indicates rounding down; and

$$n = \sum_{i=1}^{P} n^{i},$$

    wherein
    $n^{i}$ indicates a quantity of data packets comprised in an $i^{th}$ first MAC PDU in the P first MAC PDUs.

4.  The method according to claim 2 or 3, wherein the preset rule comprises: the last data packet comprised in each of the P first MAC PDUs is an original data packet.

5.  The method according to claim 2 or 3, wherein the preset rule comprises: if a size of the last data packet comprised in each of the P first MAC PDUs is less than a preset data packet size, the last data packet is an original data packet; and

if a size of the last data packet comprised in the last first MAC PDU in the P first MAC PDUs is equal to the preset data packet size, the last data packet is a coded packet or an original data packet.

6. The method according to claim 4 or 5, wherein the preset rule comprises: an original data packet is before a coded packet in the other data packets than the last data packet comprised in each of the P first MAC PDU.

7. The method according to any one of claims 2 to 6, wherein the header of the first data packet is the original data packet header, and a size of the original data packet header is equal to a size of the coded packet header;

the original data packet header comprises first indication information, and the first indication information indicates that a data packet in which the first indication information is located is an original data packet; and

the coded packet header comprises second indication information and a coding factor field, the second indication information indicates that a data packet in which the second indication information is located is a coded packet, and the coding factor field indicates an index of a codebook.

8. The method according to claim 7, wherein the original data packet header and the coded packet header each further comprise a block identifier field or an offset field, the offset field indicates an offset value of a first MAC PDU, in which the offset field is located in the P first MAC PDUs, relative to a start first MAC PDU, and the block identifier field indicates an identifier of a network coding group in which a data packet comprising the block identifier field is located.

9. The method according to any one of claims 2 to 8, wherein the network coding operation comprises a padding operation and a coding operation, the coding operation comprises block coding or sliding window coding, and the padding operation is used to pad original data whose size is less than a difference between the preset data packet size and a preset header size in the N pieces of original data; and

if the coding operation comprises sliding window coding, the coded packet header further comprises an association depth field, the association depth field indicates a quantity of first MAC PDUs before a first MAC PDU in which the association depth field is located, and sliding window coding is coding an original data packet in the first MAC PDU in which the association depth field is located and an original data packet in a historical first MAC PDU indicated by the association depth field together.

10. The method according to claim 1, wherein N is a preset quantity of original data packets, and M is determined based on N and a code rate.

11. The method according to claim 10, wherein M is as follows:

$$M = \left\lceil \frac{N}{cr} \right\rceil - N \ \text{ or } \ M = \left\lfloor \frac{N}{cr} \right\rfloor - N,$$

wherein

cr indicates the code rate, and is a ratio of the quantity of original data packets to the quantity of total data packets, and the quantity of total data packets is a sum of the quantity of original data packets and a quantity of coded packets generated by coding the original data packets; and

the symbol ⌈ ⌉ indicates rounding up, and the symbol ⌊ ⌋ indicates rounding down.

12. The method according to claim 10 or 11, wherein the preset rule comprises: if a size of the last data packet comprised in each of the P first MAC PDUs is less than a preset data packet size, the last data packet is an original data packet.

13. The method according to claim 12, wherein the preset rule further comprises: the N first data packets and the M second data packets in the P first MAC PDUs satisfy a relationship that the original data packet is before the coded packet.

14. The method according to claim 13, wherein the preset rule further comprises: if a size of a first MAC PDU in which the last first data packet in the N first data packets is located is not an integer multiple of the preset data packet size, the last data packet of the first MAC PDU in which the last first data packet is located is a first data packet other than the N first data packets in the K first data packets; and

if a size of a first MAC PDU in which any second data packet in the M second data packets is located is not an integer multiple of the preset data packet size, the last data packet of the first MAC PDU in which the any second data packet is located is a first data packet other than the N first data packets in the K first data packets.

15. The method according to any one of claims 10 to 14, wherein the header of the first data packet is the coded packet header; and

the coded packet header comprises a coding factor field, the coding factor field in the coded packet header of the first data packet indicates a unit vector, and a coding factor field in the coded packet header of the second data packet indicates an index of a codebook.

16. The method according to claim 15, wherein the coded packet header further comprises a block identifier field; and

the block identifier field indicates an identifier of a network coding group in which a data packet comprising the block identifier field is located.

17. The method according to any one of claims 1 to 16, wherein the sizes of the other data packets than the last data packet comprised in each of the P first MAC PDUs are all equal to the preset data packet size, and the size of the last data packet is less than or equal to the preset data packet size.

18. The method according to any one of claims 1 to 17, wherein a size of the last data packet comprised in the $i^{th}$ first MAC PDU in the P first MAC PDUs is determined based on a size of the $i^{th}$ first MAC PDU, the quantity of data packets comprised in the $i^{th}$ first MAC PDU, and the preset data packet size; and

the quantity of data packets comprised in the $i^{th}$ first MAC PDU is determined based on the size of the $i^{th}$ first MAC PDU and the preset data packet size.

19. The method according to claim 18, wherein the size of the last data packet comprised in the $i^{th}$ first MAC PDU is as follows:

$$L_{sys}^{i} = Tbs^{i} - (n^{i} - 1) \times L,$$

wherein

$L_{sys}^{i}$ indicates the size of the last data packet comprised in the $i^{th}$ first MAC PDU, $Tbs^{i}$ indicates the size of the $i^{th}$ first MAC PDU, $n^{i}$ indicates the quantity of data packets comprised in the $i^{th}$ first MAC PDU, and L indicates the preset data packet size; and

the quantity $n^{i}$ of data packets comprised in the $i^{th}$ first MAC PDU is as follows:

$$n^{i} = \left\lceil \frac{Tbs^{i}}{L} \right\rceil,$$

wherein
the symbol ⌈ ⌉ indicates rounding up.

20. The method according to any one of claims 1 to 17, wherein a size of the last data packet comprised in the $i^{th}$ first MAC PDU in the P first MAC PDUs is determined based on a size of the $i^{th}$ first MAC PDU, the quantity of data packets comprised in the $i^{th}$ first MAC PDU, the preset data packet size, and a preset size of a cyclic redundancy check CRC code of the data packet;

the quantity of data packets comprised in the $i^{th}$ first MAC PDU is determined based on the size of the $i^{th}$ first MAC PDU, the preset data packet size, and the preset size of the CRC code of the data packet; and

the P first MAC PDUs further comprise CRC codes in the preset size that are obtained by performing CRC on each data packet, and a CRC code in the preset size that is obtained by performing CRC on one data packet is after the last bit of the data packet.

21. The method according to claim 20, wherein the size of the last data packet comprised in the ith first MAC PDU is as follows:

$$L^i_{sys} = Tbs^i - (n^i - 1) \times (L+R) - R,$$

wherein

$L^i_{sys}$ indicates the size of the last data packet comprised in the ith first MAC PDU, $Tbs^i$ indicates the size of the ith first MAC PDU, $n^i$ indicates the quantity of data packets comprised in the ith first MAC PDU, L indicates the preset data packet size, and R indicates the preset size of the CRC code of the data packet; and
the quantity $n^i$ of data packets comprised in the ith first MAC PDU is as follows:

$$n^i = \left\lceil \frac{Tbs^i}{L+R} \right\rceil,$$

wherein
the symbol $\lceil \ \rceil$ indicates rounding up.

22. The method according to any one of claims 1 to 21, wherein a size of an ith second MAC PDU in the P second MAC PDUs is determined based on a quantity of original data packets comprised in the ith first MAC PDU in the P first MAC PDUs, the preset data packet size, the preset header size, and the size of the last data packet comprised in the ith first MAC PDU; and
the quantity of original data packets comprised in the ith first MAC PDU is determined based on the quantity of data packets comprised in the ith first MAC PDU and according to the preset rule.

23. The method according to claim 22, wherein the size of the ith second MAC PDU in the P second MAC PDUs is as follows:

$$y_i = (n^i_{sys} - 1) \times (L - H) + L^i_{sys} - H,$$

wherein

$y_i$ indicates the size of the ith second MAC PDU, $n^i_{sys}$ indicates the quantity of original data packets comprised in the ith first MAC PDU, H indicates the preset header size, and $L^i_{sys}$ indicates the size of the last data packet comprised in the ith first MAC PDU.

24. The method according to any one of claims 1 to 21, wherein a size of an ith second MAC PDU in the P second MAC PDUs is determined based on a quantity of original data packets comprised in the ith first MAC PDU in the P first MAC PDUs, the preset data packet size, the preset header size, the size of the last data packet comprised in the ith first MAC PDU, and the preset size of the CRC code of the data packet;

the quantity of original data packets comprised in the ith first MAC PDU is determined based on the quantity of data packets comprised in the ith first MAC PDU and according to the preset rule; and
the P first MAC PDUs further comprise the CRC codes in the preset size that are obtained by performing CRC on each data packet, and a CRC code in the preset size that is obtained by performing CRC on one data packet is after the last bit of the data packet.

25. The method according to claim 24, wherein the size of the ith second MAC PDU in the P second MAC PDUs is as follows:

$$y_i = (n^i_{sys} - 1) \times (L - H - R) + L^i_{sys} - H - R,$$

wherein

$y_i$ indicates the size of the i$^{th}$ second MAC PDU, $n_{sys}^i$ indicates the quantity of original data packets comprised in the i$^{th}$ first MAC PDU, H indicates the preset header size, $L_{sys}^i$ indicates the size of the last data packet comprised in the i$^{th}$ first MAC PDU, and R indicates the preset size of the CRC code of the data packet.

26. The method according to any one of claims 1 to 25, wherein the segmentation operation comprises performing equal-size segmentation based on the difference between the preset data packet size and the preset header size.

27. The method according to any one of claims 1 to 26, wherein the sizes of the original data packet header and the coded packet header are equal to the preset header size.

28. A data transmission apparatus, comprising a module configured to perform the method according to any one of claims 1 to 27.

29. A data receiving method, comprising:

obtaining P transport blocks, wherein the P transport blocks carry P first MAC PDUs, one transport block carries one first MAC PDU, K first data packets and Q second data packets that are comprised in the P first MAC PDUs are arranged according to a preset rule, each of the P first MAC PDUs comprises an integer quantity of data packets and sizes of other data packets than the last data packet are equal, the K first data packets are obtained by separately adding headers to K pieces of original data, the K pieces of original data are obtained by separately performing a segmentation operation on P second MAC PDUs, N first data packets in the K first data packets are obtained by separately adding headers to N pieces of original data in the K pieces of original data, M second data packets in the Q second data packets are generated by performing a network coding operation on the N pieces of original data, the preset rule indicates locations of an original data packet and a coded packet in the P first MAC PDUs, P, K, Q, N, and M each are a positive integer, K is greater than or equal to N, and Q is greater than or equal to M; and
performing a decoding operation on the P transport blocks to obtain the N pieces of original data, and merging the N pieces of original data to obtain one or more second MAC PDUs, wherein
the first data packet is an original data packet, a header of the first data packet is an original data packet header or a coded packet header, and the second data packet is a coded packet and comprises a coded packet header.

30. The method according to claim 29, wherein the performing a decoding operation on the P transport blocks to obtain the N pieces of original data comprises:

if there is a transport block with a cyclic redundancy check CRC error in the P transport blocks, determining, based on a check result of CRC performed on a coding block CB in the transport block with the CRC error, a quantity of data packets comprised in the transport block with the CRC error, and a size of each data packet, a data packet with check success on the transport block with the CRC error; and
decoding a data packet with check success on the P transport blocks to obtain the N pieces of original data.

31. The method according to claim 29, wherein the performing a decoding operation on the P transport blocks to obtain the N pieces of original data comprises:

determining the N first data packets and the M second data packets from the P transport blocks, wherein the M second data packets are obtained by performing the network coding operation on the N pieces of original data comprised in the N first data packets;
if there is a transport block with a CRC error in the P transport blocks, determining, based on a check result of CRC performed on a CB in the transport block with the CRC error, a quantity of data packets comprised in the transport block with the CRC error, and a size of each data packet, a data packet with check success on the transport block with the CRC error; and
decoding data packets with check success in the N first data packets and the M second data packets to obtain the N pieces of original data.

32. The method according to claim 29, wherein a size of the last data packet comprised in an i$^{th}$ first MAC PDU in the P first MAC PDUs is determined based on a size of the ith first MAC PDU, a quantity of data packets comprised in the ith first MAC PDU, a preset data packet size, and a preset size of a cyclic redundancy check CRC code of the data packet;

the quantity of data packets comprised in the ith first MAC PDU is determined based on the size of the ith first MAC PDU, the preset data packet size, and the preset size of the CRC code of the data packet; and
the P first MAC PDUs further comprise CRC codes in the preset size that are obtained by performing CRC on each data packet, and a CRC code in the preset size that is obtained by performing CRC on one data packet is after the last bit of the data packet.

33. The method according to claim 32, wherein the size of the last data packet comprised in the ith first MAC PDU is as follows:

$$L_{sys}^{i} = Tbs^{i} - (n^{i} - 1) \times (L+R) - R,$$

wherein

$L_{sys}^{i}$ indicates the size of the last data packet comprised in the ith first MAC PDU, $Tbs^{i}$ indicates the size of the ith first MAC PDU, $n^{i}$ indicates the quantity of data packets comprised in the ith first MAC PDU, L indicates the preset data packet size, and R indicates the preset size of the CRC code of the data packet; and
the quantity $n^{i}$ of data packets comprised in the ith first MAC PDU is as follows:

$$n^{i} = \left\lceil \frac{Tbs^{i}}{L+R} \right\rceil,$$

wherein
the symbol ⌈ ⌉ indicates rounding up.

34. The method according to claim 32 or 33, wherein the performing a decoding operation on the P transport blocks to obtain the N pieces of original data comprises:

determining the N first data packets and the M second data packets from the P transport blocks, wherein the M second data packets are obtained by performing the network coding operation on the N pieces of original data comprised in the N first data packets;
if there is a transport block with a CRC error in the P transport blocks, performing CRC on each data packet on the transport block with the CRC error to obtain a check result, and determining, based on the check result and the CRC code after the last bit of the data packet, a data packet with check success on the transport block with the CRC error; and
decoding data packets with check success in the N first data packets and the M second data packets to obtain the N pieces of original data.

35. The method according to any one of claims 29 to 34, wherein K is equal to N, Q is equal to M, and both N and M are determined based on a quantity of total data packets comprised in the P first MAC PDUs and a code rate.

36. The method according to claim 35, wherein P is a preset value, and N and M are respectively as follows:

$$M = \left\lceil n \times (1-cr) \right\rceil \ \text{or} \ M = \left\lfloor n \times (1-cr) \right\rfloor;$$

and

N=n-M, wherein
n indicates the quantity of total data packets comprised in the P first MAC PDUs, cr indicates the code rate, and is a ratio of the quantity of original data packets to the quantity of total data packets, and the quantity of total data packets is a sum of the quantity of original data packets and a quantity of coded packets generated by coding the original data packets;

the symbol $\lceil \ \rceil$ indicates rounding up, and the symbol $\lfloor \ \rfloor$ indicates rounding down; and

$$n = \sum_{i=1}^{P} n^{i} ,$$

wherein

$n^{i}$ indicates the quantity of data packets comprised in the $i^{th}$ first MAC PDU in the P first MAC PDUs.

37. The method according to claim 35 or 36, wherein the preset rule comprises: the last data packet comprised in each of the P first MAC PDUs is an original data packet.

38. The method according to claim 35 or 36, wherein the preset rule comprises: if a size of the last data packet comprised in each of the P first MAC PDUs is less than the preset data packet size, the last data packet is an original data packet; and
if a size of the last data packet comprised in the last first MAC PDU of the P first MAC PDUs is equal to the preset data packet size, the last data packet is a coded packet or an original data packet.

39. The method according to claim 37 or 38, wherein the preset rule comprises: an original data packet is before a coded packet in the other data packets than the last data packet comprised in each of the P first MAC PDU.

40. The method according to any one of claims 35 to 39, wherein the header of the first data packet is the original data packet header, and a size of the original data packet header is equal to a size of the coded packet header;

the original data packet header comprises first indication information, and the first indication information indicates that a data packet in which the first indication information is located is an original data packet; and
the coded packet header comprises second indication information and a coding factor field, the second indication information indicates that a data packet in which the second indication information is located is a coded packet, and the coding factor field indicates an index of a codebook.

41. The method according to claim 40, wherein the original data packet header and the coded packet header each further comprise a block identifier field or an offset field, the offset field indicates an offset value of a first MAC PDU, in which the offset field is located in the P first MAC PDUs, relative to a start first MAC PDU, and the block identifier field indicates an identifier of a network coding group in which a data packet comprising the block identifier field is located.

42. The method according to any one of claims 35 to 41, wherein the network coding operation comprises a padding operation and a coding operation, the coding operation comprises block coding or sliding window coding, and the padding operation is used to pad original data whose size is less than a difference between the preset data packet size and a preset header size in the N pieces of original data; and
if the coding operation comprises sliding window coding, the coded packet header further comprises an association depth field, the association depth field indicates a quantity of first MAC PDUs before a first MAC PDU in which the association depth field is located, and sliding window coding is coding an original data packet in the first MAC PDU in which the association depth field is located and an original data packet in a historical first MAC PDU indicated by the association depth field together.

43. The method according to claim 29, wherein N is a preset quantity of original data packets, and M is determined based on N and a code rate.

44. The method according to claim 43, wherein M is as follows:

$$M = \left\lceil \frac{N}{cr} \right\rceil - N \quad \text{or} \quad M = \left\lfloor \frac{N}{cr} \right\rfloor - N ,$$

wherein

cr indicates the code rate, and is a ratio of the quantity of original data packets to the quantity of total data packets, and the quantity of total data packets is a sum of the quantity of original data packets and a quantity of coded packets generated by coding the original data packets; and

the symbol ⌈ ⌉ indicates rounding up, and the symbol ⌊ ⌋ indicates rounding down.

45. The method according to claim 43 or 44, wherein the preset rule comprises: if a size of the last data packet comprised in each of the P first MAC PDUs is less than a preset data packet size, the last data packet is an original data packet.

46. The method according to claim 45, wherein the preset rule further comprises: the N first data packets and the M second data packets in the P first MAC PDUs satisfy a relationship that the original data packet is before the coded packet.

47. The method according to claim 46, wherein the preset rule further comprises: if a size of a first MAC PDU in which the last first data packet in the N first data packets is located is not an integer multiple of the preset data packet size, the last data packet of the first MAC PDU in which the last first data packet is located is a first data packet other than the N first data packets in the K first data packets; and

if a size of a first MAC PDU in which any second data packet in the M second data packets is located is not an integer multiple of the preset data packet size, the last data packet of the first MAC PDU in which the any second data packet is located is a first data packet other than the N first data packets in the K first data packets.

48. The method according to any one of claims 43 to 47, wherein the header of the first data packet is the coded packet header; and

the coded packet header comprises a coding factor field, the coding factor field in the coded packet header of the first data packet indicates a unit vector, and a coding factor field in the coded packet header of the second data packet indicates an index of a codebook.

49. The method according to claim 48, wherein the coded packet header further comprises a block identifier field; and

the block identifier field indicates an identifier of a network coding group in which a data packet comprising the block identifier field is located.

50. The method according to any one of claims 29 to 49, wherein the sizes of the other data packets than the last data packet comprised in each of the P first MAC PDUs are all equal to the preset data packet size, and the size of the last data packet is less than or equal to the preset data packet size.

51. The method according to any one of claims 29 to 50, wherein the size of the last data packet comprised in the $i^{th}$ first MAC PDU in the P first MAC PDUs is determined based on the size of the $i^{th}$ first MAC PDU, the quantity of data packets comprised in the $i^{th}$ first MAC PDU, and the preset data packet size; and

the quantity of data packets comprised in the $i^{th}$ first MAC PDU is determined based on the size of the $i^{th}$ first MAC PDU and the preset data packet size.

52. The method according to claim 51, wherein the size of the last data packet comprised in the $i^{th}$ first MAC PDU is as follows:

$$L_{sys}^{i} = Tbs^{i} - (n^{i} - 1) \times L,$$

wherein

$L_{sys}^{i}$ indicates the size of the last data packet comprised in the $i^{th}$ first MAC PDU, $Tbs^{i}$ indicates the size of the $i^{th}$ first MAC PDU, $n^{i}$ indicates the quantity of data packets comprised in the $i^{th}$ first MAC PDU, and L indicates the preset data packet size; and

the quantity $n^{i}$ of data packets comprised in the $i^{th}$ first MAC PDU is as follows:

$$n^{i} = \left\lceil \frac{Tbs^{i}}{L} \right\rceil,$$

wherein
the symbol ⌈ ⌉ indicates rounding up.

53. The method according to any one of claims 29 to 52, wherein a size of an i<sup>th</sup> second MAC PDU in the P second MAC PDUs is determined based on a quantity of original data packets comprised in the i<sup>th</sup> first MAC PDU in the P first MAC PDUs, the preset data packet size, the preset header size, and the size of the last data packet comprised in the i<sup>th</sup> first MAC PDU; and
the quantity of original data packets comprised in the i<sup>th</sup> first MAC PDU is determined based on the quantity of data packets comprised in the i<sup>th</sup> first MAC PDU and according to the preset rule.

54. The method according to claim 53, wherein the size of the i<sup>th</sup> second MAC PDU in the P second MAC PDUs is as follows:

$$y_i = (n_{sys}^i - 1) \times (L - H) + L_{sys}^i - H,$$

wherein

$y_i$ indicates the size of the i<sup>th</sup> second MAC PDU, $n_{sys}^i$ indicates the quantity of original data packets comprised in the i<sup>th</sup> first MAC PDU, H indicates the preset header size, and $L_{sys}^i$ indicates the size of the last data packet comprised in the i<sup>th</sup> first MAC PDU.

55. The method according to any one of claims 29 to 52, wherein a size of an i<sup>th</sup> second MAC PDU in the P second MAC PDUs is determined based on a quantity of original data packets comprised in the i<sup>th</sup> first MAC PDU in the P first MAC PDUs, the preset data packet size, the preset header size, the size of the last data packet comprised in the i<sup>th</sup> first MAC PDU, and the preset size of the CRC code of the data packet;

the quantity of original data packets comprised in the i<sup>th</sup> first MAC PDU is determined based on the quantity of data packets comprised in the i<sup>th</sup> first MAC PDU and according to the preset rule; and
the P first MAC PDUs further comprise the CRC codes in the preset size that are obtained by performing CRC on each data packet, and a CRC code in the preset size that is obtained by performing CRC on one data packet is after the last bit of the data packet.

56. The method according to claim 55, wherein the size of the i<sup>th</sup> second MAC PDU in the P second MAC PDUs is as follows:

$$y_i = (n_{sys}^i - 1) \times (L - H - R) + L_{sys}^i - H - R,$$

wherein

$y_i$ indicates the size of the i<sup>th</sup> second MAC PDU, $n_{sys}^i$ indicates the quantity of original data packets comprised in the i<sup>th</sup> first MAC PDU, H indicates the preset header size, $L_{sys}^i$ indicates the size of the last data packet comprised in the i<sup>th</sup> first MAC PDU, and R indicates the preset size of the CRC code of the data packet.

57. The method according to any one of claims 29 to 56, wherein the segmentation operation comprises performing equal-size segmentation based on the difference between the preset data packet size and the preset header size.

58. The method according to any one of claims 29 to 57, wherein the sizes of the original data packet header and the coded packet header are equal to the preset header size.

59. A data receiving apparatus, comprising a module configured to perform the method according to any one of claims 29 to 58.

**60.** A communication apparatus, comprising:

> one or more processors, wherein the one or more processors are coupled to one or more memories;
> the one or more memories are configured to store a computer program, and the one or more processors are configured to execute the computer program stored in the one or more memories, to enable the communication apparatus to perform the method according to any one of claims 1 to 27.

**61.** A communication apparatus, comprising:

> one or more processors, wherein the one or more processors are coupled to one or more memories;
> the one or more memories are configured to store a computer program, and the one or more processors are configured to execute the computer program stored in the one or more memories, to enable the communication apparatus to perform the method according to any one of claims 29 to 58.

**62.** A communication system, comprising:
the communication apparatus according to claim 60 and a communication apparatus configured to receive P transport blocks.

**63.** The communication system according to claim 62, further comprising the communication apparatus according to claim 61, wherein the apparatus is the communication apparatus configured to receive the P transport blocks.

**64.** A readable storage medium, configured to store a program, wherein the program is executed by one or more processors, to enable an apparatus comprising the one or more processors to perform the method according to any one of claims 1 to 27, or perform the method according to any one of claims 29 to 58.

FIG. 1

Macro (macro)
base station

Point-to-point single connectivity

Macro (macro)
base station

Wireless access point

Wireless access point

UE

Multi-hop single connectivity

X2

Macro (macro)
base station

Macro (macro)
base station

UE

Dual connectivity

Macro (macro)
base station

Wireless access point

Wireless access point

UE

Multi-hop multi-connectivity

FIG. 2

FIG. 3

$Y^{(W+R)\times 1}$     $A^{(W+R)\times W}$     $X^{W\times 1}$

Coded data    Coding coefficient matrix    Original data

FIG. 4

| First device | | Second device |
|---|---|---|

S101: Generate P first media access control MAC protocol data units PDUs, where K first data packets and Q second data packets that are included in the P first MAC PDUs are arranged according to a preset rule, each of the P first MAC PDUs includes an integer quantity of data packets and sizes of other data packets than the last data packet are equal, the K first data packets are obtained by separately adding headers to K pieces of original data, N first data packets in the K first data packets are obtained by separately adding headers to N pieces of original data in the K pieces of original data, and M second data packets in the Q second data packets are generated by performing a network coding operation on the N pieces of original data

S102: Transmit P transport blocks that carry the P first MAC PDUs

S103: Obtain the P transport blocks, where the P transport blocks carry the P first MAC PDUs

S104: Perform a decoding operation on the P transport blocks to obtain the N pieces of original data, and merge the N pieces of original data to obtain one or more second MAC PDUs

FIG. 5

First
device

Second
device

S201: Generate P first MAC PDUs, where N first data packets and M second data packets that are included in the P first MAC PDUs are arranged according to a preset rule, each of the P first MAC PDUs includes an integer quantity of data packets and sizes of other data packets than the last data packet are equal, the N first data packets are obtained by separately adding original data packet headers to N pieces of original data, the M second data packets are generated by performing a network coding operation on the N pieces of original data, and the N pieces of original data are obtained by separately performing a segmentation operation on P second MAC PDUs

S202: Transmit P transport blocks that carry the P first MAC PDUs

S203: Obtain the P transport blocks, where the P transport blocks carry the P first MAC PDUs

S204: If there is a transport block (TB) with a cyclic redundancy check CRC error in the P transport blocks, the second device determines a data packet with check success on the transport block with the CRC error based on a check result of CRC performed on a coding block CB in the transport block with the CRC error, a quantity of data packets included in the transport block with the CRC error, and a size of each data packet

S205: Decode a data packet with check success on the P transport blocks to obtain the N pieces of original data, and merge the N pieces of original data to obtain the P second MAC PDUs

FIG. 6

2 bytes

| Original data packet header | Original data |
|---|---|

2 bytes

| Original data packet header | Original data |
|---|---|

| 1 bit | |
|---|---|
| O/C Original/ Coded | Reserved Reserved |

7a

| 1 bit | 7 bits | |
|---|---|---|
| O/C Original/ Coded | Block ID/Offset Block identifier/ Offset | Reserved Reserved |

7b

Byte: byte
Bit: bit

FIG. 7

2 bytes

| Coded packet header | Coded data |
|---|---|

2 bytes

| Coded packet header | Coded data |
|---|---|

| 1 bit | | 8 bits |
|---|---|---|
| O/C Original/ Coded | Reserved Reserved | Coeff ID Coefficient identifier |

8a

| 1 bit | 7 bits | 8 bits |
|---|---|---|
| O/C Original/ Coded | Block ID/Offset Block ID/Offset | Coeff ID Coefficient identifier |

8b

Byte: byte
Bit: bit

FIG. 8

RLC

| H | RLC SDU | | H | RLC SDU | | H | RLC SDU | | H | RLC SDU | | H | RLC SDU |

MAC

| H | MAC SDU | | H | MAC SDU | | H | MAC SDU | | H | MAC SDU |

MAC PDU     MAC PDU          MAC PDU               MAC PDU

FIG. 9

EP 4 395 208 A1

Second MAC PDU — PDU

Equal-size segmentation

Original data

| Data 1 | Data 2 | Data 3 |

Padding (padding)

| Data 1 | Data 2 | Data 3 | P |

L–H   L–H

L–H   L–H   L–H

Header

Operation of adding an original data packet header

NC_Header

Network coding and coded packet header adding

MAC layer

Original data packet

| // | Data 1 |   | // | Data 2 |   | // | Data 3 |

Coded packet

| ≡ | EData 1 |

Pkt 1   Pkt 2   Pkt 3

EPkt 1

Arrangement

Arrangement

First MAC PDU or TB

| // | Data 1 | // | Data 2 | ≡ | EData 1 | // | Data 3 |

Header: header
Data: data

FIG. 10a

FIG. 10b

**Second MAC PDU**

| PDU 1 | PDU 2 | PDU 3 |
|---|---|---|

**Original data**

| Data 1 | Data 2 | Data 3 | Data 4 |   | Data 5 | Data 6 | Data 7 |   | Data 8 | Data 9 | Data 10 |
|---|---|---|---|---|---|---|---|---|---|---|---|

Coding window 1

Coding and coded packet header adding

Coding window 2

Sliding direction

Coding and coded packet header adding

Data: data

| EData 1 |
|---|

EPkt 1

| EData 2 |
|---|

EPkt 2

FIG. 11

**MAC layer**

**First MAC PDU or TB**

| First MAC PDU |
|---|

**Size of a CB and a CRC result of the CB**

| CB | CB | CB | CB | CB |
|---|---|---|---|---|

Mapping relationship

**Data packet**

| Data 1 | Data 2 | EData 1 | Data 3 |
|---|---|---|---|

Pkt 1    Pkt 2    EPkt 1    Pkt 3

Decoding

**Restored data**

| Data 3 | P |
|---|---|

Equivalent data

Padding removal

| Data 3 |
|---|

Data: data
Padding: padding

**Second MAC PDU**

| Data 1 | Data 2 | Data 3 |
|---|---|---|

FIG. 12a

FIG. 12b

First
device

Second
device

S301: Generate P first MAC PDUs, where K first data packets and Q second data packets that are included in the P first MAC PDUs are arranged according to a preset rule, each of the P first MAC PDUs includes an integer quantity of data packets and sizes of other data packets than the last data packet are equal, the K first data packets are obtained by separately adding original data packet headers or coded packet headers (briefly referred to as headers below) to K pieces of original data, N first data packets in the K first data packets are obtained by separately adding original data packet headers or coded packet headers to N pieces of original data in the K pieces of original data, M second data packets in the Q second data packets are generated by performing a network coding operation on the N pieces of original data, and the K pieces of original data are obtained by separately performing a segmentation operation on P second MAC PDUs, where K is not equal to N, or Q is not equal to M

S302: Transmit P transport blocks that carry the P first MAC PDUs

S303: Obtain the P transport blocks, where the P transport blocks carry the P first MAC PDUs

S304: Determine the N first data packets and the M second data packets from the P transport blocks, where the M second data packets are obtained after the network coding operation is performed on the N pieces of original data included in the N first data packets

S305: If there is a transport block with a cyclic redundancy check CRC error in the P transport blocks, determine a data packet with check success on the transport block with the CRC error based on a check result of CRC performed on a CB in the transport block with the CRC error, a quantity of data packets included in the transport block with the CRC error, and a size of each data packet

S306: Decode data packets with check success in the N first data packets and the M second data packets to obtain the N pieces of original data, and merge the N pieces of original data to obtain one or more second MAC PDUs

FIG. 13

FIG. 14a

MAC layer

Second MAC PDU | PDU 1 | PDU 2 | PDU 3 | PDU 4

Equal-size segmentation

Original data | Data 1 | Data 2 | Data 3 | Data 4 | Data 5 | Data 6 | Data 7 | Data 8 | Data 9 | Data 10 | Data 11

L–H L–H L–H | L–H L–H | L–H | L–H

Padding (padding)

Network coding group | Data 1 | Data 2 | Data 3 | Data 4 | P | Data 5 | Data 6 | Data 7 | P | Data 8

L–H L–H L–H L–H | L–H L–H L–H | L–H

Operation of adding a coded packet header

NC_Header

Coding and coded packet header adding

Coded packet | EData 1 | EData 2

EPkt 1 | EPkt 2

NC_Header

Original data packet | Data 1 | Data 2 | Data 3 | Data 4 | Data 5 | Data 6 | Data 7 | Data 8

Pkt 1 | Pkt 2 | Pkt 3 | Pkt 4 | Pkt 5 | Pkt 6 | Pkt 7 | Pkt 8

Data 9 | Data 10 | Data 11

Pkt 9 | Pkt 10 | Pkt 11

First MAC PDU or TB | Data 1 | Data 2 | Data 3 | Data 4 | Data 5 | Data 6 | Data 7

Data 8 | Data 9 | EData 1 | EData 2 | Data 10 | Data 11

Header: header
Data: data

FIG. 14b

First
device

Second
device

S401: Generate P first MAC PDUs, where K first data packets and Q second data packets that are included in the P first MAC PDUs are arranged according to a preset rule, the P first MAC PDUs further include CRC codes in a preset size (or with a fixed bit) obtained by separately performing CRC on each data packet, and a CRC code in the preset size obtained by performing CRC on one data packet is after the last bit of the data packet; and each of the P first MAC PDUs includes an integer quantity of data packets and sizes of other data packets than the last data packet are equal, the K first data packets are obtained by separately adding headers to K pieces of original data, N first data packets in the K first data packets are obtained by separately adding headers to N pieces of original data in the K pieces of original data, M second data packets in the Q second data packets are generated by performing a network coding operation on the N pieces of original data, and the K pieces of original data are obtained by separately performing a segmentation operation on P second MAC PDUs

S402: Transmit P transport blocks that carry the P first MAC PDUs

S403: Obtain the P transport blocks, where the P transport blocks carry the P first MAC PDUs

S404: Determine the N first data packets and the M second data packets from the P transport blocks, where the M second data packets are obtained by performing the network coding operation on the N pieces of original data included in the N first data packets

S405: If there is a transport block with a cyclic redundancy check CRC error in the P transport blocks, perform CRC on each data packet on the transport block with the CRC error to obtain a check result, and determine, based on the check result and a CRC code after the last bit of the data packet, a data packet with check success on the transport block with the CRC error

S406: Decode data packets with check success in the N first data packets and the M data packets to obtain the N pieces of original data, and merge the N pieces of original data according to the preset rule to obtain one or more second MAC PDUs

FIG. 15

FIG. 16a

EP 4 395 208 A1

FIG. 16b

FIG. 17

FIG. 18

FIG. 19

## INTERNATIONAL SEARCH REPORT

| | International application No. |
| --- | --- |
| | **PCT/CN2022/120624** |

**A.    CLASSIFICATION OF SUBJECT MATTER**

H04L 1/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; WPABS; ENTXT; 3GPP; CNKI; CJFD: 媒体接入控制层, 层二, 二层, 数据单元, 网络编码, 分割, 分块, 分片, 分段, 等长, 大小, 长度, 相等, 相同, MAC, layer 2, data unit, PDU, SDU, NC, network coding, segment, partition, length, size, same

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115276891 A (HUAWEI TECHNOLOGIES CO., LTD.) 01 November 2022 (2022-11-01) claims 1-28, and description, paragraphs [0002]-[0183] | 1-64 |
| A | CN 105471545 A (ZTE CORP.) 06 April 2016 (2016-04-06) entire document | 1-64 |
| A | CN 111917512 A (XI'AN JIAOTONG UNIVERSITY) 10 November 2020 (2020-11-10) entire document | 1-64 |
| A | US 2017188203 A1 (KONINKLIJKE KPN N.V. et al.) 29 June 2017 (2017-06-29) entire document | 1-64 |
| A | . ""R2-1705050-The SN of RLC UMD PDU"" *3GPP tsg_ran\wg2_rl2*, Vol. , No. , 05 May 2017 (2017-05-05), ISSN: , | 1-64 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 November 2022** | **05 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/120624**

| Patent document cited in search report | | | Publication date (day/month/year) | Patent family member(s) | | | Publication date (day/month/year) |
|---|---|---|---|---|---|---|---|
| CN | 115276891 | A | 01 November 2022 | None | | | |
| CN | 105471545 | A | 06 April 2016 | EP | 3193472 | A1 | 19 July 2017 |
| | | | | WO | 2015184914 | A1 | 10 December 2015 |
| | | | | US | 2017324428 | A1 | 09 November 2017 |
| CN | 111917512 | A | 10 November 2020 | None | | | |
| US | 2017188203 | A1 | 29 June 2017 | EP | 3188391 | A1 | 05 July 2017 |

Form PCT/ISA/210 (patent family annex) (January 2015)

**EP 4 395 208 A1**

## REFERENCES CITED IN THE DESCRIPTION

**Patent documents cited in the description**

- CN 202111132039